(19) Europäisches Patentamt
European Patent Office
Office européen des brevets

(11) EP 2 375 745 A1

(12) **EUROPEAN PATENT APPLICATION**

(43) Date of publication:
**12.10.2011 Bulletin 2011/41**

(51) Int Cl.:
***H04N 7/26*** *(2006.01)*

(21) Application number: **10003877.7**

(22) Date of filing: **12.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Panasonic Corporation**
**Kadoma-shi**
**Osaka 571-8501 (JP)**

(72) Inventor: **Narroschke, Matthias**
**63225 Langen (DE)**

(74) Representative: **Grünecker, Kinkeldey, Stockmair & Schwanhäusser**
**Anwaltssozietät**
**Leopoldstrasse 4**
**80802 München (DE)**

(54) **Efficient storing of picture representation using adaptive non-uniform quantizer**

(57) The present invention relates to an efficient storing of an image representation during encoding and decoding the image. In particular, before storing, the bit depth of the representation samples is down-converted by a non-uniform quantizer. Upon retrieving, the bit depth of the retrieved data is up-converted again. This storing approach provides possibility of reducing the memory requirements and, while, at the same time keeping the accuracy of the stored data as high as possible.

Fig. 6A

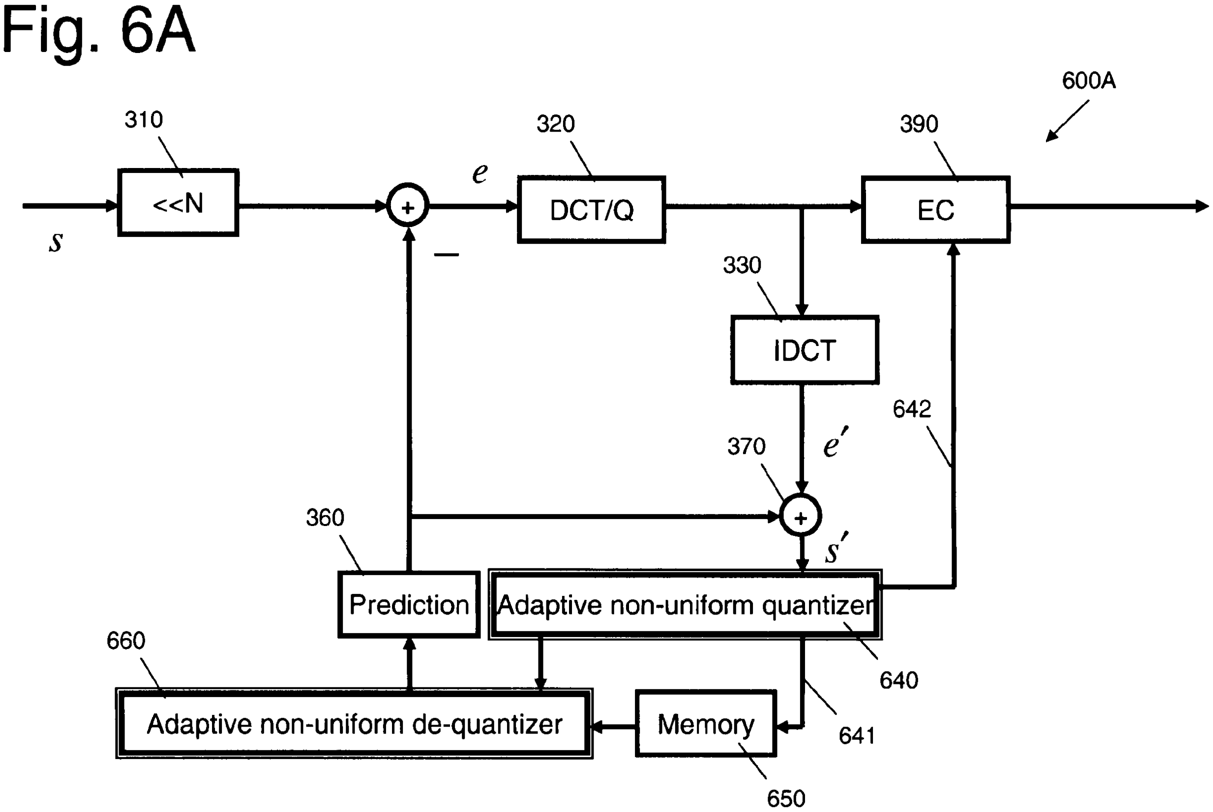


EP 2 375 745 A1

## Description

The present invention relates to storing picture representation during encoding and decoding of image data.

BACKGROUND OF THE INVENTION

At present, the majority of standardized video coding algorithms are based on hybrid video coding. Hybrid video coding methods typically combine several different lossless and lossy compression schemes in order to achieve the desired compression gain. Hybrid video coding is also the basis for ITU-T standards (H.26x standards such as H. 261, H.263) as well as ISO/IEC standards (MPEG-X standards such as MPEG-1, MPEG-2, and MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted submacroblocks or simply blocks and having the size of, for instance, 8 x 8, 4 x 4, 16 x 8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called block of prediction residuals, is then calculated. Another encoding step is a transformation of a block of residuals from the spatial (pixel) domain into a frequency domain. The transformation aims at reducing the correlation of the input block. Further encoding step is quantization of the transform coefficients. In this step the actual lossy (irreversible) compression takes place. Usually, the compressed transform coefficient values are further compacted (losslessly compressed) by means of an entropy coding. In addition, side information necessary for reconstruction of the encoded video signal is encoded and provided together with the encoded video signal. This is for example information about the spatial and/or temporal prediction, amount of quantization, etc.

Figure 1 is an example of a typical H.264/MPEG-4 AVC standard compliant video encoder 100. The H. 264/MPEG-4 AVC standard combines all above-mentioned encoding steps. A subtractor 105 first determines differences between a current block to be encoded of an input video image (input signal) and a corresponding prediction block, which is used for the prediction of the current block to be encoded. In H.264/MPEG-4 AVC, the prediction signal is obtained either by a temporal or by a spatial prediction. The type of prediction can be varied on a per frame basis or on a per macroblock basis. Macroblocks predicted using temporal prediction are called inter-encoded and macroblocks predicted using spatial prediction are called intra-encoded. The type of prediction for a video frame can be set by the user or selected by the video encoder so as to achieve a possibly high compression gain. In accordance with the selected type of prediction, an intra/inter switch 175 provides corresponding prediction signal to the subtractor 105. The prediction signal using temporal prediction is derived from the previously encoded images, which are stored in a memory 140. The prediction signal using spatial prediction is derived from the values of boundary pixels in the neighboring blocks, which have been previously encoded, decoded, and stored in the memory 140. The memory unit 140 thus operates as a delay unit that allows a comparison between current signal values to be encoded and the prediction signal values generated from previous signal values. The memory 140 can store a plurality of previously encoded video frames. The difference between the input signal and the prediction signal, denoted prediction error or residual, is transformed resulting in coefficients, which are quantized 110. Entropy encoder 190 is then applied to the quantized coefficients in order to further reduce the amount of data in a lossless way. This is mainly achieved by applying a code with code words of variable length wherein the length of a code word is chosen based on the probability of occurrence thereof.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images. Intra-fame prediction uses a predefined set of intra-prediction modes, which basically predict the current block using the boundary pixels of the neighboring blocks already encoded. The different modes of spatial intra-prediction refer to different directions of the applied two-dimensional prediction. This allows efficient spatial intra-prediction in the case of various edge directions. The prediction signal obtained by such an intra-prediction is then subtracted from the input signal by the subtractor 105 as described above. In addition, spatial intra-prediction mode information is entropy encoded and provided together with the encoded video signal.

Within the video encoder 100, a decoding unit is incorporated for obtaining a decoded video signal. In compliance with the encoding steps, the decoding steps include inverse quantization and inverse transformation 120. The decoded prediction error signal differs from the original prediction error signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal, which is known at both sides the encoder and the decoder. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the quantized prediction error signal. The video signal after deblocking is the decoded signal, which is generally displayed at the decoder side (if no post filtering is applied). The deblocking filter of H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. The strength of the low pass filter is determined by the prediction signal and by the quantized prediction error signal. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency.

Intra-coded macroblocks are filtered before displaying, but intra prediction is carried out using the unfiltered reconstructed macroblocks.

In order to be decoded, inter-encoded images require also the previously encoded and subsequently decoded image(s). Temporal prediction may be performed uni-directionally, i.e., using only video frames ordered in time before the current frame to be encoded, or bidirectionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I-type macroblocks. An inter-encoded macroblock (P- or B- macroblock) is predicted by employing motion compensated prediction 160. First, a best-matching block is found for the current block within the previously encoded and decoded video frames by a motion estimator 165. The best-matching block then becomes a prediction signal and the relative displacement (motion) between the current block and its best match is then signalized as motion data in the form of three-dimensional motion vectors within the side information provided together with the encoded video data. The three dimensions consist of two spatial dimensions and one temporal dimension. In order to optimize the prediction accuracy, motion vectors may be determined with a spatial sub-pixel resolution e.g. half pixel or quarter pixel resolution. A motion vector with spatial sub-pixel resolution may point to a spatial position within an already decoded frame where no real pixel value is available, i.e. a sub-pixel position. Hence, spatial interpolation of such pixel values is needed in order to perform motion compensated prediction. This is achieved by interpolation filter 150. According to the H.264/MPEG-4 AVC standard, a six-tap Wiener interpolation filter with fixed filter coefficients and a bilinear filter are applied in order to obtain pixel values for sub-pixel positions in vertical and horizontal directions separately.

For both, the intra- and the inter-encoding modes, the differences between the current input signal and the prediction signal are transformed and quantized by the unit 110, resulting in the quantized coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality then high frequency components so that more bits can be spent for coding the low frequency components than the high frequency components. In the entropy coder, the two-dimensional matrix of quantized coefficients is converted into a one-dimensional array. Typically, this conversion is performed by a so-called zig-zag scanning, which starts with the DC-coefficient in the upper left corner of the two-dimensional array and scans the two-dimensional array in a predetermined sequence ending with an AC coefficient in the lower right corner. As the energy is typically concentrated in the left upper part of the two-dimensional matrix of coefficients, corresponding to the lower frequencies, the zig-zag scanning results in an array where usually the last values are zero. This allows for efficient encoding using run-length codes as a part of/before the actual entropy coding.

H.264/MPEG-4 AVC employs scalar quantization 110, which can be controlled by a quantization parameter (QP) and a customizable quantization matrix (QM). One of 52 quantizers is selected for each macroblock by the quantization parameter. In addition, quantization matrix is specifically designed to keep certain frequencies in the source to avoid losing image quality. Quantization matrix in H.264/MPEG-4 AVC can be adapted to the video sequence and signalized together with the video data.

The H.264/MPEG-4 AVC includes two functional layers, a Video Coding Layer (VCL) and a Network Abstraction Layer (NAL). The VCL provides the encoding functionality as briefly described above. The NAL encapsulates information elements into standardized units called NAL units according to their further application such as transmission over a channel or storing in storage. The information elements are, for instance, the encoded prediction error signal or other information necessary for the decoding of the video signal such as type of prediction, quantization parameter, motion vectors, etc. There are VCL NAL units containing the compressed video data and the related information, as well as non-VCL units encapsulating additional data such as parameter set relating to an entire video sequence, or a Supplemental Enhancement Information (SEI) providing additional information that can be used to improve the decoding performance.

In order to improve the image quality, a so-called post filter 280 may be applied at the decoder side 200. The H.264/MPEG-4 AVC standard allows the sending of post filter information for such a post filter via the SEI message. The post filter information is determined at the encoder side by means of a post filter design unit 180, which compares the locally decoded signal and original input signal. In general, the post filter information is an information allowing decoder to set up an appropriate filter. It may include directly the filter coefficients or another information enabling setting up the filter, such as cross-correlation information related to the uncompressed signal, such as cross-correlation information between the original input image and the decoded image or between the decoded image and the quantization noise. This cross-correlation information can be used to calculate the filter coefficients. The filter information, which is output by the post filter design unit 180 is also fed to the entropy coding unit 190 in order to be encoded and inserted into the encoded signal. At the decoder, the filter information may be used by a post filter, which is applied on the decoded signal before displaying.

Figure 2 illustrates an example decoder 200 compliant with the H.264/MPEG-4 AVC video coding standard. The encoded video signal (input signal to the decoder) first passes to entropy decoder 290, which decodes the quantized coefficients, the information elements necessary for decoding such as motion data, mode of prediction etc., and the post filter information. The quantized coefficients are inversely scanned in order to obtain a two-dimensional matrix, which is then fed to inverse quantization and inverse transformation 220. After inverse quantization and inverse transformation, a decoded (quantized) prediction error signal is obtained, which corresponds to the differences obtained by subtracting the prediction signal from the signal input to the encoder in the case no quantization noise is introduced.

The prediction signal is obtained from either a temporal or a spatial prediction 260 and 270, respectively, which are switched 275 in accordance with a received information element signalizing the prediction applied at the encoder. The decoded information elements further include the information necessary for the prediction such as prediction type in the case of intra-prediction and motion data in the case of motion compensated prediction. Depending on the current value of the motion vector, interpolation of pixel values may be needed in order to perform the motion compensated prediction. This interpolation is performed by an interpolation filter 250. The quantized prediction error signal in the spatial domain is then added by means of an adder 225 to the prediction signal obtained either from the motion compensated prediction 260 or intra-frame prediction 270. The reconstructed image may be passed through a deblocking filter 230 and the resulting decoded signal is stored in the memory 240 to be applied for temporal or spatial prediction of the following blocks. The post filter information is fed to a post filter 280, which sets up a post filter accordingly. The post filter is then applied to the decoded signal in order to further improve the image quality. Thus, the post filter is capable of adapting to the properties of the video signal entering the encoder. Regarding the in-loop and post filtering applied during the encoding and/or decoding, the filters may be designed to filter separately a plurality of input signals as shown, for instance in EP 2 141 927. The filter design and/or filtering may also be performed in frequency domain rather than in the spatial domain as shown, for instance in the European patent application no. 08020651.9.

Typically, the original image signal input to an encoder is either a grey-value signal or a color signal which typically includes three or more color components. Usually, the input grey-value signal samples and samples of each color signal component are 8-bit values. For instance, samples of a color component of an image in RGB (including red, green, and blue color components) or YUV (including luminance component Y and two chrominance components U and V) color space typically have 8 bits. The number of bits per sample is sometimes called bit depth. Today's encoders and decoders also typically work with image signals having the bit depth of 8 bits per sample of a color component. However, the processing during encoding and/or decoding of the input image samples involves multiple stages where arithmetic operations are performed that require multiple truncations (for example in integer arithmetic implementation) which reduces the quality of the processed encoded and decoded image signal. In general, the image signal input to an encoder may also be already an image signal with higher bit depth than 8 bits, for instance if a capturing device is capable of delivering images or videos with such a sampling. Then, the encoding and decoding may be more accurate. A decoder may also work with such a higher bit depth and output a signal with this higher bit depth or down-convert the bit depth if necessary, for instance, for the purpose of displaying on a displaying device.

However, the higher bit depth (generic or up-converted) requires operations to be performed on operands with a higher number of bits, which leads to increasing the requirements on memory size and increases the time for memory access.

## SUMMARY OF THE INVENTION

The aim of the present invention is to enable efficient storing of picture representation during the encoding and decoding while maintaining the accuracy of the stored signal as high as possible.

This is achieved by the subject matter of the independent claims.

Advantageous embodiments of the present invention are subject to the dependent claims.

It is the particular approach of the present invention during encoding or decoding an image signal to down-convert the bit depth of a part of a representation of the image before storing it in a memory and to up-convert the bit depth again after its retrieving from the memory. In particular, the down-conversion and the up-conversion are performed with a non-uniform quantizer and dequantizer, respectively.

The application of down-converting bit-depth before storing and up-converting it back upon retrieval enables reducing the memory requirements as well as processing memory access time while the application of non-uniform quantization provides a possibility to down-convert bit-depth of the data efficiently with possibly small quantization error. Thus, the effect of down-converting the bit-depth is partially compensated by storing the data in an efficient format.

In accordance with a first aspect of the present invention, a method is provided for decoding an image signal from a bitstream including in at least one decoding stage storing a representation of a part of the image in a memory, the method comprising the steps of: down-converting bit depth of a representation of a part of the image signal with a non-uniform quantizer; storing the down-converted representation of the part of the image signal in the memory; retrieving the down-converted representation of the part of the image signal from the memory; and up-converting bit depth of the retrieved representation of the part of the image signal with a non-uniform dequantizer.

In accordance with a second aspect of the present invention, a method is provided for encoding an image signal into a bit stream including in at least one encoding stage storing a representation of a part of the image in a memory, the method comprising the steps of: down-converting bit depth of a representation of a part of the image signal with a non-uniform quantizer; storing the down-converted representation of the part of the image signal in the memory; retrieving the down-converted representation of the part of the image signal from the memory; and up-converting bit depth of the retrieved representation of the part of the image signal with a non-uniform dequantizer.

In accordance with a third aspect of the present invention an apparatus is provided for decoding an image signal from a bitstream including at least one decoding processing unit configured to store a representation of a part of the image in a memory, the apparatus comprising: a non-uniform quantizer unit for down-converting bit depth of a representation of a part of the image signal with a non-uniform quantizer; a memory access unit for storing the down-converted representation of the part of the image signal in the memory and for retrieving the down-converted representation of the part of the image signal from the memory; and a non-uniform dequantizer unit for up-converting bit depth of the retrieved representation of the part of the image signal with a non-uniform dequantizer.

In accordance with a fourth aspect of the present invention an apparatus is provided for encoding an image signal into a bitstream including at least one encoding processing unit configured to store a representation of a part of the image in a memory, the apparatus comprising: a non-uniform quantizer unit for down-converting bit depth of a representation of a part of the image signal with a non-uniform quantizer; a memory access unit for storing the down-converted representation of the part of the image signal in the memory and for retrieving the down-converted representation of the part of the image signal from the memory; and a non-uniform dequantizer unit for up-converting bit depth of the retrieved representation of the part of the image signal with a non-uniform dequantizer.

For instance, the at least one encoding or decoding stage may be storing of the reconstructed video signal (the entire picture, or slice-wise or block-wise) during encoding or decoding into a reference picture memory so that it may be used by the temporal or spatial prediction. In such a case the image representation is the reconstructed video signal. Another example of the encoding and/or decoding stages may be, in case of filtering with more than one inputs, storing of the quantized prediction error signal or prediction signal to be filtered temporarily in a memory. The quantized prediction error signal represents a part of the image signal in spatial domain representation. Alternatively, the quantized transformation coefficients may be stored representing the same part of the image in frequency domain representation. However, storing of image parts in a particular representation may also be applied at another encoding and decoding stages and the present invention may be applied therefor. In summary, the part of the image signal is at least one of the prediction signal, a quantized prediction error signal obtained by quantizing a difference between the image signal and the prediction signal, a reconstructed image signal obtained as a sum of the prediction signal and the quantized prediction error signal, or a reconstructed and filtered image signal obtained by filtering the reconstructed image signal; and the representation of the part of the image signal is either a representation in spatial domain or a representation in frequency domain.

In general, the memory may be internal or external with respect to the device implementing the method of the present invention as well as internal or external with respect to the encoding and decoding apparatus of the present invention.

According to an embodiment of the present invention, a non-uniform quantizer information is included into the bitstream at the encoder and extracted at the decoder, the non-uniform quantizer information specifying the representation values and/or decision thresholds of the non-uniform quantizer. These representation values and/or decision thresholds are then directly used for setting-up the non-uniform quantizer and/or dequantizer.

Alternatively, the value distribution of the representation of a part of the image signal is indicated within the non-uniform quantizer information. In such a case, the decoder side performs first the design of the non-uniform quantizer and dequantizer to obtain representation values and/or decision thresholds and then sets up the non-uniform quantizer and/or dequantizer accordingly.

Advantageously, the bit depth of the input image signal at the encoder may be up-converted by *N* bits, *N* being a positive integer smaller than or equal to *M, M* being the number of bits for down-converting the bit-depth of a representation of the image before storing. Preferably, the value of bit depth increase *N* is included into the bitstream. The value of *M* used for bit-depth down-conversion of an image representation may also be included into the bitstream. Different values of *M* for different image representation may be selected and also included into the bitstream. Such an internal bit depth increase allows more accurate processing of the image signal and leads to a better decoded image quality. At the decoder, the bit-depth of the output signal may be down-converted again. This down- and up-conversion may be realized by a simple shift left and right, respectively.

Preferably, the non-uniform quantizer and/or dequantizer are designed adaptively, according to a value distribution of the representation of a part of the image signal, so as to quantize more likely occurring values with a smaller quantization step than the less likely occurring values of the representation of a part of the image signal. The designing of the non-uniform quantizer advantageously further includes determining the value distribution of the representation of a part of the image signal either by measuring the values of the representation of a part of the image signal or by extracting it from the bitstream. Furthermore, representation values and decision thresholds of the non-uniform quantizer and/or dequantizer are calculated according to the determined value distribution so as to minimize the mean square quantization error; and setting-up the non-uniform quantizer and/or dequantizer according to the calculated representation values and decision thresholds.

According to still another embodiment of the present invention, a computer program product is provided comprising a computer-readable medium having a computer-readable program code embodied thereon, the program code being adapted to carry out the method as described above.

The above and other objects and features of the present invention will become more apparent from the following description and preferred embodiments given in conjunction with the accompanying drawings in which:

| | |
|---|---|
| Figure 1 | is a block diagram illustrating an example of a conventional H.264/MPEG-4 AVC video encoder; |
| Figure 2 | is a block diagram illustrating an example of a conventional H.264/MPEG-4 AVC video decoder; |
| Figure 3 | is a block diagram illustrating an example of a hybrid encoder with internal bit depth increase; |
| Figure 4A | is a schematic drawing illustrating the distribution of input sample values for a first test sequence and a corresponding design of a quantizer; |
| Figure 4B | is a schematic drawing illustrating distribution of input sample values of another test sequence and the corresponding quantizer design; |
| Figure 5 | is a schematic drawing illustrating the distribution of the quantized prediction error signal and design of quantizer; |
| Figure 6A | is a block diagram illustrating a hybrid encoder with efficient storing of picture related information in accordance with an embodiment of the present invention; |
| Figure 6B | is a block diagram illustrating a hybrid decoder with efficient storing of picture related information in accordance with another embodiment of the present invention; |
| Figure 6C | is a block diagram illustrating a hybrid encoder with efficient storing of picture related information using the input signal for non-uniform quantizer design in accordance with another embodiment of the present invention; |
| Figure 6D | is a block diagram illustrating a hybrid decoder with efficient storing of picture related information capable of performing quantizer design in accordance with another embodiment of the present invention; |

| | |
|---|---|
| Figure 7 | is a graph illustrating design of a scalar quantizer which may be applied for the present invention; |
| Figure 8 | is a block diagram illustrating a part of an encoder applying wiener filter with multiple inputs and application of the efficient storing in accordance with still another embodiment of the present invention; |
| Figure 9 | is a schematic drawing illustrating an example of encoding quantizer information to be signalled within the coded bit stream; |
| Figure 10 | is a schematic drawing illustrating an example of mixing a uniform and non uniform quantization for storing quantized prediction error signal; |
| Figure 11 | is a flow diagram of an example of method performed in accordance with the present invention; |
| Figure 12 | is a block diagram illustrating a system for transmitting and receiving a signal encoded in accordance with the present invention; |
| Figure 13 | is a schematic drawing of an overall configuration of a content providing system for implementing content distribution services; |
| Figure 14 | is a schematic drawing of an overall configuration of a digital broadcasting system; |
| Figure 15 | is a block diagram illustrating an example of a configuration of a television; |
| Figure 16 | is a block diagram illustrating an example of a configuration of an information reproducing/recording unit that reads and writes information from or on a recording medium that is an optical disk; |
| Figure 17 | is a schematic drawing showing an example of a configuration of a recording medium that is an optical disk; |
| Figure 18A | is a schematic drawing illustrating an example of a cellular phone; |
| Figure 18B | is a block diagram showing an example of a configuration of the cellular phone; |
| Figure 19 | is a schematic drawing showing a structure of multiplexed data; |
| Figure 20 | is a schematic drawing illustrating how each of the streams is multiplexed in multiplexed data; |
| Figure 21 | is a schematic drawing illustrating how a video stream is stored in a stream of PES packets in more detail; |
| Figure 22 | is a schematic drawing showing a structure of TS packets and source packets in the multiplexed data; |
| Figure 23 | is a schematic drawing showing a data structure of a PMT; |
| Figure 24 | is a schematic drawing showing an internal structure of multiplexed data information; |
| Figure 25 | is a schematic drawing showing an internal structure of stream attribute information; |
| Figure 26 | is a schematic drawing showing steps for identifying video data; |
| Figure 27 | is a block diagram illustrating an example of a configuration of an integrated circuit for implementing the video coding method and the video decoding method according |

to each of embodiments;

| | |
|---|---|
| Figure 28 | is a schematic drawing showing a configuration for switching between driving frequencies; |
| Figure 29 | is a schematic drawing showing steps for identifying video data and switching between driving frequencies; |
| Figure 30 | is a schematic drawing showing an example of a look-up table in which the standards of video data are associated with the driving frequencies; |
| Figure 31A | is a schematic drawing showing an example of a configuration for sharing a module of a signal processing unit; |
| Figure 31B | is a schematic drawing showing another example of a configuration for sharing a module of a signal processing unit; |
| Figure 32 | is a schematic drawing illustrating differences between quantizer design based on the original image signal and based on the reconstructed image signal; |
| Figure 33 | is a schematic drawing illustrating another example of mixing a uniform and non uniform quantization for storing quantized prediction error signal; |
| Figure 34 | is a flow chart illustrating steps of non-uniform quantization at an image encoder side according to an embodiment of the present invention; |
| Figure 35A, 35B, 35C, and 35D | are flow charts illustrating steps of encoding information in accordance with various embodiments of the present invention; |
| Figure 36 | is a flow chart illustrating steps of non-uniform quantization at an image decoder side according to an embodiment of the present invention; |
| Figure 37A and 37B | are flow charts illustrating steps of determination of data for quantizer design according to various embodiments of the present invention; and |
| Figure 38A, 38B, 38C, and 38D | are flow charts illustrating steps of decoding information according to various embodiments of the present invention. |

## DETAILED DESCRIPTION

The problem underlying the present invention is based on the observation that higher bit depth of the image signal and its representations in different stages during encoding and decoding enables increasing of the resulting quality of the decoded image. On the other side, higher bit depth results in higher storage requirement.

The present invention allows improving the efficiency of storing the image data and/or its representations during the encoding and decoding more efficiently by down-converting its bit depth before storing in the memory by means of a non-uniform quantizer and up-converting its bit-depth again upon retrieving from the memory by a corresponding non-uniform dequantizing.

In general, the image data input to an encoder may generically be in a format with a higher bit depth, which may be too high for the available memory resources. On the other hand, the higher bit depth may be obtained by up-converting the image data input to the encoder before encoding. Such an up-conversion enables higher accuracy of encoding and/or decoding processing. The encoder and/or the decoder may then work on pixel values with the increased bit depth. After decoding, the bit depth may be reduced again before outputting it. The reduction of the bit depth is needed, for instance, if the capabilities of a displaying device do not enable displaying the image with the higher bit-depth.

Figure 3 illustrates a generalised block diagram of a hybrid encoder with internal bit depth increase. An input signal samples 301 are input to the hybrid encoder 300. The input signal s 301 is sampled in this example by 8 bits per sample. However, in general, image data with an arbitrary bit depth of *h* bits per sample may be input to an encoder. Before encoding, the bit depth of the input samples 301 is increased in a bit-depth up-conversion unit 310. The up-conversion may be implemented as a left shift by *N* bits, wherein *N* is a positive integer number. Advantageously, *N* may be a small integer such as 1, 2, 3, ..., 8. However, the present invention is not limited by these examples and the bit depth increase may be even higher. The resulting signal 315 has *8+N* samples. For the general case of input signal 301 with *h* bits per sample, the output of the up-conversion is a signal 315 with *h+N* bits per sample. The up-converted signal 315 is then encoded. The encoding may be similar to the encoding scheme described with reference to Figure 1. In particular, an error prediction signal *e* 381 is obtained by subtracting 380 from the up-converted input signal 315 a prediction signal $\hat{s}$ 361.

The prediction error signal *e* 381 may be transformed and quantized. This is performed by the transformation and quantization unit 320. In general, any linear transformation may be used, however, typically an integer DCT transformation is applied. The quantization is typically a scalar quantization. The quantized prediction error signal 321 is an input to an entropy encoder (EC) 390 for encoding and embedding the encoded information into a bit stream 391 being output from the encoder. Thus, the image representation 321 with a higher number of bits per sample than the input image signal 301 is provided within the bitstream to a decoder. In order to enable decoder to recognize the format of the input data to be decoded and to decode it appropriately, the up-conversion size *N* may advantageously be signalled within the same bitstream 391. The up-conversion size *N* may be embedded in the bitstream 391 encoded, for instance with en entropy code, for instance, an integer code such as unary code, Golomb code, exp-Golomb code, Elias code or a particularly designed such as a Huffmann or Shannon-Fano code. The up-conversion size *N* is preferably included within the bitstream 391 once per video sequence. It may be, for instance a part of encoder settings which may be set by a user. Alternatively, *N* may be signalled more times within the sequence (upon an event such as change of video content or rate requirement, per group of pictures, frame, slice, or block) and made adaptive on the content of the video sequence and/or the required coding gain. It may also be a part of rate-distortion optimization.

The quantized transformed prediction error signal 321 is further inverse transformed 330 and de-quantized resulting in quantized prediction error signal *e'* 331. The inverse transformation and de-quantizing belongs to a decoding part of the encoder. The quantized prediction error signal *e'* is then used to reconstruct the image signal *s'*371 in a summer 370 for summing up the quantized prediction error signal *e'* and the prediction signal 361. The prediction signal 361 is obtained by means of a spatial or a temporal prediction 360. In particular, the prediction signal is obtained by temporal interpolation that means by deriving the prediction signal from the signal of previously received images which are temporarily stored in the memory 350. Alternatively, the prediction signal 361 may be obtained by spatial interpolation based on the image signal already encoded from the same image and stored in the memory 350.

In general, the up-converted representation of the reconstructed signal *s'* 371 poses new requirements on the size of the available memory 350. In order to reduce these requirements, the bit depth down-conversion unit 340 reduces the bit depth of the reconstructed signal *s'*371. This is implemented, for instance, by means of a right shift by *M* bits, wherein *M* is preferably smaller or equal to *N.* However, for some cases *M* may also be selected greater than *N.* Consequently, the signal 341 down-converted by the bit-depth down-conversion unit 340 now has a depth of *h+N-M* bits per sample which is, in this particular example, *8+N-M* bits per sample. The down-conversion reduces the requirements on the size of the memory 350. However, the implementation of down-converting 340 by means of the right shift has a disadvantage of cutting of the bits leading to a possibly significant loss of quality of the stored image representation (in this example, the image representation is the reconstructed image signal *s'*). The right shift reduces uniformly, for all possible values of a sample, the number of bits for its representation.

Figure. 4A illustrates a probability density function *P(s)* of the input image sample values (with 8-bit depth) of an MPEG test video sequence "Kimono". As can be seen from the graph 400, the distribution of values is strongly non-uniform. In accordance with the present invention, the bit depth down-conversion 340 is not performed by a simple shift to right by *M* bits. Such a right shift operation would have an effect of a uniform quantization as illustrated at the bottom of the graph on axis 410 containing black dots denoting representation values and vertical lines denoting the decision thresholds for quantization. A uniform quantization minimizes the quantization error only for uniformly distributed signals, but not for non-uniformly distributed ones. Rather, according to the present invention the bit-depth down-conversion 340 is performed non-uniformly and preferably by adapting the quantizer to the possibly non-uniform distribution of the data to be stored, in this case, the images of a video sequence. This is illustrated by an axis 420. In particular, the values occurring with a higher probability are quantized with a finer granularity than the values occurring with lower probability. For the purposes of the present invention, the non-uniform quantizer 420 for storing the reconstructed video signal *s'* may be designed either based on distribution of the reconstructed video signal *s'* or based on distribution of the original input video signal s at the current time instance or at future time instances. Future time instances may be beneficial since the stored frames are used for predicting future images. Typically, these distributions may be similar especially if the quantization step 320 for compressing the image signal did not apply a large quantization step. However, it may be advantageous to take for the design of the non-uniform quantizer the distribution of the input signal *s*.

Similarly, Figure 4B illustrates the distribution of input sample values of another MPEG test video sequence "Basketball-drive" in a graph 450. As can be seen, the distribution 450 of input sample values substantially differs from the distribution of input sample values 400 shown in Figure 4A. However, also the distribution 450 is highly non-uniform. The representation values and decision thresholds for a corresponding uniform quantizer are shown below the graph on the axis 430 of sample values. A non-uniform quantizer adaptively determined based on the distribution 450 of input sample values is shown within the axis 440. As can be seen from the quantizer values and thresholds 420 and 440 for the two different test video sequences, the non-uniform quantizers substantially differ for these two input sample value sets. Therefore, according to the present invention, preferably, the quantizer is designed based on the input image/video sequence in order to finer quantize the highly probable value ranges. The finer quantization of such ranges result in higher quality of the resulting de-quantized signal for the same bit depth.

Figure 5 illustrates a distribution of a quantized prediction error signal *e'*, wherein the prediction error signal has been transformed before quantization by a DCT transformation and inverse transformed after the quantization. As can be seen from the figure, the distribution 500 is non-uniform and similar to a Laplace distribution. Below the graph 500, the uniform quantizer 510 is illustrated as well as an adaptively determined quantizer 520 designed based on the distribution 500 so as to minimize the mean square quantization error.

Figure 6 is a block diagram illustrating an encoder 600A according to a first embodiment of the present invention. In order to avoid decreasing the accuracy of the signal during the down-conversion 340 before storing it in the memory 350, an adaptive non-uniform quantizer unit 640 down-converts the reconstructed video signal *s'* by *M* bits. The down-conversion is performed by a non-uniform quantization adapted to a distribution of the input signal values. The non-uniformly quantized and thus down-converted values 641, each with *h+N-M* bits per sample, are stored in the memory 650. After retrieving the down-converted samples from the memory, the retrieved samples have to be dequantized in a manner corresponding to the adaptive non-uniform quantization 640. In order to perform the adaptive non-uniform dequantization 660, an information 642 about the quanitzer applied is provided from the adaptive non-uniform quantizer 640 to the adaptive non-uniform dequanitzer 660. Moreover, a non-uniform quantizer information may also be provided to the entropy coder 390 which may embed the information in an appropriate format, and possibly further encoded, into the bit stream 391.

In particular, the adapted non uniform quantizer 640 may be designed as a scalar quantizer or a vector quantizer. The adaptive non uniform quantizer 640 may be designed, for instance, as an optimum scalar non uniform quantizer as described in document Max, "Quantizing for minimum distortion", IRE Trans. on Information Theory, pp. 7-12, March 1960*,* or in document Lloyd, "Least squares quantization in PCM", Institute of Mathematical Statistics Meeting, Atlantic City, N.J., September 1957*, also included in* IEEE Trans. on Information Theory, pp- 129-136, March 1982*.*

Figure 6B illustrates a generalized block scheme of a hybrid decoder with a memory enhanced by down-conversion 670 of bit-depth before storing and up-conversion 680 of bit-depth after retrieving the data in/from the memory 690 in accordance with a another embodiment of the present invention. A bitstream 601 is input to the decoder 600B, parsed and decoded by the entropy decoder (ED) 610. The result of parsing may be a down-conversion information 611 which allows setting up the non-uniform quantizer for down-converting the bit depth and the non-uniform dequantizer for up-converting the bit depth. The parsed down-converting information is provided to the down-converter 670 and the up-converter 680. The result of parsing and decoding are also the transformed and quantized prediction error samples, which are further provided to the inverse transformation and dequantizer 620. The image signal is reconstructed by adding 630 the inverse transformed and dequantized signal 621 *e'* to a prediction signal 361. The reconstructed image signal 631 is output from the decoder. It may be output in the bit depth of *h+N* bits per sample, or down-converted to the original *h* bits per sample. Alternatively, it may be down-converted to an arbitrary number of bits per sample matching a displaying device which may be connected to the output of the decoder. The reconstructed image signal 631 is further to be stored in memory 690. Before storing, its bit depth is down-converted 670 by *M* bits and upon retrieving it up-converted 680 back using a non-uniform quantizer and dequantizer, respectively. In Figure 6B the down-converter 670 provides information for setting up the non-uniform dequantizer to the up-converter 680. However, in general, this information may be provided from the entropy decoder 610 directly to the up-converter 680. The particular implementation of setting up the quantizer depends on the type of the non-uniform quantization information included within the bit stream. For instance, if the non-uniform quantization information directly includes the representation values $s_k$ and the decision thresholds $d_k$, then the quantizer and the dequantizer may be set directly. However, if the non-uniform quantization information only includes data for designing the non-uniform quantizer, then the non-uniform quantizer has to be designed first. For instance, the non-uniform quantization information may be the distribution of the symbols to be quantized. In such a case, a complete quantizer design as described below is to be performed at the decoder in order to set up the non-uniform quantizer and/or dequantizer. In the internal decoder of an encoder, the same design needs to be performed.

Figure 6D shows such a decoder 600D including a quantizer design unit 675. The quantizer design unit 675 may receive from the entropy decoder 610 extracted non-uniform quantizer information 612 (cf. dashed line in Figure 6D) which does not directly contain the representation values and decision thresholds for the non-uniform quantizer/dequantizer 670, 680, but rather a parameter defining the distribution of the input signal values and/or other description of the distribution. Alternatively, the quantizer design unit does not receive any non-uniform quantizer information 612 and performs the quantizer design only based on the measured distribution of signal values. The information 612 may also be control information for the quantizer design unit. Such control information may be e.g. information about a convergence condition for the case that a quantizer design according to Lloyd is performed. The information 612 may then be e.g. the number of iterations applied or some threshold value as explained below.

Figure 6C shows an encoder which uses also the original signal 311 in order to design the quantizer. This is beneficial, e.g. if the expected values of the reconstructed signal and of the original signal are biased in one or more quantization steps and if the stored signal should better represent the original signal and not the reconstructed signal itself. It is also possible to better match other signals if desired, as explained in the context of Figure 32.

Figure 7 illustrates a general scalar quantizer 700 for a signal s. The quantizer has $K$ representation values $s_k$, with $k$ = 1,..., $K$. In particular, the mean squared quantization error D is defined as

$$D = \sum_{k=1}^{K} \left( \int_{d_k}^{d_{k+1}} (s_k - s)^2 \cdot p(s) \cdot ds \right).$$

The decision thresholds in between the representation values are denoted as $d_k$, *p(s)* is a probability density function of the input image samples *s*. In order to minimise the mean squared quantization error, the decision thresholds $d_k$ are found by solving the following equation:

$$\frac{\partial D}{\partial d_k} = 0 \qquad \forall\ k = 2, \ldots, K$$

The solution of the above minimisation problem leads to a set of decision threshold values $d_k$:

$$d_k = \frac{s_k + s_{k-1}}{2} \quad \forall\ k = 2, \ldots, K$$

Then the set of representation values $s_k$ may be obtained by minimising the mean squared quantization error *D* as:

$$\frac{\partial D}{\partial s_k} = 0 \qquad \forall\ k = 1, \ldots, K$$

Solving of the above minimisation problem results in a set of representation values $s_k$:

$$s_k = \frac{\int_{d_k}^{d_{k+1}} s \cdot p(s) \cdot ds}{\int_{d_k}^{d_{k+1}} p(s) \cdot ds} \quad \forall\ k = 1, \ldots, K$$

A scalar quantizer optimal in terms of mean squared quantization error for a given distribution of input values *p(s)* according to Lloyd is performed interactively in the following four steps:

1. setting initial representation values. The initial representation values may be selected, for instance, by uniformly subdividing the range of possible values of the input image signal *s.*

2. calculating decision thresholds $d_k$ for $k = 2, ..., K$ as described above to minimise mean squared quantization error *D.* The decision threshold $d_1$ can be set to the smallest possible value or minus infinity.

3. calculating new representation values $s_k$ for $k = 1, ..., K$ as described above in order to minimise the mean squared quantization error *D* and assuming the decision thresholds $d_k$ already calculated in step 2.

4. evaluating a convergence condition and if the condition is not fulfilled, repeating steps 2 and 3. If the convergence condition is fulfilled, go to step 5.

5. output the calculated decision thresholds $d_k$ and representation values $s_k$ as new quantizer design for the given distribution *p(s).*

In particular, the convergence condition may be the difference or the absolute difference or the squared difference, or similar between the values of decision thresholds and/or representation values in different iterations, e.g. in subsequent iterations. If the decision thresholds and the representation values do not essentially change with new iterations, the algorithm may be terminated by step 5. Alternatively, a fixed number of iterations may be defined and the convergence condition is fulfilled as soon as the predefined number of iterations is achieved.

In order to allow a decoder performing the steps of quantizer design as explained above and as exemplified in Figure 6D, it may be beneficial to code and transmit any of the following information from the encoder site to the decoder site:

- Information about initial representation values required in step 1
  - o All representation values themselves
  - o Only representation, which are either $s_k \geq 0$ or $s_k \leq 0$. All further ones are calculated by assuming symmetry $s_i = -s_j$.
  - o A first representation value $s_1$ and a distance $dist = s_{k+1} - s_k$, with which they can be calculated.
- Information about a convergence condition, e.g.
  - o An index indicating which of the following conditions is applied:
    - ■ Difference
    - ■ Absolute difference
    - ■ Squared difference
  - o Information about a threshold for the applied condition
  - o A number indicating how many iterations are performed

Figure 32 shows example graph 3210 distributions *P(s)* and *P(s')* of an original signal *s* to be coded and a reconstructed signal *s'* after decoding to be displayed or stored in a memory for further motion compensated predictions. Furthermore, Figure 32 shows an example 3220 of difference between representation values calculated according to the distribution *P(s)* and a representation value calculated for the distribution *P(s').* As can be seen, the distributions may differ, e.g. by a bias. The following explanation is focused on one quantization interval. For all other quantization intervals, the same technique can be applied. According to the formula above, the representation value should be the expected value of the signal

$$s_{k,s'} = \frac{\int_{d_k}^{d_{k+1}} s' \cdot p(s') \cdot ds'}{\int_{d_k}^{d_{k+1}} p(s') \cdot ds'} = E\left[s' \middle| s' \le d_{k+1} \wedge s' \ge d_k\right].$$

This would minimize the mean squared quantization error *D* between the signal *s'* and its quantized representation. However, in a hybrid video coder, it may be beneficial to minimize the mean squared reconstruction error between the original input signal *s* and the quantized representation of *s'*. If this is desired, the representation values for quantizing the signal *s'* should be chosen as

$$s_{k,s} = \frac{\int_{d_k}^{d_{k+1}} s \cdot p\left(s \middle| s' \le d_{k+1} \wedge s' \ge d_k\right) \cdot ds}{\int_{d_k}^{d_{k+1}} p\left(s \middle| s' \le d_{k+1} \wedge s' \ge d_k\right) \cdot ds} = E\left[s \middle| s' \le d_{k+1} \wedge s' \ge d_k\right].$$

Of course, this kind of optimization is only possible at the encoder site since the original input signal is only available at the encoder site. Thus, this requires the coding and transmission of the representation values from the encoder site to the decoder site as exemplified in Figure 6C.

However, this invention is not limited to only optimize considering the original input image. In certain situations, it may also beneficial to match one signal to a completely different one, e.g. the quantized prediction error *e*' to the original signal *s* :

$$s_{k,s} = \frac{\int_{d_k}^{d_{k+1}} e \cdot p\left(e \middle| s' \le d_{k+1} \wedge s' \ge d_k\right) \cdot ds}{\int_{d_k}^{d_{k+1}} p\left(e \middle| s' \le d_{k+1} \wedge s' \ge d_k\right) \cdot ds} = E\left[e \middle| s' \le d_{k+1} \wedge s' \ge d_k\right]$$

In the previous examples, a design of an adaptive scalar quantizer has been shown as an option for setting up the down-converter and the up-converter. However, the present invention is not limited to non-uniform scalar quantization, and may employ a vector quantizer for the adaptive non-uniform quantization 640 and/or 670. An example of an iterative vector quantizer design for a given distribution *p(s)* is disclosed, for instance, in Linde, Y., Buzo, A., & Gray, R. An Algorithm for Vector Quantizer Design", IEEE Transaction on Communications, 28 (1), pp. 84-94, 1980. However, other algorithms for adaptively designing a non-uniform quantizer may also be employed.

The present invention is also applicable if the reconstructed video signal 371 is to be further filtered with a filter 860 having more than one input. Such a filter may be, for instance, a Wiener filter calculated at the encoder side based on the input signal *s,* the decoded signal *s*' after applying the deblocking filter or after applying any other filter 850, a prediction signal $\hat{s}$, and/or a quantized prediction error signal *e'*. The filter coefficients of such a Wiener filter or an information allowing for calculating the filter coefficients at the decoder side, such as cross correlation between the original and the reconstructed video signal, is further included into the bit stream comprising the encoded video signal.

Figure 8 illustrates a part of an encoder 800 including a Wiener filter 860 as an in-loop filter. Wiener filter 860 is designed using separate signals and is also applied to filter these separate signals: the reconstructed signal *s*' 371, the quantized prediction error signal *e'* 331, and/or the prediction signal $\hat{s}$ 801. The design of the Wiener filter 860 is performed also based on the original input signal *s.* Since the three signals $\hat{s}$, *s'* and *e'* are filtered separately, they have to be stored before applying the Wiener filter 860. For storing of these separate signals, separate memories or parts of a common memory 842, 822 and 812 are used. Some of them may be line memories or frame memories.

In accordance with another embodiment of the present invention, a non-uniform quantizing of each signal to be stored is performed and after retrieving the signal, a non-uniform dequantization is employed. In particular, the prediction signal $\hat{s}$ is quantized non-uniformly 840 and saved in the memory 842 with a reduced bit depth. A non-uniform quantizer information is then provided to the non-uniform dequantizer 844 and/or to the entropy encoder 890, which includes this information into the bit stream. Similarly, the predicition error signal *e'* is non-uniformly quantized 810 before storing in the memory 812. The non-uniform quantizer information is again provided to the non-uniform dequantizer 814 and to the entropy coder 890. In the same way, the reconstructed image signal s' is non-uniformly quantized 820 before storing it in the memory 822, and the corresponding non-uniform quantizer information is provided to the non-uniform dequantizer 824 and to the entropy coder 890. The non-uniform quantizer information preferably includes information necessary for setting up the quantizer and for performing the non-uniform dequantization. The separate and possibly different non-uniform quantizers may provide a possibility of individual adaptation to the particular signal to be stored. Alternatively, the non-uniform quantizer and/or dequantizer for storing the prediction signal and the reconstructed video signal may be the same, assuming that the prediction works sufficiently well resulting in similar value distribution as the distribution of the reconstructed image. For instance, the non-uniform quantizer may be designed for the reconstructed signal and also used for the prediction signal or vice versa.

After filtering with the Wiener filter 860 which may be preceded or followed by another kind of filtering 850, the result of filtering is to be saved in a memory 832. Again, for storing in the memory 832, a non-uniform quantizer may be applied to the Wiener filtered signal and the filtered signal may be retrieved from the memory 832 and non-uniformly dequantized 834. The separate non-uniformly quantization and dequantization before and after storing data in the memory for different signals such as $\hat{s}$, *s'*, *e'* and the filtered signal is advantageous in order to adapt the non-uniform quantization to the distribution of the values to be stored. However, in order to reduce the complexity, a non-uniform quantizer designed for similar signals may be shared. This may reduce the amount of additional bit rate required to transmit quantizer information but it also may slightly reduce the efficiency of storing, especially for highly compressed image signals or for image signals which cannot be predicted efficiently (for instance, images containing non-linear movement, non-linear edges, etc.). In this example, it is assumed that the depth *h* (or *h*+*N*) of the processed signals $\hat{s}$, *s'*, and *e'* is 16 bits per sample and *M=8* bits. However, this embodiment of the present invention is equally applicable to any other values of *h, N,* and *M.*

The non-uniform quantizer information 642 provided from the adapted non-uniform quantizer 640 to the adaptive non-uniform dequantizer 660 and/or to the entropy coder 690 is preferably quantizer information represented by representation values $s_k$ or vectors and/or by decision thresholds $d_k$. Alternatively, the non-uniform quantizer information may be an information specifying the distribution of the signal to be quantized. In the case that the non-uniform quantizer information 642 is included within the bit stream, it may be included once per frame, once per slice or once per block. The non-uniform quantizer information may be further coded, for instance, by using a variable length coding such as arithmetic coding, Huffman coding, or other codes such as Golomb, Elias, unary codes, etc. It may also be advantageous to encode the non-uniform quantization information predictively. The predictive coding may be based on the previously encoded data related to the non-uniform quantizer information of previous frames/slices/blocks. For instance, only a prediction error may be encoded.

In particular, if $d_{k.t}$ is the decision threshold used at the current time instance *t*, and $d_{k,t-t1}$ is the decision threshold used at a previous time instance $t$-$t_1$, which is already known to the encoder and to the decoder, a prediction can be performed, such as

$$\hat{d}_{k.t} = d_{k.t-t_1} .$$

The prediction error $d_{k,t}$ - $d_{k,t-t1}$ could be coded and transmitted. The same could be done for the representation values. The prediction could be $\hat{s}_{k,t} = s_{k,t-t1}$. The prediction error $s_{k,t}$, - $s_{k,t-t1}$ could be coded and transmitted.

However, the non-uniform quantizer information does not necessarily have to be signalled to the decoder. At the decoder, the quantizer design may be performed in the same way as at the encoder assuming that the quantizer design relies only on information available to both encoder and decoder. Such information is, for instance, the distribution of the reconstructed video signal of previous blocks/slices/frames, quantized prediction error signal *e',* and/or the prediction signal $\hat{s}$. If the non-uniform quantizer information 642 is not signalled from the encoder to the decoder, the decoder has to derive the distribution of the signal to be quantized from the already received signals. This has the disadvantage of a lower grade of adaptivity. Moreover, with newly decoded information, the design of the quantizer has to be updated. Calculating and *re-calculating* of the non-uniform quantizer adds a complexity to the decoder side. On the other hand, if the non-uniform quantizer information is signalled from the encoder to the decoder, the quantizer at the decoder side may be set up immediately without any further computational requirements. Moreover, a better adaptation to the distribution of the values to be quantized is achieved.

Figure 9 illustrates an example of quantizer 900 with decision thresholds $d_k$ and representation values $s_k$, wherein $k$ = 1,...,$K$. The values of the representation values may be encoded explicitly and in the order of $s_1$, $s_2$, $s_3$, ... etc. and then by coding decision thresholds $d_1$, $d_2$, $d_3$, etc. relatively to the respective representation values $s_1$, $s_2$, $s_3$, ... etc. Another possibility is to encode the first representation value $s_1$ and then to code the differences $s_2 - s_1$, $s_3 - s_2$ ... etc. The decision thresholds $d_k$ may then be predictively encoded. In particular, a prediction decision threshold $\hat{d}_k$ may be obtained as:

$$\hat{d}_k = \frac{s_k + s_{k-1}}{2},$$

which means that the prediction decision threshold is estimated as a half of the quantization interval between two presentation values $s_k$ and $s_{k-1}$. Then the code prediction error is calculated as

$$e_k = d_k - \hat{d}_k$$

and transmitted. The code prediction error $e_k$ may be further quantized and/or encoded with an entropy code. $e_k$ may also be set fixed to zero in both, encoder and decoder.

Figure 10 is a schematic drawing illustrating the design of a mixed, non-uniform quantizer with uniform quantization applied for less likely symbols. As an example, distribution 500 of the quantized prediction error $e'$ is taken for the design of the non-uniform quantizer. The non-uniform quantizer 1010 according to this embodiment includes uniform quantization intervals applied for quantizing less likely symbols. These are in this example symbols with values smaller than -10 or greater than 10. The remaining more likely symbols are quantized non-uniformly wherein the non-uniform quantizer is designed as described above.

In certain situations, in which the signal to be quantized is discrete already and the variance of the signal to be quantized is extremely small, it may happen that the non-uniform quantizer equals the uniform quantizer for the most likely symbols. In this case, a quantization 3310 according to Figure 33 is beneficial. In particular, the ranges in which the non-uniform quantization is to be used are the value ranges with lower occurrence probability and the ranges in which a uniform quantization is to be used are the value ranges with higher occurrence probability, other than in the Example described with reference to Figure 10.

Alternatively, the non-uniform quantizing may be approximated as a step-wise uniform quantizing with a quantization interval of a first size applied to more likely symbols and as uniform quantizing the less likely symbols using a quantization interval of a second (different) size. Here, quantization interval here refers to distance between two neighbouring decision thresholds. The representation values may be fixedly set in the middle of each quantization interval. This alternative will probably have lower performance than the non-uniform quantizing capable of adapting to the given symbol distribution. However, it is easy to design, and signalling the information specifying such a quantizer requires less bandwidth than for the above cases. Still, in comparison with a uniform quantizing, a lower coding efficiency may be achieved. In particular, the signalling of the quantizer information in the case of non-uniform quantization with two or more different uniform quantization intervals may be performed efficiently by signalling only the quantization step sizes and the boundaring representation values between deploying the first quantizer and the second uniform quantizer, and/or other uniform quantizers. The decision threshold could be assumed to be in between adjacent representation values: $d_k = \frac{s_k + s_{k-1}}{2}$

In the case, that uniform-quantizers are used for quantizing parts of the symbols, e.g. the most likely ones, it may be beneficial for an easy hardware realization to use step sizes, which are a power of 2 such as $2^M$. In this case, the quantization can be realized by a simple bit shift to the right: >> $M$. More efficient may be a quantization with a step size different from a power of 2. These step sizes can be expressed by two factors, whereas one is a power of 2: $a \cdot 2^M$. The realization can then be a multiplication by $a^{-1}$ followed by a bit shift to the right: >> $M$.

In the embodiment in which no non-uniform quantization information is provided within the bit stream to the decoder side, the decoder will have to first measure and store the signal distribution based on the already decoded signal. Then, based on the measured and stored signal distribution, quantizer design is performed. The quantizer design may be performed, for instance, as already described above by means of minimizing the mean squared quantization error. Alternatively, other methods may be used as well, which do not necessarily converge to an optimum quantizer. For instance, a quantizer may be designed so as to automatically select a range for which a first quantization interval is to be applied and a remaining range for which a second quantization interval is to be applied. The selection may be performed based on the features of the probability distribution.

After performing the quantizer design, the quantizer and the dequantizer may finally be set accordingly.

In general, it is efficient to use quantizers with a number of representation values and/or representation vectors equal to a power of 2 in combination with a fixed code word length. A fixed code word length is often a requirement for an easy memory access. This enables efficient storing without redundancy. For instance, the use of 256 representation values/vectors is efficient, since they can be coded using 8 bits/value or 8 bits/vector and fixed code word length. In the case of using, for instance, only 255 representation values and fixed code word length, one of the 256 addressable possibilities would not be used. This would be not efficient.

Within the encoder and/or the decoder, a non-uniform quantizer 640 and a non-uniform dequantizer 660 may be implemented as a look-up table. An example table for a non-uniform quantization with $2^{8+N}$ entries is shown below:

| Address | Representation value |
|---|---|
| 0 | Value to which the value 0 is quantized |
| 1 | Value to which the value 1 is quantized |
| ... | ... |
| $2^{8+N}$ - 1 | Value to which the value $2^{8+N}$ -1 is quantized |

In general, the look up table may have $2^{h+N}$ entries, depending on the original bit depth of the signal. Moreover, the internal bit depth up-conversion by N bits does not necessarily have to be applied as described above and thus the look-up table may have the size of $2^h$ entries.

Similarly, the dequantizer may be implemented as a look-up table with $2^{8+N-M}$ entries as shown below:

| Address | Representation value |
|---|---|
| 0 | Value to which the value 0 is de-quantized |
| 1 | Value to which the value 1 is de-quantized |
| ... | ... |
| $2^{8+N-M}$ -1 | Value to which the value $2^{8+N-M}$ -1 is de-quantized |

As can be seen in Fig. 5, typically the quantized prediction error signal *e*' (and similarly, the non-quantized prediction error signal *e*) has a distribution similar to Laplace distribution. In general, the prediction error signal is typically distributed similarly to the Laplace distribution, which variance becomes generally lower with a finer quantization applied and with a better performance of the prediction. This observation may be used to efficiently signal the distribution from the encoder to the decoder. In particular, the Laplace distribution of a random variable *x* is given by:

$$p(x) = \frac{1}{2 \cdot \alpha} \cdot \exp\left( -\frac{|x-\mu|}{\alpha} \right)$$

wherein, $\alpha$ is a parameter defining the variance of *x*, which is $2 \cdot \alpha^2$, and $\mu$ is the mean of *x*. Typically, for prediction error signal, the mean is equal to zero. Therefore, the distribution can fully be described by a single parameter $\alpha$.

Correspondingly, in order to efficiently signal non-uniform quantizer information, the parameter $\alpha$ (or the corresponding variance $2 \cdot \alpha^2$, or its square root, or any other parameter based on which the variance of the distribution may be described) may be estimated for the distribution of the quantized prediction error signal. The Laplace distribution with zero mean and variance $2\cdot\alpha^2$ may then be used to design an adaptive quantizer as described above. This design may be performed in the same way at the encoder side and at the decoder side based on the same signal available to both encoder and decoder or under the assumption that the value $\alpha$ is signalled within the bit stream.

For example, the 16 representation values $s_k$ of a Laplacian distribution of the variance of a variance of $255=2\cdot\alpha^2$ are the following:

| Index | Representation value times 16384 |
|---|---|
| 0 | -772048 |
| 1 | -426324 |
| 2 | -245549 |
| 3 | -139313 |
| 4 | -75910 |
| 5 | -38900 |
| 6 | -17766 |
| 7 | -5030 |
| 8 | 5030 |
| 9 | 17766 |
| 10 | 38900 |
| 11 | 75910 |
| 12 | 139313 |
| 13 | 245549 |
| 14 | 426324 |
| 15 | 772048 |

This table could be used in case of 8+N-M=4.

The table could be stored in the encoder as well as in the decoder. If a distribution, which is similar to a Laplacian distribution, but of a different variance $2a_{new}^2$ needs to be quantized, the following 16 representation *values* $s_{k,new}$ could be calculated:

$$s_{k,new} = s_k \cdot \frac{a_{new}}{a}$$

The same calculation could be performed for the decision thresholds:

$$d_{k,new} = d_k \cdot \frac{a_{new}}{a}$$

The parameter $a_{new}$ could be coded and transmitted, all other data is stored in the encoder and decoder.

For being able to calculate new representation values $s_{k,new}$ and new decision thresholds $d_{k,new}$, it is beneficial to store the representation values having a high accuracy, preferably higher than integer. This can be achieved by a multiplication, e.g. with 16384 as in the example above.

However, the present invention is also applicable if the non-uniform quantizers/dequantizers applied before storages (memories) at the encoder side are different from those at the decoder side. In such a case, the decoding is performed slightly differently than the encoding which may lead to reduced image quality, however it will still likely perform better than applying right and left shifts before and after storing at both the encoder and the decoder.

Assumption of the Laplace distribution may further be used to even more simplify the design of the non-uniform quantizer. For instance, the representation values and the decision thresholds for Laplace distributions with particular variances may be stored and only one of the stored quantizers may be selected based on the measured distribution or signalled in the bitstream.

It should be noted that the Wiener filtering as shown, for instance, in Figure 8 may also be performed in frequency domain. In such a case the transformed prediction error signal, in particular, the transformation coefficients *c* and/or the quantized transformation coefficients *c*' have to be possibly stored in a memory. Similarly to the already discussed examples, the bit depth of the (quantized) transformation coefficients may be down-converted with a non-uniform quantizer before storing, and up-converted again upon retrieving. The transformation coefficients also typically have a distribution similar to the Laplace distribution, which may be used for an efficient signalling of the non-uniform quantizer information and for efficient filter design.

The non-uniform quantizer information, however, may in general include a value which specifies a selection of one in a set of available non-uniform quantizers. The set of such quantizers then has to be synchronized between the encoder and decoder. Such a set may be obtained, for instance by measuring the distribution of image representations such as reconstructed video signal, input video signal, transformation coefficients or prediction error signal, etc. for a set of test sequences and by selecting some typical distributions for which quantizers ade defined and stored at the encoder side and/or at the decoder side.

In the above examples, the present invention has been applied to storing picture representation during the encoding and/or decoding of an image or video data since for such an application, memory requirements may be critical for the implementation. However, the storing of image representation according to the present invention is also not limited to the storing during encoding and/or decoding. The same principle may be applied, for instance, in image or video cameras for storing the image samples of the captured image/video sequences or during the interlacing/de-interlacing processing.

Figure 11 illustrates a generalized flow diagram representing a method according to the present application. In particular, the memory access for storing/retrieving any picture representation or its part 1100 in a memory is performed as follows. When a part of an image representation is to be stored ("store" in step 1110), the part of the bit depth of the image representation is first down-converted 1120 by a predefined number of bits using a non-uniform quantizer and then the down-converted part of the image representation is stored 1150 in the memory. When, on the other hand, the stored part of an image representation is to be retrieved from the memory, it is retrieved 1130 and then up-converted 1140 by the predefined number of bits using a non-uniform dequantizer. The data are then provided 1160 for further encoding/decoding processing.

Figure 34 illustrates a generalized flow diagram representing the non-linear quantization 1120A according to an embodiment of the present invention, which may be performed at the encoder side. In particular, the quantizer design and the encoding 3410 of the associated information is performed as follows. Data is determined which is necessary to design a non-uniform quantizer. The determined data is used for designing the non-uniform quantizer. Information required by the decoder to set up the same quantizer is encoded.

Figure 35 illustrates a generalized flow diagram representing variants 3410A, 3410B, 3410C, and 3410D of the specific information encoding 3410. Figure 35A shows the encoding 3410A of decision thresholds and representation values. Figure 35B shows the encoding 3410B of a parameter describing the variance. Figure 35C shows the encoding 3410C of a distribution. Figure 35D shows the encoding 3410D of parameters for a quantizer design according to Lloyd algorithm.

Figure 36 illustrates a generalized flow diagram representing the non-linear quantization 1120B according to an embodiment of the present invention, which may be performed at the decoder side. In particular, the decoding of information and the quantizer design is performed as follows. Data is determined 3610 which is necessary to design a non-uniform quantizer. Information is decoded 3620. The determined data and the decoded information is used for designing the non-uniform quantizer.

Figure 37 illustrates a generalized flow diagram representing the variants 3610A and 3610B of the data determination 3610 of an encoder or decoder. Figure 37A shows the measuring of the distribution. Figure 37B shows the measuring of the variance.

Figure 38 illustrates a generalized flow diagram representing the specific information decoding variants 3620A, 3620B, 3620C, and 3620D. Figure 38A shows the decoding of decision thresholds and representation values. Figure 38B shows the decoding of a parameter describing the variance. Figure 38C shows the decoding of a distribution. Figure 38D shows the decoding of parameters for a quantizer design according to Lloyd algorithm.

The processing described in each of the above embodiments can be simply implemented in an independent computer system, by recording, in a recording medium, a program for implementing the configurations of the video coding method and the video decoding method described in each of Embodiments. The recording media may be any recording media as long as the program can be recorded, such as a magnetic disk, an optical disk, a magnetic optical disk, an IC card, and a semiconductor memory.

Hereinafter, the applications of the video coding method and the video decoding method described in each of the embodiments and systems using it will be described.

Figure 12 illustrates an example of a generalized system for transferring encoded video data from an encoder side to a decoder side in accordance with the present invention. An input video signal is encoded by an encoder 1201 and provided to a channel 1202. The encoder 1201 is an encoder in accordance with any of the embodiments of the present invention as described above. The channel 1202 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder side may also include preprocessing of the input video signal such as format conversion and/or transmitter for transmitting the encoded video signal over the channel 1202 or an application for transferring the encoded video signal into the storage. The encoded video signal is then obtained from the channel 1202 by a decoder 1203. The decoder 1403 is a decoder in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

Figure 13 illustrates an overall configuration of an example content providing system ex100 for implementing content distribution services. The area for providing communication services is divided into cells of desired size, and base stations ex106, ex107, ex108, ex109, and ex110 which are fixed wireless stations are placed in each of the cells. The content providing system ex100 is connected to devices, such as a computer ex111, a personal digital assistant (PDA) ex112, a camera ex113, a cellular phone ex114 and a game machine ex115, via the Internet ex101, an Internet service provider ex102, a telephone network ex104, as well as the base stations ex106 to ex110, respectively. However, the configuration of the content providing system ex100 is not limited to the configuration shown in Figure 13, and a combination in which any of the elements are connected is acceptable. In addition, each device may be directly connected to the telephone network ex104, rather than via the base stations ex106 to ex110 which are the fixed wireless stations. Furthermore, the devices may be interconnected to each other via a short distance wireless communication and others.

The camera ex113, such as a digital video camera, is capable of capturing video. A camera ex116, such as a digital video camera, is capable of capturing both still images and video. Furthermore, the cellular phone ex114 may be the one that meets any of the standards such as Global System for Mobile Communications (GSM), Code Division Multiple Access (CDMA), Wideband-Code Division Multiple Access (W-CDMA), Long Term Evolution (LTE), and High Speed Packet Access (HSPA). Alternatively, the cellular phone ex114 may be a Personal Handyphone System (PHS). In the content providing system ex100, a streaming server ex103 is connected to the camera ex113 and others via the telephone network ex104 and the base station ex109, which enables distribution of images of a live show and others. In such a distribution, a content (for example, video of a music live show) captured by the user using the camera ex113 is coded as described above in each of Embodiments, and the coded content is transmitted to the streaming server ex103. On the other hand, the streaming server ex103 carries out stream distribution of the transmitted content data to the clients upon their requests. The clients include the computer ex111, the PDA ex112, the camera ex113, the cellular phone ex114, and the game machine ex115 that are capable of decoding the above-mentioned coded data. Each of the devices that have received the distributed data decodes and reproduces the coded data.

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and video captured by not only the camera ex113 but also the camera ex116 may be transmitted to the streaming server ex103 through the computer ex111. The coding processes may be performed by the camera ex116, the computer ex111, or the streaming server ex103, or shared among them. Furthermore, the coding and decoding processes may be performed by an LSI ex500 generally included in each of the computer ex111 and the devices. The LSI ex500 may be configured of a single chip or a plurality of chips. Software for coding and decoding video may be integrated into some type of a recording medium (such as a CD-ROM, a flexible disk, and a hard disk) that is readable by the computer ex111 and others, and the coding and decoding processes may be performed using the software. Furthermore, when the cellular phone ex114 is equipped with a camera, the image data obtained by the camera may be transmitted. The video data is data coded by the LSI ex500 included in the cellular phone ex114. Moreover, the streaming server ex103 may be composed of servers and computers, and may decentralize data and process the decentralized data, record, or distribute data. As described above, the clients may receive and reproduce the coded data in the content providing system ex100. In other words, the clients can receive and decode information transmitted by the user, and reproduce the decoded data in real time in the content providing system ex100, so that the user who does not have any particular right and equipment can implement personal broadcasting.

Aside from the example of the content providing system ex100, at least one of the video coding apparatus and the video decoding apparatus described in each of Embodiments may be implemented in a digital broadcasting system ex200 illustrated in Figure 14. More specifically, a broadcast station ex201 communicates or transmits, via radio waves to a broadcast satellite ex202, multiplexed data obtained by multiplexing audio data and others onto video data. The video data is data coded by the video coding method described in each of Embodiments. Upon receipt of the multiplexed data, the broadcast satellite ex202 transmits radio waves for broadcasting. Then, a home-use antenna ex204 with a satellite broadcast reception function receives the radio waves. Next, a device such as a television (receiver) ex300 and a set top box (STB) ex217 decodes the received multiplexed data, and reproduces the decoded data.

Furthermore, a reader/recorder ex218 (i) reads and decodes the multiplexed data recorded on a recording media ex215, such as a DVD and a BD, or (i) codes video signals in the recording medium ex215, and in some cases, writes data obtained by multiplexing an audio signal on the coded data. The reader/recorder ex218 can include the video decoding apparatus or the video coding apparatus as shown in each of embodiments. In this case, the reproduced video signals are displayed on the monitor ex219, and can be reproduced by another device or system using the recording medium ex215 on which the multiplexed data is recorded. It is also possible to implement the video decoding apparatus in the set top box ex217 connected to the cable ex203 for a cable television or to the antenna ex204 for satellite and/or terrestrial broadcasting, so as to display the video signals on the monitor ex219 of the television ex300. The video decoding apparatus may be implemented not in the set top box but in the television ex300.

Figure 15 illustrates the television (receiver) ex300 that uses the video coding method and the video decoding method described in each of Embodiments. The television ex300 includes: a tuner ex301 that obtains or provides multiplexed data obtained by multiplexing audio data onto video data, through the antenna ex204 or the cable ex203, etc. that receives a broadcast; a modulation/demodulation unit ex302 that demodulates the received multiplexed data or modulates data into multiplexed data to be supplied outside; and a multiplexing/demultiplexing unit ex303 that demultiplexes the modulated multiplexed data into video data and audio data, or multiplexes video data and audio data coded by a signal processing unit ex306 into data.

The television ex300 further includes: a signal processing unit ex306 including an audio signal processing unit ex304 and a video signal processing unit ex305 that decode audio data and video data and code audio data and video data, respectively; and an output unit ex309 including a speaker ex307 that provides the decoded audio signal, and a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to each other through a synchronous bus.

First, the configuration in which the television ex300 decodes multiplexed data obtained from outside through the antenna ex204 and others and reproduces the decoded data will be described. In the television ex300, upon a user operation through a remote controller ex220 and others, the multiplexing/demultiplexing unit ex303 demultiplexes the multiplexed data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in each of Embodiments, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read multiplexed data not through a broadcast and others but from the recording media ex215 and ex216, such as a magnetic disk, an optical disk, and a SD card. Next, a configuration in which the television ex300 codes an audio signal and a video signal, and transmits the data outside or writes the data on a recording medium will be described. In the television ex300, upon a user operation through the remote controller ex220 and others, the audio signal processing unit ex304 codes an audio signal, and the video signal processing unit ex305 codes a video signal, under control of the control unit ex310 using the coding method described in each of embodiments. The multiplexing/demultiplexing unit ex303 multiplexes the coded video signal and audio signal, and provides the resulting signal outside. When the multiplexing/demultiplexing unit ex303 multiplexes the video signal and the audio signal, the signals may be temporarily stored in the buffers ex320 and ex321, and others so that the signals are reproduced in synchronization with each other. Here, the buffers ex318, ex319, ex320, and ex321 may be plural as illustrated, or at least one buffer may be shared in the television ex300. Furthermore, data may be stored in a buffer so that the system overflow and underflow may be avoided between the modulation/demodulation unit ex302 and the multiplexing/demultiplexing unit ex303, for example. Furthermore, the television ex300 may include a configuration for receiving an AV input from a microphone or a camera other than the configuration for obtaining audio and video data from a broadcast or a recording medium, and may code the obtained data. Although the television ex300 can code, multiplex, and provide outside data in the description, it may be capable of only receiving, decoding, and providing outside data but not the coding, multiplexing, and providing outside data. Furthermore, when the reader/recorder ex218 reads or writes multiplexed data from or on a recording medium, one of the television ex300 and the reader/recorder ex218 may decode or code the multiplexed data, and the television ex300 and the reader/recorder ex218 may share the decoding or coding.

As an example, Figure 16 illustrates a configuration of an information reproducing/recording unit ex400 when data is read or written from or on an optical disk. The information reproducing/recording unit ex400 includes constituent elements ex401, ex402, ex403, ex404, ex405, ex406, and ex407 to be described hereinafter. The optical head ex401 irradiates a laser spot in a recording surface of the recording medium ex215 that is an optical disk to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. The disk motor ex405 rotates the recording medium ex215. The servo control unit ex406 moves the optical head ex401 to a predetermined information track while controlling the rotation drive of the disk motor ex405 so as to follow the laser spot. The system control unit ex407 controls overall the information reproducing/recording unit ex400. The reading and writing processes can be implemented by the system control unit ex407 using various information stored in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write. Although the optical head ex401 irradiates a laser spot in the description, it may perform high-density recording using near field light.

Figure 17 illustrates the recording medium ex215 that is the optical disk. On the recording surface of the recording medium ex215, guide grooves are spirally formed, and an information track ex230 records, in advance, address information indicating an absolute position on the disk according to change in a shape of the guide grooves. The address information includes information for determining positions of recording blocks ex231 that are a unit for recording data. Reproducing the information track ex230 and reading the address information in an apparatus that records and reproduces data can lead to determination of the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit ex400 reads and writes coded audio, coded video data, or multiplexed data obtained by multiplexing the coded audio and video data, from and on the data recording area ex233 of the recording medium ex215. Although an optical disk having a layer, such as a DVD and a BD is described as an example in the description, the optical disk is not limited to such, and may be an optical disk having a multilayer structure and capable of being recorded on a part other than the surface. Furthermore, the optical disk may have a structure for multidimensional recording and/or reproduction, such as recording of information using light of colors with different wavelengths in the same portion of the optical disk and for recording information having different layers from various angles.

Furthermore, a car ex210 having an antenna ex205 can receive data from the satellite ex202 and others, and reproduce video on a display device such as a car navigation system ex211 set in the car ex210, in the digital broadcasting system ex200. Here, a configuration of the car navigation system ex211 will be a configuration, for example, including a GPS receiving unit from the configuration illustrated in Figure 15. The same will be true for the configuration of the computer ex111, the cellular phone ex114, and others.

Figure 18A illustrates the cellular phone ex114 that uses the video coding method and the video decoding method described in embodiments. The cellular phone ex114 includes: an antenna ex350 for transmitting and receiving radio waves through the base station ex110; a camera unit ex365 capable of capturing moving and still images; and a display unit ex358 such as a liquid crystal display for displaying the data such as decoded video captured by the camera unit ex365 or received by the antenna ex350. The cellular phone ex114 further includes: a main body unit including an operation key unit ex366; an audio output unit ex357 such as a speaker for output of audio; an audio input unit ex356 such as a microphone for input of audio; a memory unit ex367 for storing captured video or still pictures, recorded audio, coded or decoded data of the received video, the still pictures, e-mails, or others; and a slot unit ex364 that is an interface unit for a recording medium that stores data in the same manner as the memory unit ex367.

Next, an example of a configuration of the cellular phone ex114 will be described with reference to Figure 18B. In the cellular phone ex114, a main control unit ex360 designed to control overall each unit of the main body including the display unit ex358 as well as the operation key unit ex366 is connected mutually, via a synchronous bus ex370, to a power supply circuit unit ex361, an operation input control unit ex362, a video signal processing unit ex355, a camera interface unit ex363, a liquid crystal display (LCD) control unit ex359, a modulation/demodulation unit ex352, a multiplexing/demultiplexing unit ex353, an audio signal processing unit ex354, the slot unit ex364, and the memory unit ex367. When a call-end key or a power key is turned ON by a user's operation, the power supply circuit unit ex361 supplies the respective units with power from a battery pack so as to activate the cell phone ex114.

In the cellular phone ex114, the audio signal processing unit ex354 converts the audio signals collected by the audio input unit ex356 in voice conversation mode into digital audio signals under the control of the main control unit ex360 including a CPU, ROM, and RAM. Then, the modulation/demodulation unit ex352 performs spread spectrum processing on the digital audio signals, and the transmitting and receiving unit ex351 performs digital-to-analog conversion and frequency conversion on the data, so as to transmit the resulting data via the antenna ex350.

Also, in the cellular phone ex114, the transmitting and receiving unit ex351 amplifies the data received by the antenna ex350 in voice conversation mode and performs frequency conversion and the analog-to-digital conversion on the data. Then, the modulation and/or demodulation unit ex352 performs inverse spread spectrum processing on the data, and the audio signal processing unit ex354 converts it into analog audio signals, so as to output them via the audio output unit ex356.

Furthermore, when an e-mail in data communication mode is transmitted, text data of the e-mail inputted by operating the operation key unit ex366 and others of the main body is sent out to the main control unit ex360 via the operation input control unit ex362. The main control unit ex360 causes the modulation/demodulation unit ex352 to perform spread spectrum processing on the text data, and the transmitting and receiving unit ex351 performs the digital-to-analog conversion and the frequency conversion on the resulting data to transmit the data to the base station ex110 via the antenna ex350. When an e-mail is received, processing that is approximately inverse to the processing for transmitting an e-mail is performed on the received data, and the resulting data is provided to the display unit ex358. When video, still images, or video and audio in data communication mode is or are transmitted, the video signal processing unit ex355 compresses and codes video signals supplied from the camera unit ex365 using the video coding method shown in each of Embodiments, and transmits the coded video data to the multiplexing/demultiplexing unit ex353. In contrast, during when the camera unit ex365 captures video, still images, and others, the audio signal processing unit ex354 codes audio signals collected by the audio input unit ex356, and transmits the coded audio data to the multiplexing/demultiplexing unit ex353. The multiplexing/demultiplexing unit ex353 multiplexes the coded video data supplied from the video signal processing unit ex355 and the coded audio data supplied from the audio signal processing unit ex354, using a predetermined method. Then, the modulation/demodulation unit ex352 performs spread spectrum processing on the multiplexed data, and the transmitting and receiving unit ex351 performs digital-to-analog conversion and frequency conversion on the data so as to transmit the resulting data via the antenna ex350.

When receiving data of a video file which is linked to a Web page and others in data communication mode or when receiving an e-mail with video and/or audio attached, in order to decode the multiplexed data received via the antenna ex350, the multiplexing/demultiplexing unit ex353 demultiplexes the multiplexed data into a video data bit stream and an audio data bit stream, and supplies the video signal processing unit ex355 with the coded video data and the audio signal processing unit ex354 with the coded audio data, through the synchronous bus ex370. The video signal processing unit ex355 decodes the video signal using a video decoding method corresponding to the coding method shown in each of Embodiments, and then the display unit ex358 displays, for instance, the video and still images included in the video file linked to the Web page via the LCD control unit ex359. Furthermore, the audio signal processing unit ex354 decodes the audio signal, and the audio output unit ex357 provides the audio. Furthermore, similarly to the television ex300, a terminal such as the cellular phone ex114 probably have 3 types of implementation configurations including not only (i) a transmitting and receiving terminal including both a coding apparatus and a decoding apparatus, but also (ii) a transmitting terminal including only a coding apparatus and (iii) a receiving terminal including only a decoding apparatus. Although the digital broadcasting system ex200 receives and transmits the multiplexed data obtained by multiplexing audio data onto video data in the description, the multiplexed data may be data obtained by multiplexing not audio data but character data related to video onto video data, and may be not multiplexed data but video data itself. As such, the video coding method and the video decoding method in each of Embodiments can be used in any of the devices and systems described. Thus, the advantages described in each of embodiments can be obtained. However, the present invention is not limited to embodiments, and various modifications and revisions are possible without departing from the scope of the present invention.

Video data can be generated by switching, as necessary, between (i) the video coding method or the video coding apparatus shown in each of Embodiments and (ii) a video coding method or a video coding apparatus in conformity with a different standard, such as MPEG-2, MPEG4-AVC, and VC-1. Here, when a plurality of video data that conforms to the different standards is generated and is then decoded, the decoding methods need to be selected to conform to the different standards. However, since to which standard each of the plurality of the video data to be decoded conform cannot be detected, there is a problem that an appropriate decoding method cannot be selected.

In order to solve the problem, multiplexed data obtained by multiplexing audio data and others onto video data has a structure including identification information indicating to which standard the video data conforms. The specific structure of the multiplexed data including the video data generated in the video coding method and by the video coding apparatus shown in each of Embodiments will be hereinafter described. The multiplexed data is a digital stream in the MPEG2-Transport Stream format.

Figure 19 illustrates a structure of the multiplexed data. As illustrated in Figure 19, the multiplexed data can be obtained by multiplexing at least one of a video stream, an audio stream, a presentation graphics stream (PG), and an interactive graphics stream. The video stream represents primary video and secondary video of a movie, the audio stream (IG) represents a primary audio part and a secondary audio part to be mixed with the primary audio part, and the presentation graphics stream represents subtitles of the movie. Here, the primary video is normal video to be displayed on a screen, and the secondary video is video to be displayed on a smaller window in the primary video. Furthermore, the interactive graphics stream represents an interactive screen to be generated by arranging the GUI components on a screen. The video stream is coded in the video coding method or by the video coding apparatus shown in each of embodiments, or in a video coding method or by a video coding apparatus in conformity with a conventional standard, such as MPEG-2, MPEG4-AVC, and VC-1. The audio stream is coded in accordance with a standard, such as Dolby-AC-3, Dolby Digital Plus, MLP, DTS, DTS-HD, and linear PCM.

Each stream included in the multiplexed data is identified by PID. For example, 0x1011 is allocated to the video stream to be used for video of a movie, 0x1100 to 0x111F are allocated to the audio streams, 0x1200 to 0x121F are allocated to the presentation graphics streams, 0x1400 to 0x141F are allocated to the interactive graphics streams, 0x1B00 to 0x1B1F are allocated to the video streams to be used for secondary video of the movie, and 0x1A00 to 0x1A1F are allocated to the audio streams to be used for the secondary video to be mixed with the primary audio.

Figure 20 schematically illustrates how data is multiplexed. First, a video stream ex235 composed of video frames and an audio stream ex238 composed of audio frames are transformed into a stream of PES packets ex236 and a stream of PES packets ex239, and further into TS packets ex237 and TS packets ex240, respectively. Similarly, data of a presentation graphics stream ex241 and data of an interactive graphics stream ex244 are transformed into a stream of PES packets ex242 and a stream of PES packets ex245, and further into TS packets ex243 and TS packets ex246, respectively. These TS packets are multiplexed into a stream to obtain multiplexed data ex247.

Figure 21 illustrates how a video stream is stored in a stream of PES packets in more detail. The first bar in Figure 21 shows a video frame stream in a video stream. The second bar shows the stream of PES packets. As indicated by arrows denoted as yy1, yy2, yy3, and yy4 in Figure 21, the video stream is divided into pictures as I pictures, B pictures, and P pictures each of which is a video presentation unit, and the pictures are stored in a payload of each of the PES packets. Each of the PES packets has a PES header, and the PES header stores a Presentation Time-Stamp (PTS) indicating a display time of the picture, and a Decoding Time-Stamp (DTS) indicating a decoding time of the picture.

Figure 22 illustrates a format of TS packets to be finally written on the multiplexed data. Each of the TS packets is a 188-byte fixed length packet including a 4-byte TS header having information, such as a PID for identifying a stream and a 184-byte TS payload for storing data. The PES packets are divided, and stored in the TS payloads, respectively. When a BD ROM is used, each of the TS packets is given a 4-byte TP_Extra_Header, thus resulting in 192-byte source packets. The source packets are written on the multiplexed data. The TP_Extra_Header stores information such as an Arrival_Time_Stamp (ATS). The ATS shows a transfer start time at which each of the TS packets is to be transferred to a PID filter. The source packets are arranged in the multiplexed data as shown at the bottom of Figure 22. The numbers incrementing from the head of the multiplexed data are called source packet numbers (SPNs).

Each of the TS packets included in the multiplexed data includes not only streams of audio, video, subtitles and others, but also a Program Association Table (PAT), a Program Map Table (PMT), and a Program Clock Reference (PCR). The PAT shows what a PID in a PMT used in the multiplexed data indicates, and a PID of the PAT itself is registered as zero. The PMT stores PIDs of the streams of video, audio, subtitles and others included in the multiplexed data, and attribute information of the streams corresponding to the PIDs. The PMT also has various descriptors relating to the multiplexed data. The descriptors have information such as copy control information showing whether copying of the multiplexed data is permitted or not. The PCR stores STC time information corresponding to an ATS showing when the PCR packet is transferred to a decoder, in order to achieve synchronization between an Arrival Time Clock (ATC) that is a time axis of ATSs, and an System Time Clock (STC) that is a time axis of PTSs and DTSs.

Figure 23 illustrates the data structure of the PMT in detail. A PMT header is disposed at the top of the PMT. The PMT header describes the length of data included in the PMT and others. A plurality of descriptors relating to the multiplexed data is disposed after the PMT header. Information such as the copy control information is described in the descriptors. After the descriptors, a plurality of pieces of stream information relating to the streams included in the multiplexed data is disposed. Each piece of stream information includes stream descriptors each describing information, such as a stream type for identifying a compression codec of a stream, a stream PID, and stream attribute information (such as a frame rate or an aspect ratio). The stream descriptors are equal in number to the number of streams in the multiplexed data. When the multiplexed data is recorded on a recording medium and others, it is recorded together with multiplexed data information files.

Each of the multiplexed data information files is management information of the multiplexed data as shown in Figure 24. The multiplexed data information files are in one to one correspondence with the multiplexed data, and each of the files includes multiplexed data information, stream attribute information, and an entry map. As illustrated in Figure 24, the multiplexed data includes a system rate, a reproduction start time, and a reproduction end time. The system rate indicates the maximum transfer rate at which a system target decoder to be described later transfers the multiplexed data to a PID filter. The intervals of the ATSs included in the multiplexed data are set to not higher than a system rate. The reproduction start time indicates a PTS in a video frame at the head of the multiplexed data. An interval of one frame is added to a PTS in a video frame at the end of the multiplexed data, and the PTS is set to the reproduction end time.

As shown in Figure 25, a piece of attribute information is registered in the stream attribute information, for each PID of each stream included in the multiplexed data. Each piece of attribute information has different information depending on whether the corresponding stream is a video stream, an audio stream, a presentation graphics stream, or an interactive graphics stream. Each piece of video stream attribute information carries information including what kind of compression codec is used for compressing the video stream, and the resolution, aspect ratio and frame rate of the pieces of picture data that is included in the video stream. Each piece of audio stream attribute information carries information including what kind of compression codec is used for compressing the audio stream, how many channels are included in the audio stream, which language the audio stream supports, and how high the sampling frequency is. The video stream attribute information and the audio stream attribute information are used for initialization of a decoder before the player plays back the information.

The multiplexed data to be used is of a stream type included in the PMT. Furthermore, when the multiplexed data is recorded on a recording medium, the video stream attribute information included in the multiplexed data information is used. More specifically, the video coding method or the video coding apparatus described in each of Embodiments includes a step or a unit for allocating unique information indicating video data generated by the video coding method or the video coding apparatus in each of Embodiments, to the stream type included in the PMT or the video stream attribute information. With the configuration, the video data generated by the video coding method or the video coding apparatus described in each of Embodiments can be distinguished from video data that conforms to another standard.

Furthermore, Figure 26 illustrates steps of an example video decoding method. In Step exS100, the stream type included in the PMT or the video stream attribute information is obtained from the multiplexed data. Next, in Step exS101, it is determined whether or not the stream type or the video stream attribute information indicates that the multiplexed data is generated by the video coding method or the video coding apparatus in each of embodiments. When it is determined that the stream type or the video stream attribute information indicates that the multiplexed data is generated by the video coding method or the video coding apparatus in each of embodiments, in Step exS102, decoding is performed by the video decoding method in each of embodiments. Furthermore, when the stream type or the video stream attribute information indicates conformance to the conventional standards, such as MPEG-2, MPEG4-AVC, and VC-1, in Step exS103, decoding is performed by a video decoding method in conformity with the conventional standards.

As such, allocating a new unique value to the stream type or the video stream attribute information enables determination whether or not the video decoding method or the video decoding apparatus that is described in each of embodiments can perform decoding. Even when multiplexed data that conforms to a different standard, an appropriate decoding method or apparatus can be selected. Thus, it becomes possible to decode information without any error. Furthermore, the video coding method or apparatus, or the video decoding method or apparatus can be used in the devices and systems described above.

However, it should be noted that the present invention may also be implemented only internally, and no additional signalling is necessary in such a case within the bitstream. For instance, the down-conversion before storing and up-conversion after retrieving may also be performed within an encoder only or decoder only in order to more efficiently exploit the internal or external memory.

Each of the video coding method, the video coding apparatus, the video decoding method, and the video decoding apparatus in each of embodiments is typically achieved in the form of an integrated circuit or a Large Scale Integrated (LSI) circuit. As an example of the LSI, Figure 27 illustrates a configuration of the LSI ex500 that is made into one chip. The LSI ex500 includes elements ex501, ex502, ex503, ex504, ex505, ex506, ex507, ex508, and ex509 to be described below, and the elements are connected to each other through a bus ex510. The power supply circuit unit ex505 is activated by supplying each of the elements with power when the power supply circuit unit ex505 is turned on.

For example, when coding is performed, the LSI ex500 receives an AV signal from a microphone ex117, a camera ex113, and others through an AV IO ex509 under control of a control unit ex501 including a CPU ex502, a memory controller ex503, a stream controller ex504, and a driving frequency control unit ex512. The received AV signal is temporarily stored in an external memory ex511, such as an SDRAM. Under control of the control unit ex501, the stored data is segmented into data portions according to the processing amount and speed to be transmitted to a signal processing unit ex507. Then, the signal processing unit ex507 codes an audio signal and/or a video signal. Here, the coding of the video signal is the coding described in each of Embodiments. Furthermore, the signal processing unit ex507 sometimes multiplexes the coded audio data and the coded video data, and a stream IO ex506 provides the multiplexed data outside. The provided multiplexed data is transmitted to the base station ex107, or written on the recording media ex215. When data sets are multiplexed, the data should be temporarily stored in the buffer ex508 so that the data sets are synchronized with each other. Although the memory ex511 is an element outside the LSI ex500, it may be included in the LSI ex500. The buffer ex508 is not limited to one buffer, but may be composed of buffers. Furthermore, the LSI ex500 may be made into one chip or a plurality of chips.

Furthermore, although the control unit ex510 includes the CPU ex502, the memory controller ex503, the stream controller ex504, the driving frequency control unit ex512, the configuration of the control unit ex510 is not limited to such. For example, the signal processing unit ex507 may further include a CPU. Inclusion of another CPU in the signal processing unit ex507 can improve the processing speed. Furthermore, as another example, the CPU ex502 may serve as or be a part of the signal processing unit ex507, and, for example, may include an audio signal processing unit. In such a case, the control unit ex501 includes the signal processing unit ex507 or the CPU ex502 including a part of the signal processing unit ex507. The name used here is LSI, but it may also be called IC, system LSI, super LSI, or ultra LSI depending on the degree of integration. Moreover, ways to achieve integration are not limited to the LSI, and a special circuit or a general purpose processor and so forth can also achieve the integration. Field Programmable Gate Array (FPGA) that can be programmed after manufacturing LSIs or a reconfigurable processor that allows re-configuration of the connection or configuration of an LSI can be used for the same purpose. In the future, with advancement in semiconductor technology, a brand-new technology may replace LSI. The functional blocks can be integrated using such a technology. The possibility is that the present invention is applied to biotechnology.

When video data generated in the video coding method or by the video coding apparatus described in each of Embodiments is decoded, compared to when video data that conforms to a conventional standard, such as MPEG-2, MPEG4-AVC, and VC-1 is decoded, the processing amount probably increases. Thus, the LSI ex500 needs to be set to a driving frequency higher than that of the CPU ex502 to be used when video data in conformity with the conventional standard is decoded. However, when the driving frequency is set higher, there is a problem that the power consumption increases.

In order to solve the problem, the video decoding apparatus, such as the television ex300 and the LSI ex500 is configured to determine to which standard the video data conforms, and switch between the driving frequencies according to the determined standard. Figure 28 illustrates a configuration ex800. A driving frequency switching unit ex803 sets a driving frequency to a higher driving frequency when video data is generated by the video coding method or the video coding apparatus described in each of embodiments. Then, the driving frequency switching unit ex803 instructs a decoding processing unit ex801 that executes the video decoding method described in each of embodiments to decode the video data. When the video data conforms to the conventional standard, the driving frequency switching unit ex803 sets a driving frequency to a lower driving frequency than that of the video data generated by the video coding method or the video coding apparatus described in each of Embodiments. Then, the driving frequency switching unit ex803 instructs the decoding processing unit ex802 that conforms to the conventional standard to decode the video data.

More specifically, the driving frequency switching unit ex803 includes the CPU ex502 and the driving frequency control unit ex512 in Figure 27. Here, each of the decoding processing unit ex801 that executes the video decoding method described in each of Embodiments and the decoding processing unit ex802 that conforms to the conventional standard corresponds to the signal processing unit ex507 in Figure 25. The CPU ex502 determines to which standard the video data conforms. Then, the driving frequency control unit ex512 determines a driving frequency based on a signal from the CPU ex502. Furthermore, the signal processing unit ex507 decodes the video data based on the signal from the CPU ex502. For example, the identification information described is probably used for identifying the video data. The identification information is not limited to the one described above but may be any information as long as the information indicates to which standard the video data conforms. For example, when which standard video data conforms to can be determined based on an external signal for determining that the video data is used for a television or a disk, etc., the determination may be made based on such an external signal. Furthermore, the CPU ex502 selects a driving frequency based on, for example, a look-up table in which the standards of the video data are associated with the driving frequencies as shown in Figure 30. The driving frequency can be selected by storing the look-up table in the buffer ex508 and in an internal memory of an LSI, and with reference to the look-up table by the CPU ex502.

Figure 29 illustrates steps for executing a method. First, in Step exS200, the signal processing unit ex507 obtains identification information from the multiplexed data. Next, in Step exS201, the CPU ex502 determines whether or not the video data is generated by the coding method and the coding apparatus described in each of embodiments, based on the identification information. When the video data is generated by the video coding method and the video coding apparatus described in each of embodiments, in Step exS202, the CPU ex502 transmits a signal for setting the driving frequency to a higher driving frequency to the driving frequency control unit ex512. Then, the driving frequency control unit ex512 sets the driving frequency to the higher driving frequency. On the other hand, when the identification information indicates that the video data conforms to the conventional standard, such as MPEG-2, MPEG4-AVC, and VC-1, in Step exS203, the CPU ex502 transmits a signal for setting the driving frequency to a lower driving frequency to the driving frequency control unit ex512. Then, the driving frequency control unit ex512 sets the driving frequency to the lower driving frequency than that in the case where the video data is generated by the video coding method and the video coding apparatus described in each of embodiment.

Furthermore, along with the switching of the driving frequencies, the power conservation effect can be improved by changing the voltage to be applied to the LSI ex500 or an apparatus including the LSI ex500. For example, when the driving frequency is set lower, the voltage to be applied to the LSI ex500 or the apparatus including the LSI ex500 is probably set to a voltage lower than that in the case where the driving frequency is set higher.

Furthermore, when the processing amount for decoding is larger, the driving frequency may be set higher, and when the processing amount for decoding is smaller, the driving frequency may be set lower as the method for setting the driving frequency. Thus, the setting method is not limited to the ones described above. For example, when the processing amount for decoding video data in conformity with MPEG4-AVC is larger than the processing amount for decoding video data generated by the video coding method and the video coding apparatus described in each of Embodiments, the driving frequency is probably set in reverse order to the setting described above.

Furthermore, the method for setting the driving frequency is not limited to the method for setting the driving frequency lower. For example, when the identification information indicates that the video data is generated by the video coding method and the video coding apparatus described in each of Embodiments, the voltage to be applied to the LSI ex500 or the apparatus including the LSI ex500 is probably set higher. When the identification information indicates that the video data conforms to the conventional standard, such as MPEG-2, MPEG4-AVC, and VC-1, the voltage to be applied to the LSI ex500 or the apparatus including the LSI ex500 is probably set lower. As another example, when the identification information indicates that the video data is generated by the video coding method and the video coding apparatus described in each of embodiments, the driving of the CPU ex502 does not probably have to be suspended. When the identification information indicates that the video data conforms to the conventional standard, such as MPEG-2, MPEG4-AVC, and VC-1, the driving of the CPU ex502 is probably suspended at a given time because the CPU ex502 has extra processing capacity. Even when the identification information indicates that the video data is generated by the video coding method and the video coding apparatus described in each of embodiments, in the case where the CPU ex502 has extra processing capacity, the driving of the CPU ex502 is probably suspended at a given time. In such a case, the suspending time is probably set shorter than that in the case where when the identification information indicates that the video data conforms to the conventional standard, such as MPEG-2, MPEG4-AVC, and VC-1. Accordingly, the power conservation effect can be improved by switching between the driving frequencies in accordance with the standard to which the video data conforms. Furthermore, when the LSI ex500 or the apparatus including the LSI ex500 is driven using a battery, the battery life can be extended with the power conservation effect.

There are cases where a plurality of video data that conforms to different standards, is provided to the devices and systems, such as a television and a mobile phone. In order to enable decoding the plurality of video data that conforms to the different standards, the signal processing unit ex507 of the LSI ex500 needs to conform to the different standards. However, the problems of increase in the scale of the circuit of the LSI ex500 and increase in the cost arise with the individual use of the signal processing units ex507 that conform to the respective standards.

In order to solve the problem, what is conceived is a configuration in which the decoding processing unit for implementing the video decoding method described in each of Embodiments and the decoding processing unit that conforms to the conventional standard, such as MPEG-2, MPEG4-AVC, and VC-1 are partly shared. Ex900 in Figure 31A shows an example of the configuration. For example, the video decoding method described in each of Embodiments and the video decoding method that conforms to MPEG4-AVC have, partly in common, the details of processing, such as entropy coding, inverse quantization, deblocking filtering, and motion compensated prediction. The details of processing to be shared probably includes use of a decoding processing unit ex902 that conforms to MPEG4-AVC. In contrast, a dedicated decoding processing unit ex901 is probably used for other processing unique to the present invention. Since the present invention is characterized by a deblocking filtering, for example, the dedicated decoding processing unit ex901 is used for deblocking filtering. Otherwise, the decoding processing unit is probably shared for one of the entropy coding, inverse quantization, and motion compensated prediction, or all of the processing. The decoding processing unit for implementing the video decoding method described in each of Embodiments may be shared for the processing to be shared, and a dedicated decoding processing unit may be used for processing unique to that of MPEG4-AVC.

Furthermore, ex1000 in Figure 31B shows another example in that processing is partly shared. This example uses a configuration including a dedicated decoding processing unit ex1001 that supports the processing unique to the present invention, a dedicated decoding processing unit ex1002 that supports the processing unique to another conventional standard, and a decoding processing unit ex1003 that supports processing to be shared between the video decoding method in the present invention and the conventional video decoding method. Here, the dedicated decoding processing units ex1001 and ex1002 are not necessarily specialized for the processing of the present invention and the processing of the conventional standard, respectively, and may be the ones capable of implementing general processing. Furthermore, the configuration can be implemented by the LSI ex500. As such, reducing the scale of the circuit of an LSI and reducing the cost are possible by sharing the decoding processing unit for the processing to be shared between the video decoding method in the present invention and the video decoding method in conformity with the conventional standard.

Most of the examples have been outlined in relation to an H.264/AVC based video coding system, and the terminology mainly relates to the H.264/AVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/AVC coding currently discussed by the JVT.

Summarizing, the present invention relates to an efficient storing of an image representation during encoding and decoding the image. In particular, before storing, the bit depth of the representation samples is down-converted by a non-uniform quantizer. Upon retrieving, the bit depth of the retrieved data is up-converted again. This storing approach provides possibility of reducing the memory requirements and, while, at the same time keeping the accuracy of the stored data as high as possible.

## Claims

**1.** A method for decoding an image signal from a bitstream including in at least one decoding stage storing a representation of a part of the image in a memory, the method comprising the steps of:

down-converting bit depth of a representation of a part of the image signal with a non-uniform quantizer;
storing the down-converted representation of the part of the image signal in the memory;
retrieving the down-converted representation of the part of the image signal from the memory; and
up-converting bit depth of the retrieved representation of the part of the image signal with a non-uniform dequantizer.

**2.** The method according to claim 1 further comprising the steps of:

extracting from the bitstream a non-uniform quantizer information, wherein the non-uniform quantizer information specifies the representation values and/or decision thresholds of the non-uniform quantizer and/or dequantizer; and
setting-up the non-uniform quantizer and/or dequantizer according to the extracted non-uniform quantizer information.

**3.** A method for encoding an image signal into a bit stream including in at least one encoding stage storing a representation of a part of the image in a memory, the method comprising the steps of:

down-converting bit depth of a representation of a part of the image signal with a non-uniform quantizer;
storing the down-converted representation of the part of the image signal in the memory;
retrieving the down-converted representation of the part of the image signal from the memory; and
up-converting bit depth of the retrieved representation of the part of the image signal with a non-uniform dequantizer.

**4.** The method according to claim 3 further comprising the step of:

embedding into the bitstream a non-uniform quantizer information, wherein the non-uniform quantizer information specifies the representation values and/or decision thresholds of the non-uniform quantizer and/or dequantizer, or the value distribution of the representation of a part of the image signal, or a parameter of said value distribution, a standard deviation, or a variance.

**5.** The method according to claim 3 or 4, wherein the steps of down-converting bit depth and up-converting bit depth of the representation of the part of the image signal decrease and increase, respectively, the number of bits per sample by M bits, M being a positive integer, further comprising the steps of:

up-converting the bit depth of the image signal to be encoded by N bits, N being a positive integer smaller than or equal to M, and
including the value of bit depth increase N or the value of bit depth decrease M into the bitstream.

**6.** The method according to any of claims 1 or 3 to 5 further comprising the step of:

designing the non-uniform quantizer and/or dequantizer adaptively, according to a value distribution of the representation of a part of the image signal, so as to quantize more likely occurring values with a smaller quantization step than the less likely occurring values of the representation of a part of the image signal.

**7.** The method according to claim 6, wherein the step of designing the non-uniform quantizer further includes the steps of:

determining the value distribution of the representation of a part of the image signal either by measuring the values of the representation of a part of the image signal or
by extracting it from the bitstream;
determining representation values and decision thresholds of the non-uniform quantizer and/or dequantizer according to the determined value distribution so as to minimize the mean square quantization error; and
setting-up the non-uniform quantizer and/or dequantizer according to the calculated representation values and decision thresholds.

**8.** The method according to claim 7, wherein
the value distribution of quantized prediction error is assumed to have Laplace distribution,
the step of determining the value distribution is performed by estimating a parameter of the Laplace distribution according to the measured values of quantized prediction error or by extracting the parameter of the Laplace distribution from the bitstream; and
the step of determining representation values and decision thresholds of the non-uniform quantizer and/or dequantizer is performed according to the determined parameter of the Laplace distribution by retrieving representation values and decision thresholds predefined for said Laplace distribution.

**9.** The method according to any of claims 1 to 8, further comprising the step of determining a prediction signal based on already processed values of the image signal, wherein:

the part of the image signal is at least one of the prediction signal, a quantized prediction error signal obtained by quantizing a difference between the image signal and the prediction signal, a reconstructed image signal obtained as a sum of the prediction signal and the quantized prediction error signal, or a reconstructed and filtered image signal obtained by filtering the reconstructed image signal; and
the representation of the part of the image signal is either a representation in spatial domain or a representation in frequency domain.

**10.** An apparatus for decoding an image signal from a bitstream including at least one decoding processing unit configured to store a representation of a part of the image in a memory, the apparatus comprising:

a non-uniform quantizer unit for down-converting bit depth of a representation of a part of the image signal with a non-uniform quantizer;
a memory access unit for storing the down-converted representation of the part of the image signal in the memory and for retrieving the down-converted representation of the part of the image signal from the memory; and
a non-uniform dequantizer unit for up-converting bit depth of the retrieved representation of the part of the image signal with a non-uniform dequantizer.

**11.** The apparatus according to claim 10 further comprising:

an extracting unit for extracting from the bitstream a non-uniform quantizer information, wherein the non-uniform quantizer information specifies the representation values and/or decision thresholds of the non-uniform quantizer and/or dequantizer; and
a design unit for setting-up the non-uniform quantizer and/or dequantizer according to the extracted non-uniform quantizer information.

**12.** An apparatus for encoding an image signal into a bitstream including at least one encoding processing unit configured to store a representation of a part of the image in a memory, the apparatus comprising:

a non-uniform quantizer unit for down-converting bit depth of a representation of a part of the image signal with a non-uniform quantizer;
a memory access unit for storing the down-converted representation of the part of the image signal in the memory and for retrieving the down-converted representation of the part of the image signal from the memory; and
a non-uniform dequantizer unit for up-converting bit depth of the retrieved representation of the part of the image signal with a non-uniform dequantizer.

**13.** The apparatus according to claim 12 further comprising:

an embedding unit for embedding into the bitstream a non-uniform quantizer information, wherein the non-uniform quantizer information specifies the representation values and/or decision thresholds of the non-uniform quantizer and/or
dequantizer, or the value distribution of the representation of a part of the image signal, a parameter of said value distribution, or a standard deviation, or a variance.

**14.** The apparatus according to claim 11 or 12, wherein the non-uniform quantizer unit and the non-uniform dequantizer unit are configured to decrease and increase, respectively, the number of bits per sample by M bits, M being a positive integer, and the apparatus further comprises:

an initial up-conversion unit for up-converting the bit depth of the image signal to be encoded by N bits, N being a positive integer smaller than or equal to M, and including the value of bit depth increase N into the bitstream.

**15.** The apparatus according to any of claims 10 or 12 to 14 further comprising:

a design unit for designing the non-uniform quantizer and/or dequantizer adaptively, according to a value distribution of the representation of a part of the image signal, so as to quantize more likely occurring values with a smaller quantization step than the less likely occurring values of the representation of a part of the image signal.

**16.** The apparatus according to claim 15, wherein the design unit further includes:

a distribution determining unit for determining the value distribution of the representation of a part of the image signal either by measuring the values of the representation of a part of the image signal or by extracting it from the bitstream;
a processing unit for determining representation values and decision thresholds of the non-uniform quantizer and/or dequantizer according to the determined value distribution so as to minimize the mean square quantization error; and
a set-up unit for setting-up the non-uniform quantizer and/or dequantizer according to the calculated representation values and decision thresholds.

**17.** The method according to claim 16, wherein
the value distribution of quantized prediction error is assumed to have Laplace distribution,
the distribution determining unit is configured to estimate a parameter of the Laplace distribution according to the measured values of quantized prediction error or by extracting the parameter of the Laplace distribution from the bitstream; and
the processing unit is configured to determine representation values and decision thresholds of the non-uniform quantizer and/or dequantizer according to the determined parameter of the Laplace distribution by retrieving representation values and decision thresholds predefined for said Laplace distribution.

**18.** The apparatus according to any of claims 10 to 17, further comprising a predicting unit for determining a prediction signal based on already processed values of the image signal, wherein:

the part of the image signal is at least one of the prediction signal, a quantized prediction error signal obtained by quantizing a difference between the image signal and the prediction signal, a reconstructed image signal obtained as a sum of the prediction signal and the quantized prediction error signal, or a reconstructed and filtered image signal obtained by filtering the reconstructed image signal; and
the representation of the part of the image signal is either a representation in spatial domain or a representation in frequency domain.

Fig. 1

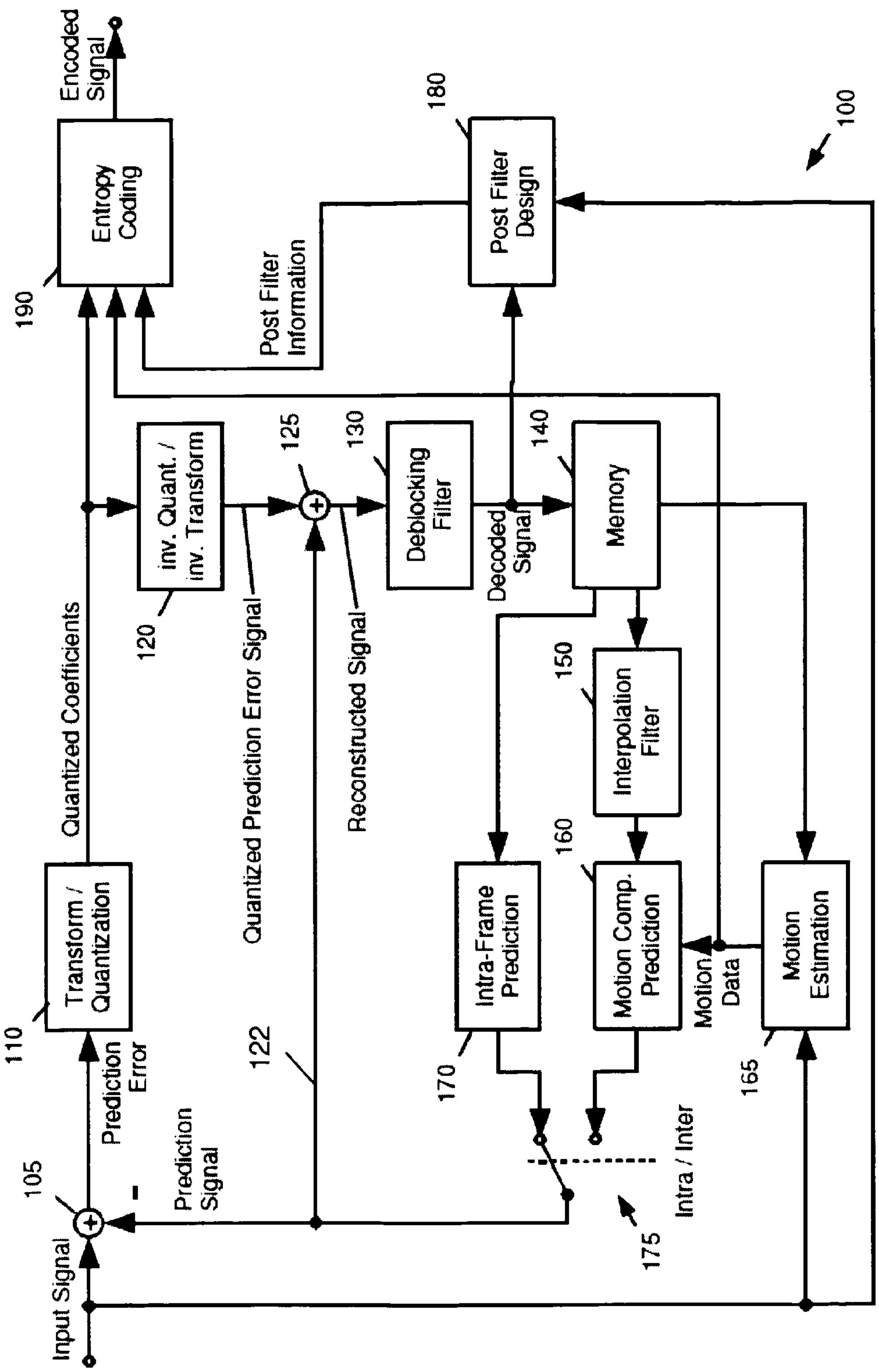
Input Signal
105
Prediction Error
110
Transform / Quantization
Quantized Coefficients
190
Entropy Coding
Encoded Signal
120
inv. Quant. / inv. Transform
Quantized Prediction Error Signal
125
Reconstructed Signal
130
Deblocking Filter
Decoded Signal
140
Memory
180
Post Filter Design
Post Filter Information
150
Interpolation Filter
160
Motion Comp. Prediction
170
Intra-Frame Prediction
165
Motion Estimation
Motion Data
Prediction Signal
122
175
Intra / Inter
100

Fig. 2

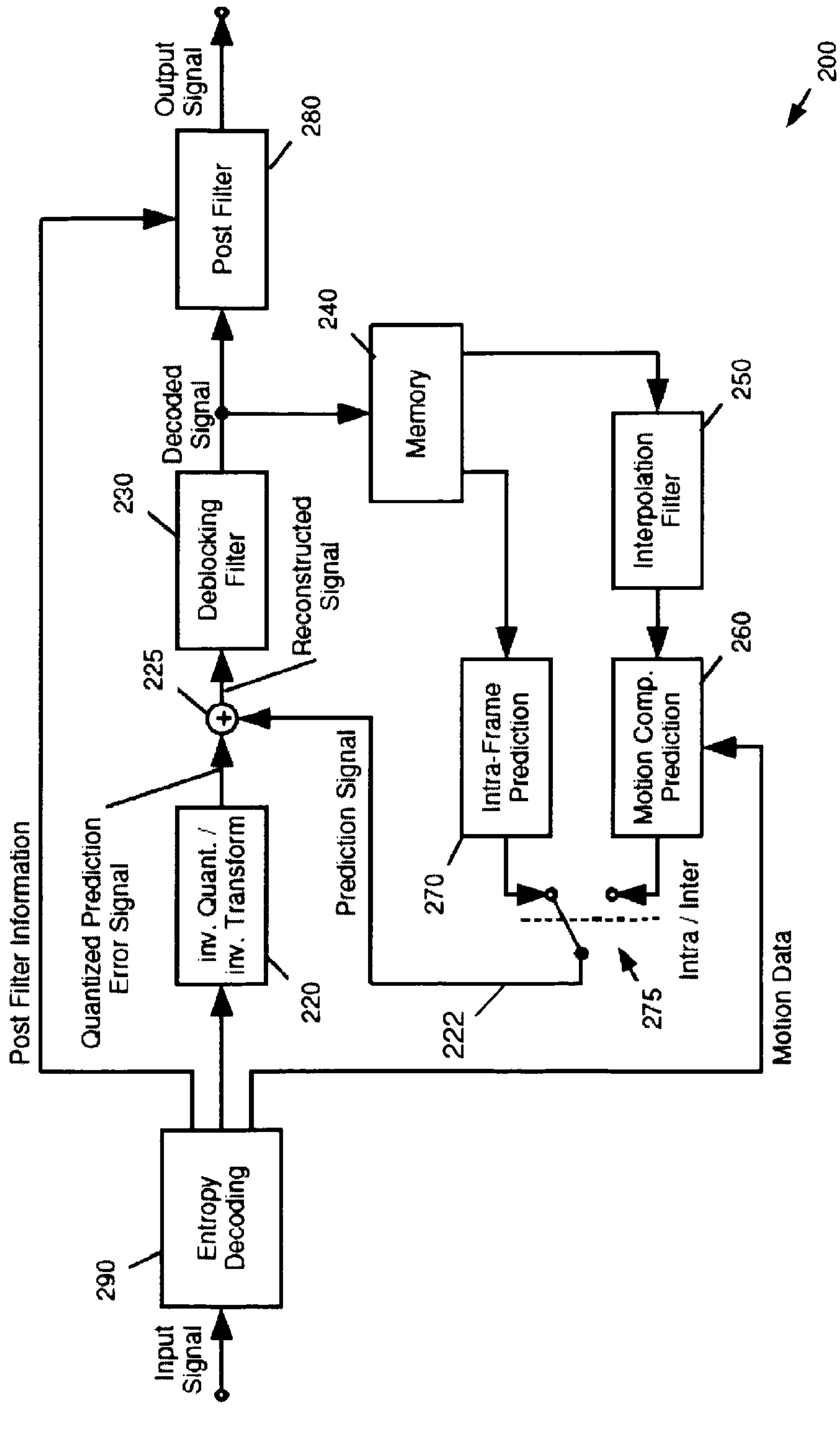
Input Signal
290
Entropy Decoding
Post Filter Information
Quantized Prediction Error Signal
inv. Quant. / inv. Transform
220
225
Reconstructed Signal
Deblocking Filter
230
Decoded Signal
Post Filter
280
Output Signal
240
Memory
250
Interpolation Filter
Intra-Frame Prediction
270
Motion Comp. Prediction
260
Prediction Signal
222
275
Intra / Inter
Motion Data
200

Fig. 3

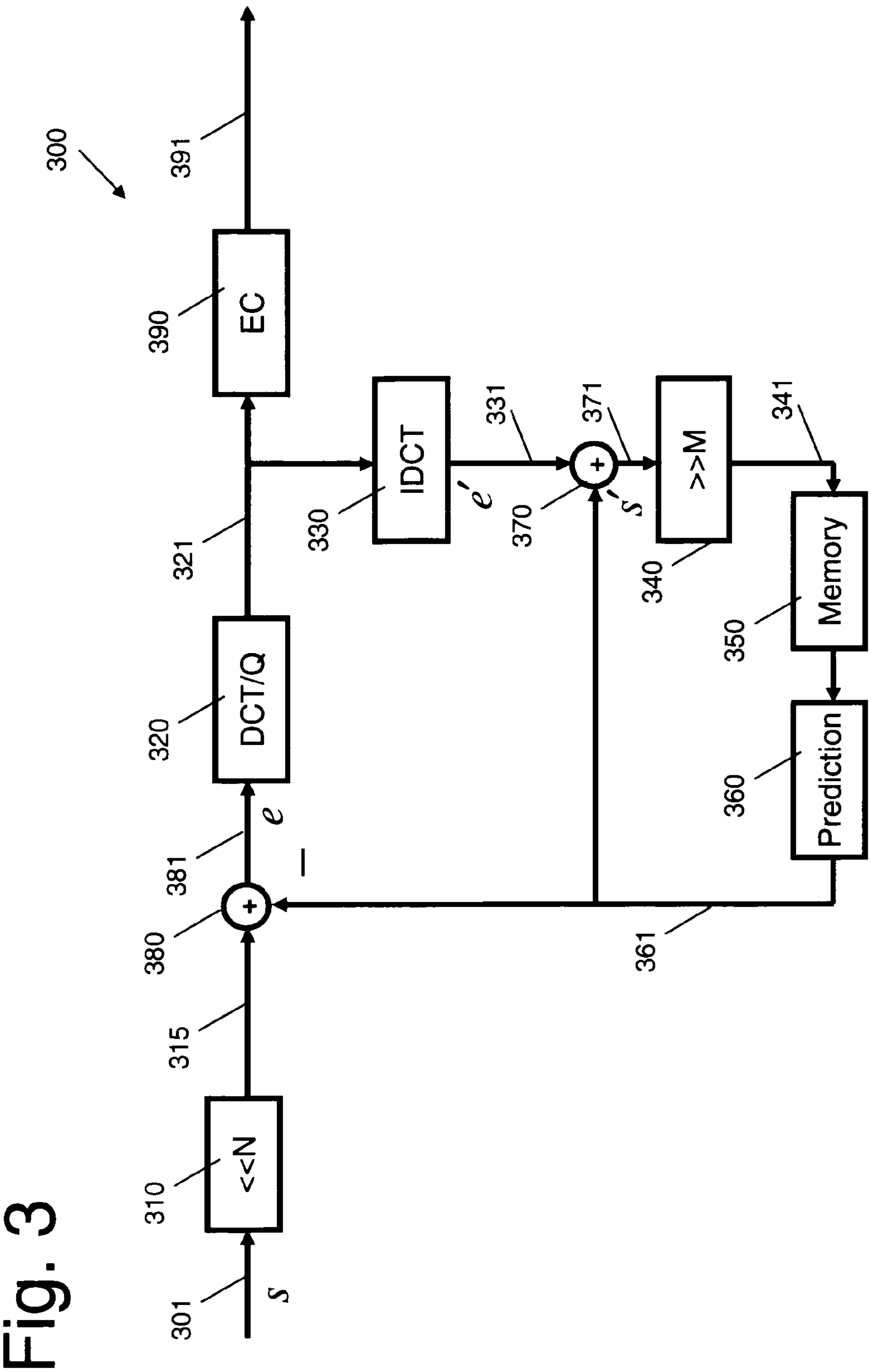
300
301
s
310
<<N
315
380
+
381
e
–
320
DCT/Q
321
330
IDCT
e'
331
370
+
s'
371
340
>>M
341
350
Memory
360
Prediction
361
390
EC
391

Fig. 4A

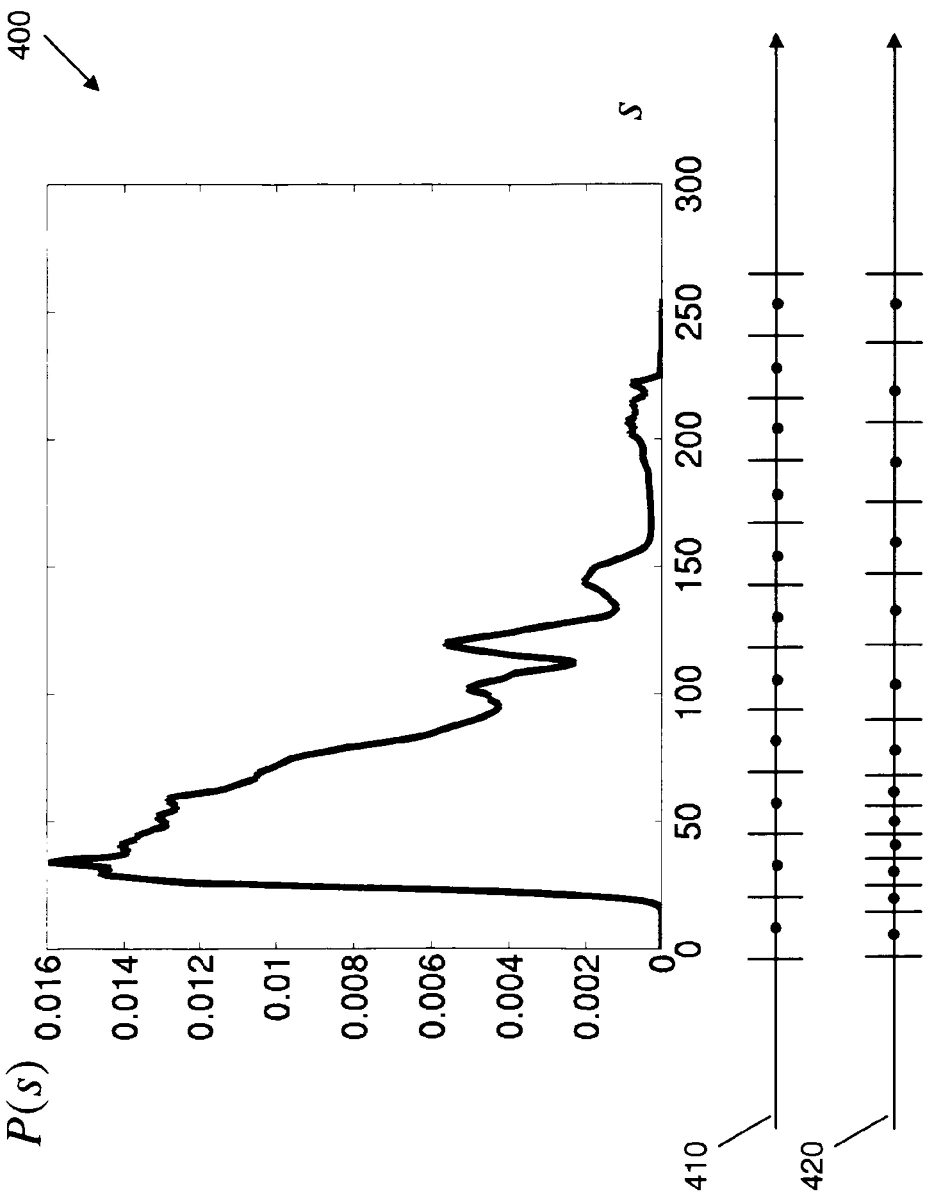
400
P(s)
0.016
0.014
0.012
0.01
0.008
0.006
0.004
0.002
0
0
50
100
150
200
250
300
s
410
420

Fig. 4B

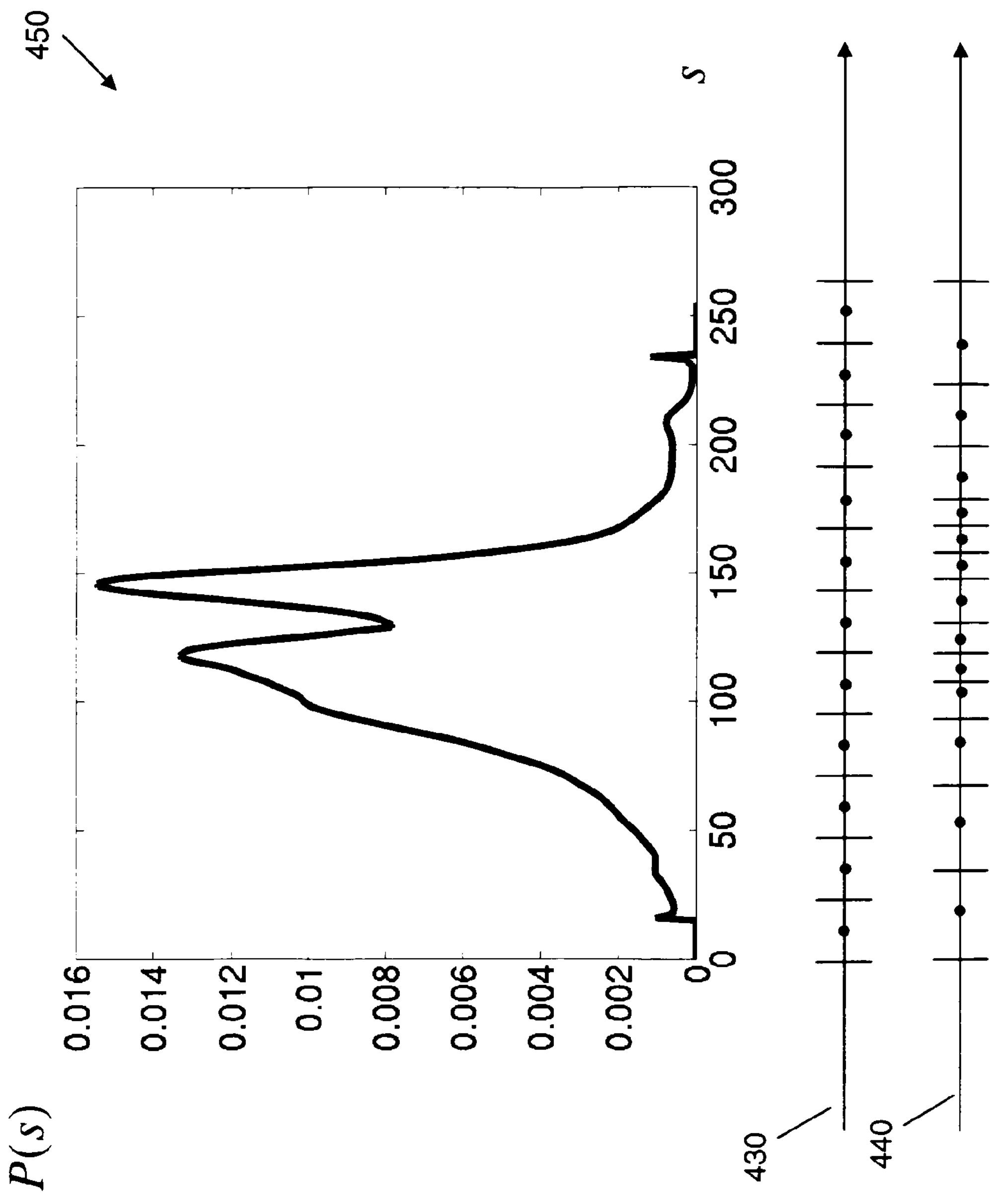
450
P(s)
0.016
0.014
0.012
0.01
0.008
0.006
0.004
0.002
0
0
50
100
150
200
250
300
s
430
440

Fig. 5

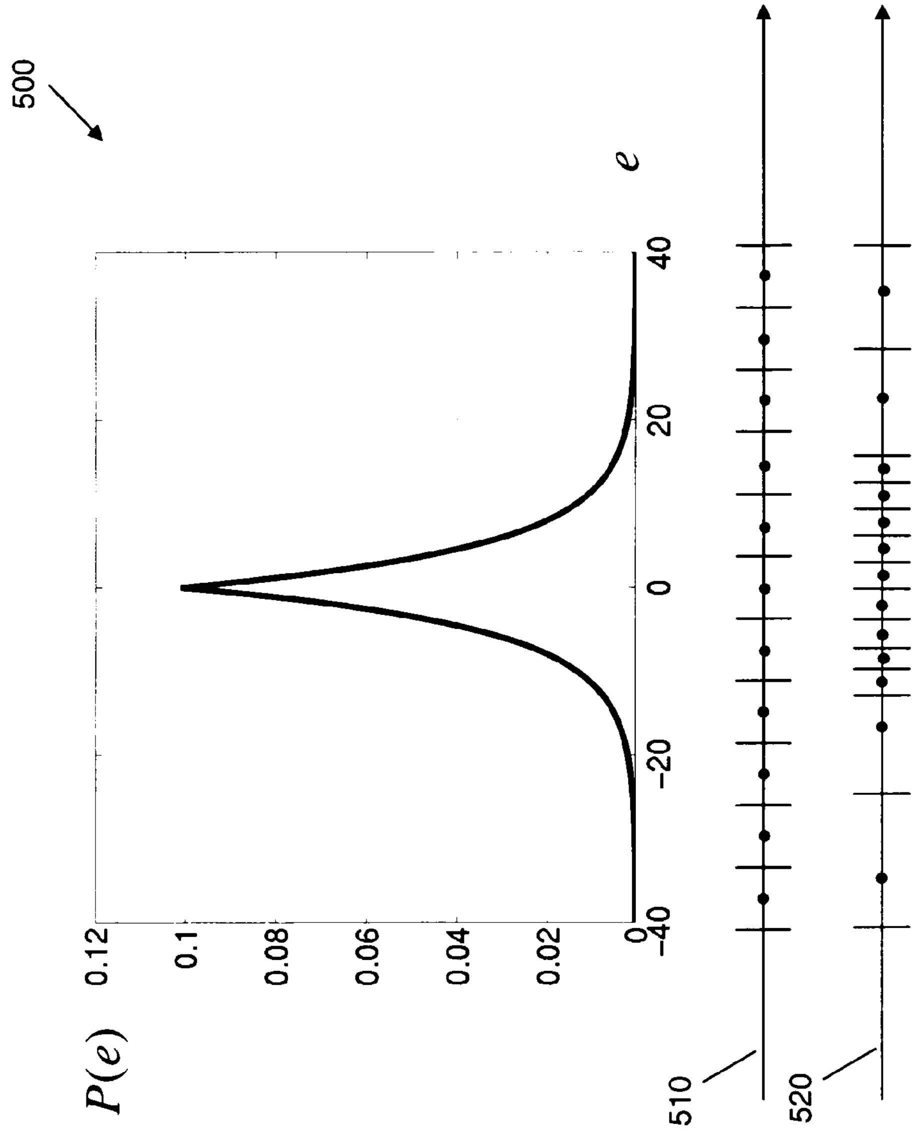

Fig. 6A

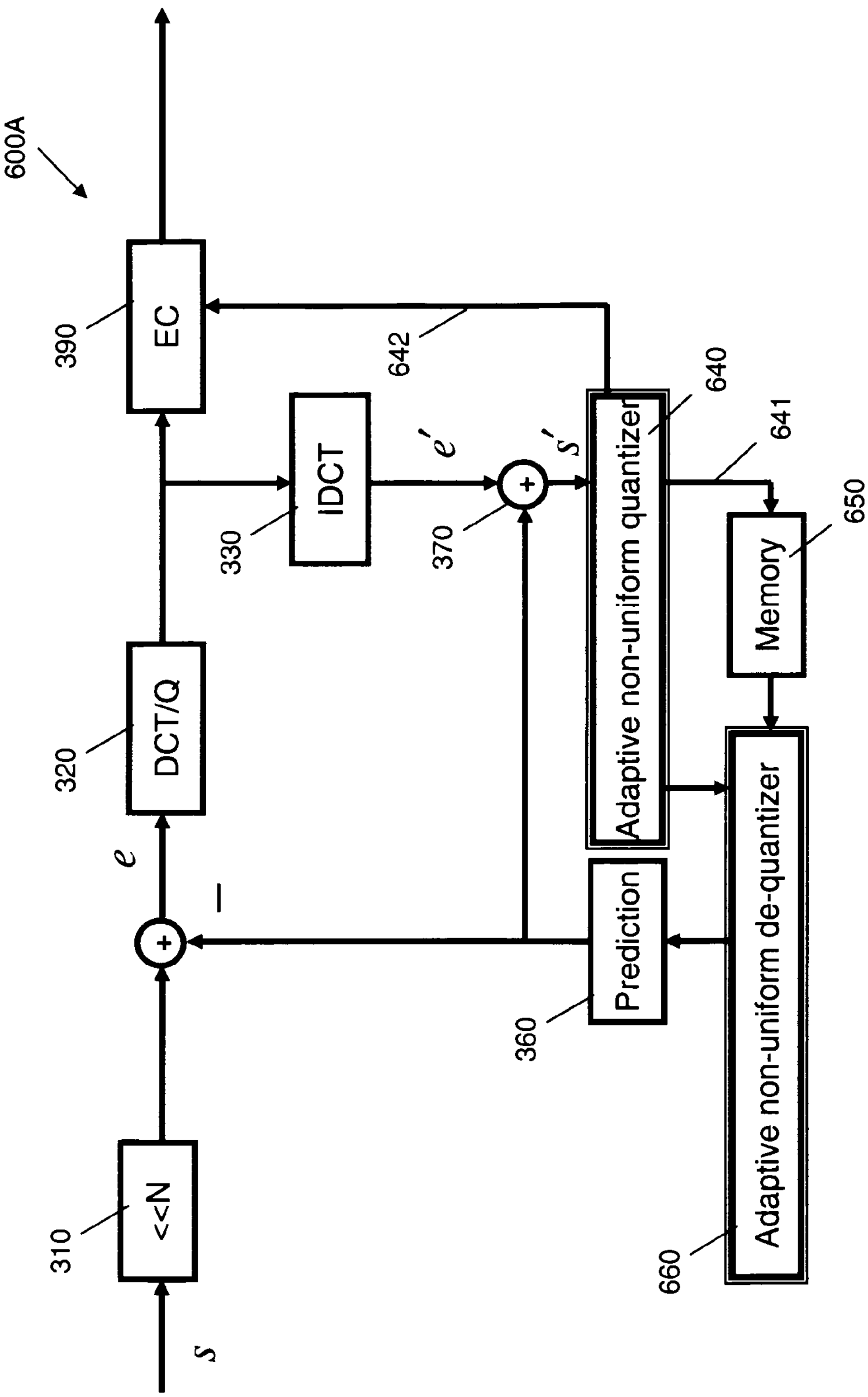
600A
s
310
<<N
e
320
DCT/Q
330
IDCT
390
EC
642
e'
370
s'
640
Adaptive non-uniform quantizer
641
650
Memory
360
Prediction
660
Adaptive non-uniform de-quantizer

Fig. 6B

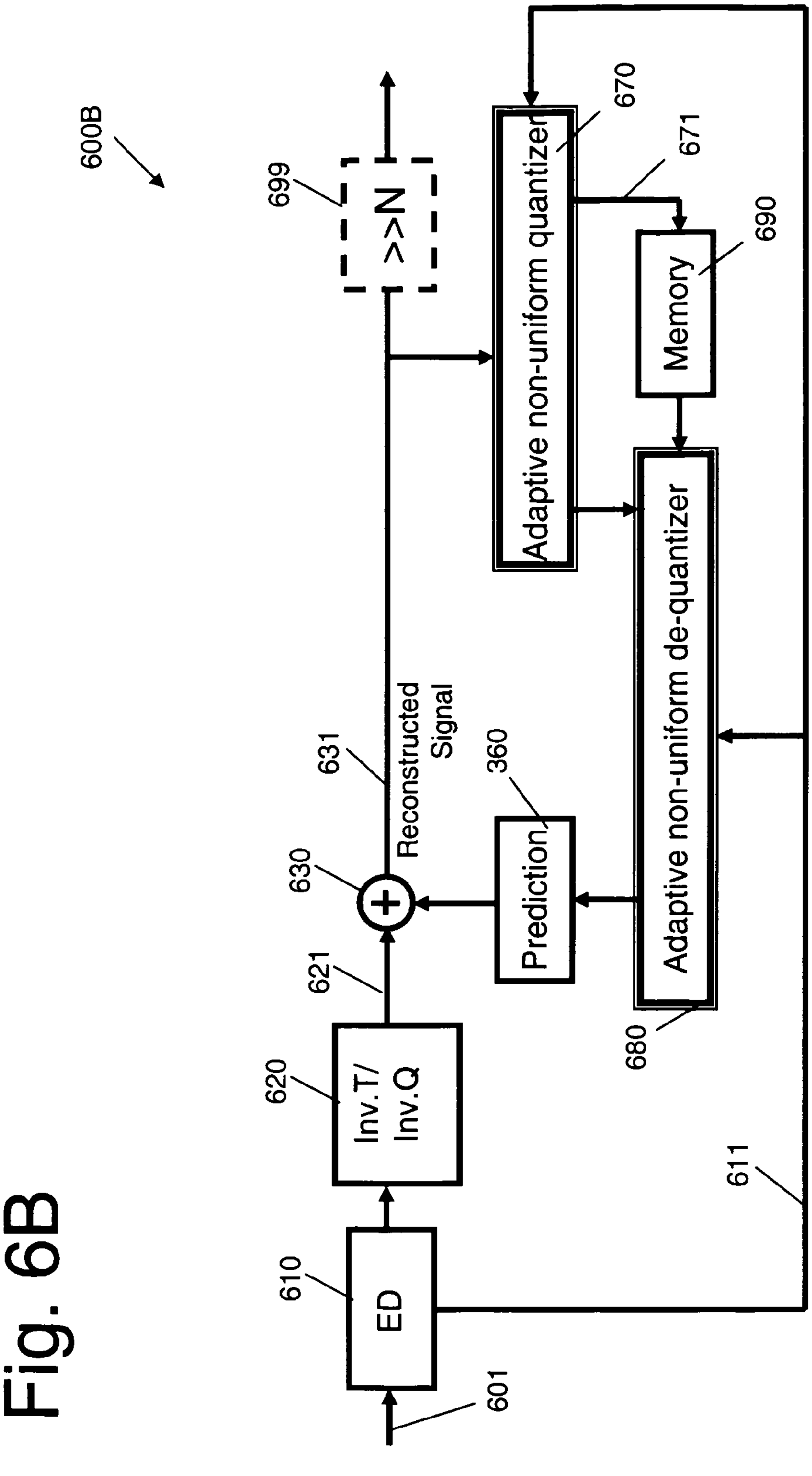
600B
601
610
ED
620
Inv.T/
Inv.Q
621
630
631
Reconstructed
Signal
699
>>N
360
Prediction
670
Adaptive non-uniform quantizer
671
690
Memory
680
Adaptive non-uniform de-quantizer
611

Fig. 6C

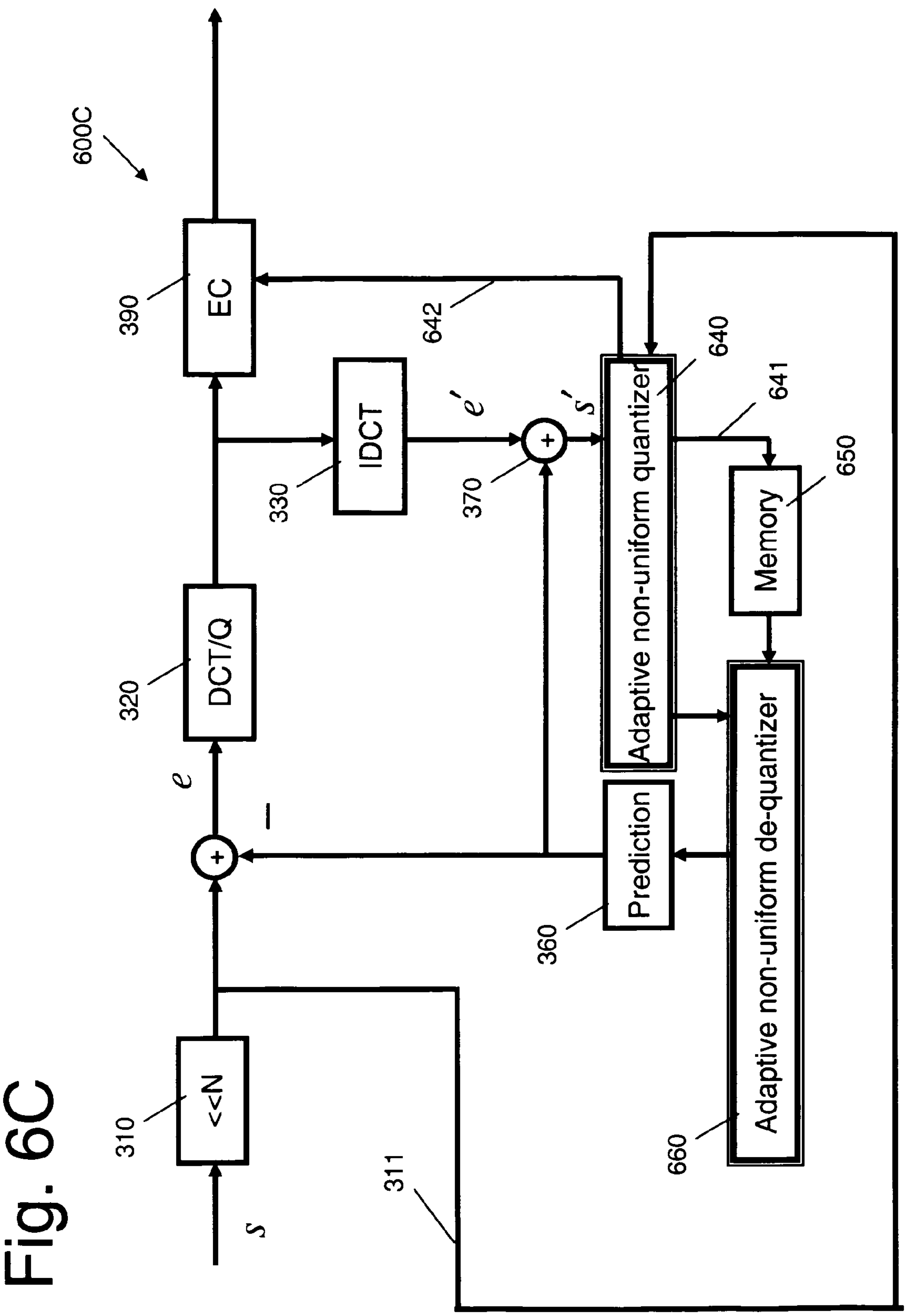
600C
s
<<N
310
311
e
DCT/Q
320
IDCT
330
e'
370
s'
EC
390
642
Adaptive non-uniform quantizer
640
641
Memory
650
Adaptive non-uniform de-quantizer
660
Prediction
360

Fig. 6D

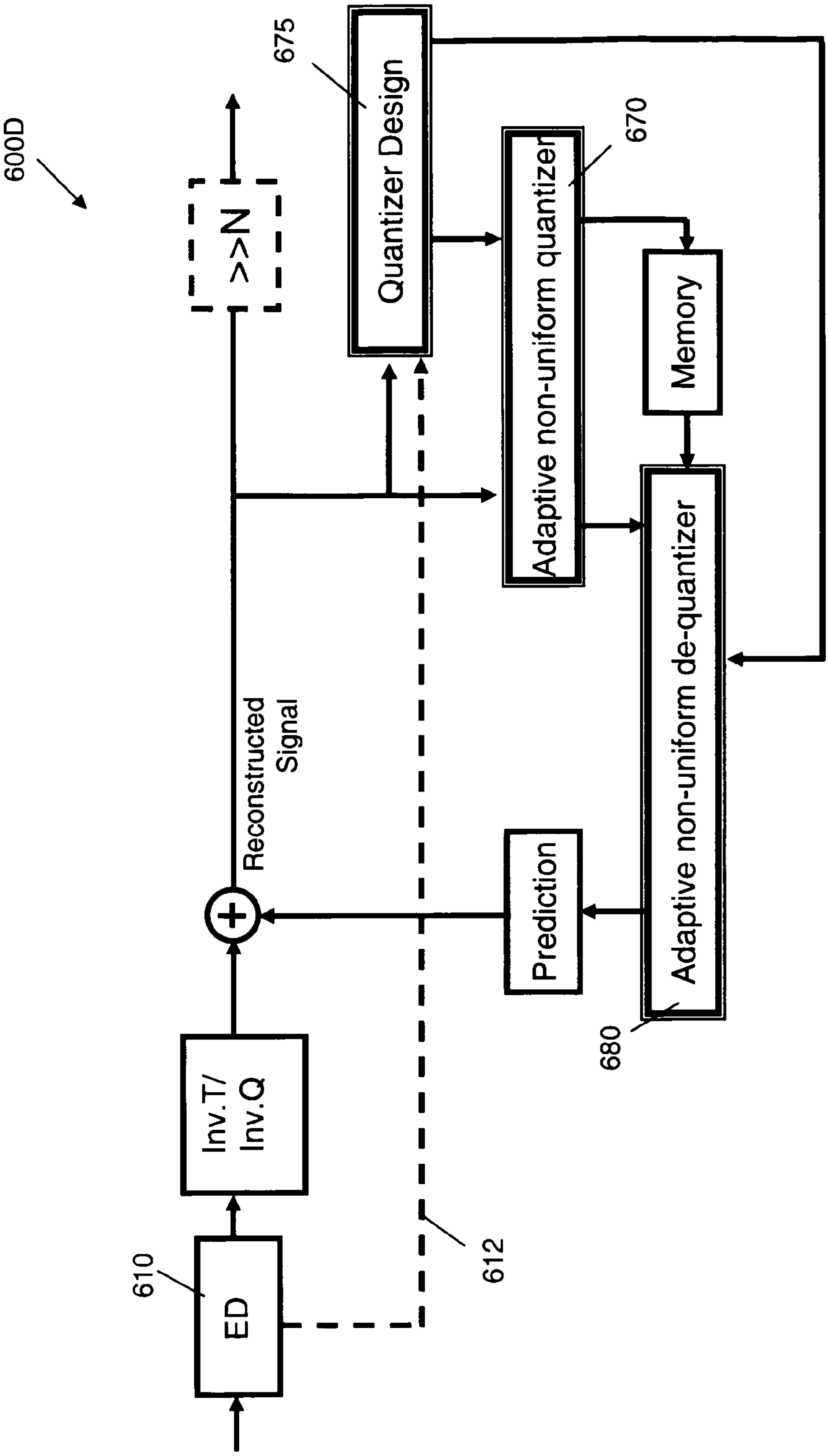
600D
ED
610
612
Inv.T/
Inv.Q
Reconstructed
Signal
>>N
Quantizer Design
675
Adaptive non-uniform quantizer
670
Memory
Adaptive non-uniform de-quantizer
680
Prediction

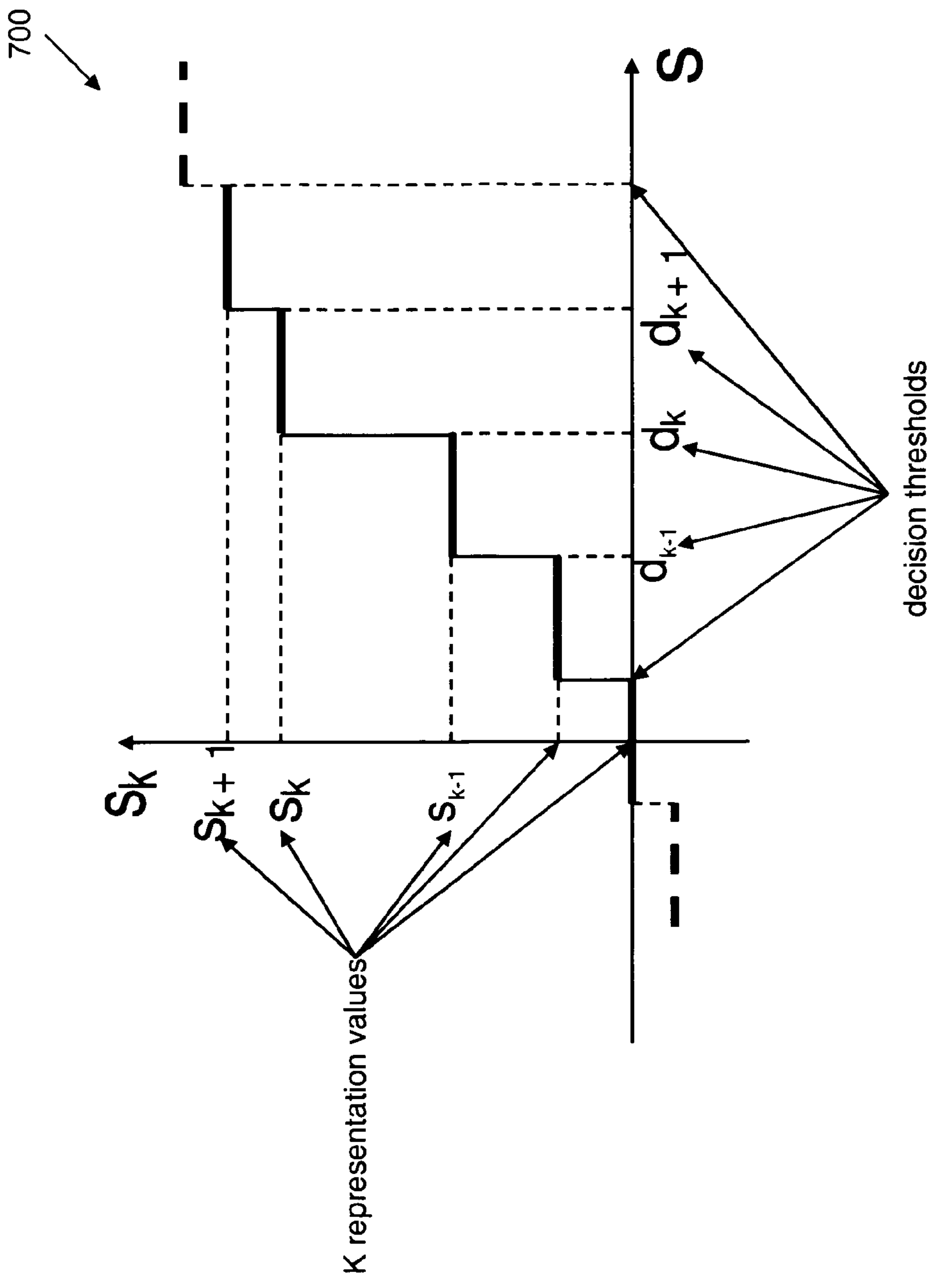
700
S
Sk
sk + 1
sk
sk-1
dk-1
dk
dk + 1
decision thresholds
K representation values

Fig. 7

Fig. 8

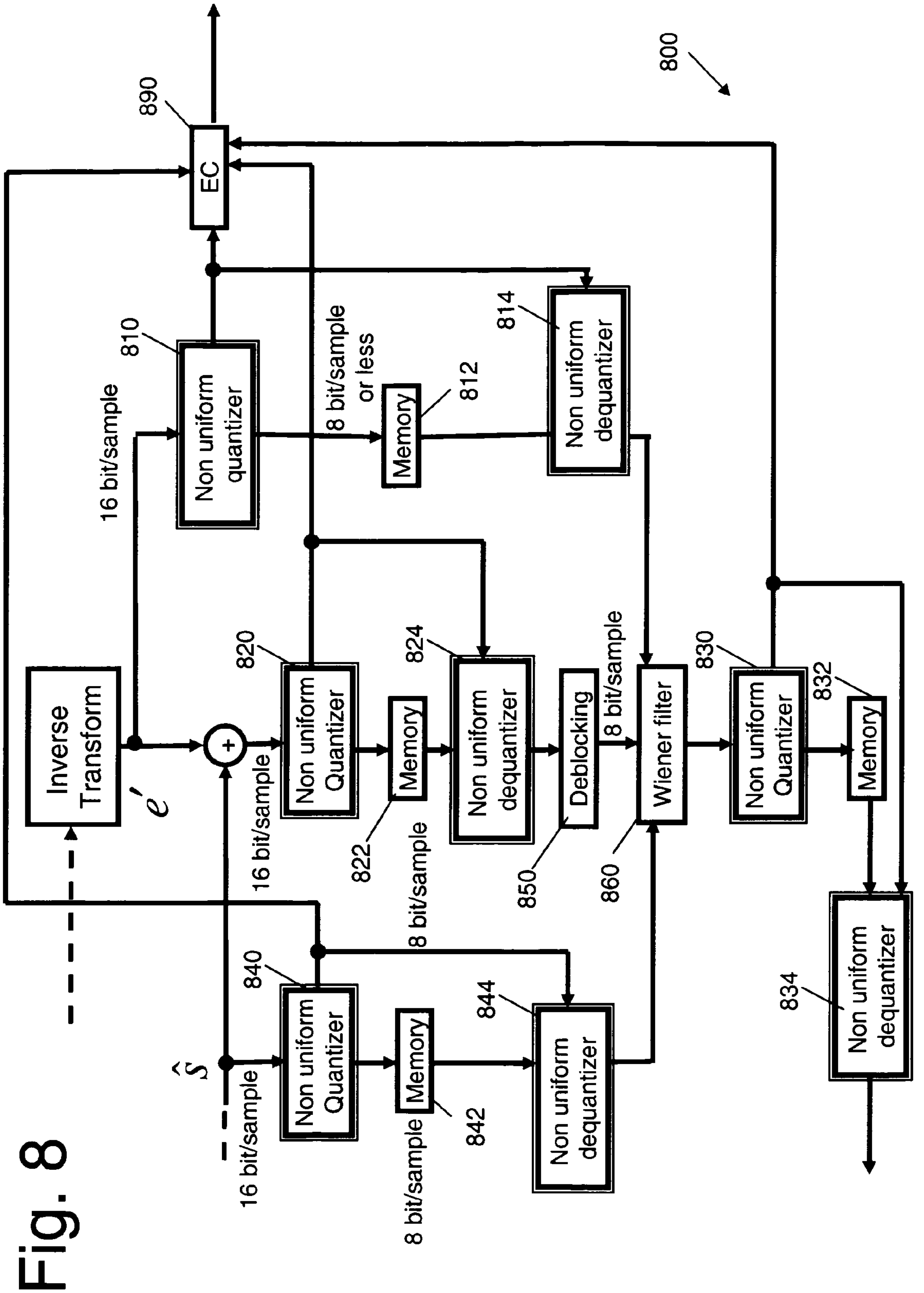
800
890
EC
810
Non uniform quantizer
16 bit/sample
8 bit/sample or less
Memory
812
814
Non uniform dequantizer
Inverse Transform
e′
+
820
Non uniform Quantizer
16 bit/sample
Memory
822
824
Non uniform dequantizer
8 bit/sample
Deblocking
850
8 bit/sample
Wiener filter
860
830
Non uniform Quantizer
832
Memory
834
Non uniform dequantizer
ŝ
16 bit/sample
840
Non uniform Quantizer
Memory
842
8 bit/sample
844
Non uniform dequantizer

Fig. 9

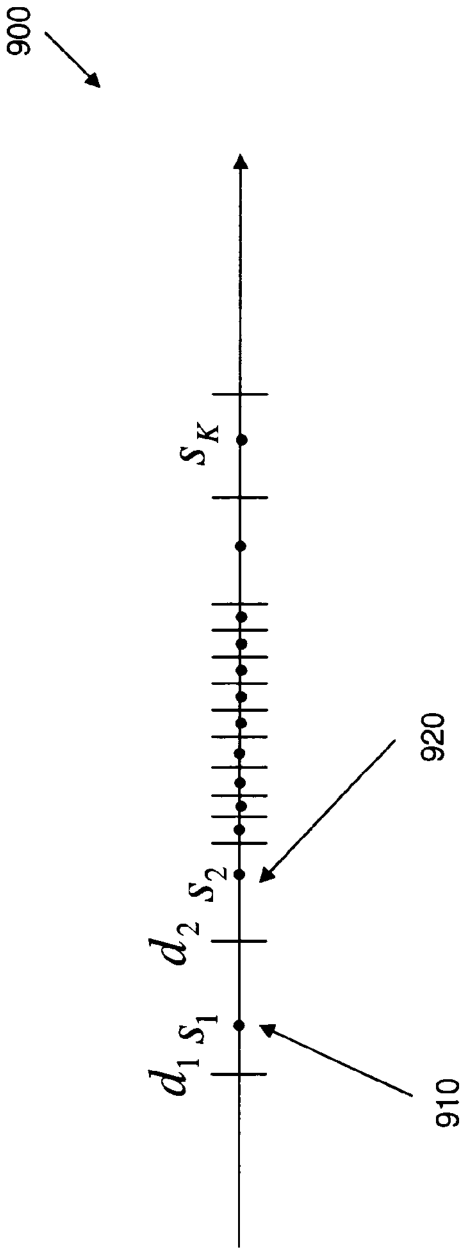
900
$d_1$
$s_1$
$d_2$
$s_2$
$s_K$
910
920

Fig. 12

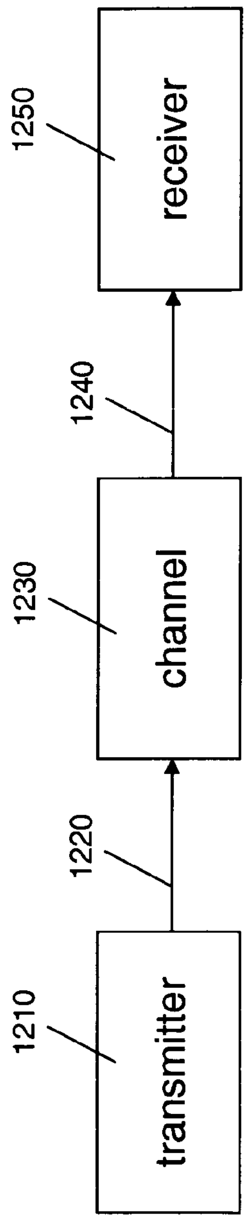
1210
transmitter
1220
1230
channel
1240
1250
receiver

Fig. 10

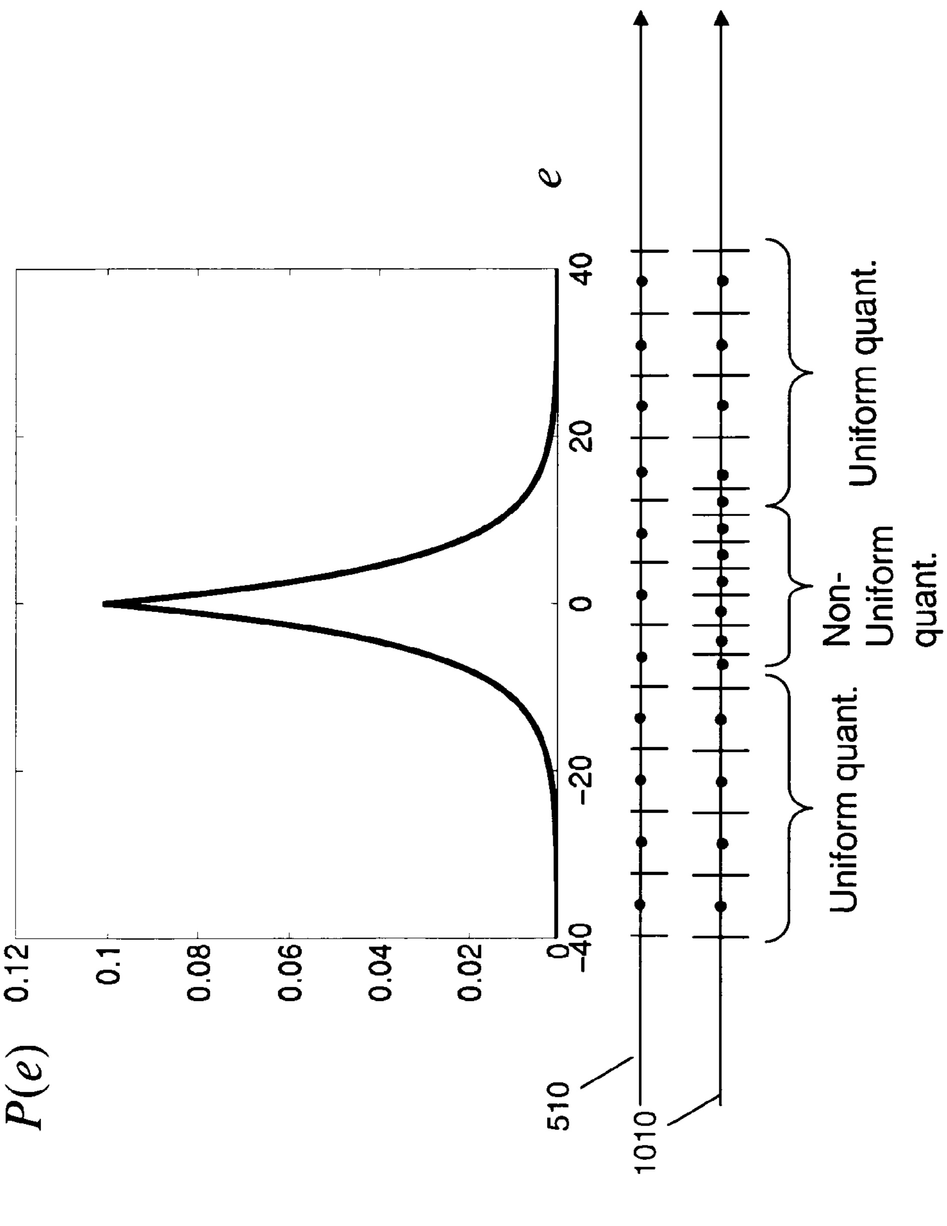
P(e)
0.12
0.1
0.08
0.06
0.04
0.02
0
-40
-20
0
20
40
e
510
1010
Uniform quant.
Non-
Uniform
quant.
Uniform quant.

Fig. 11

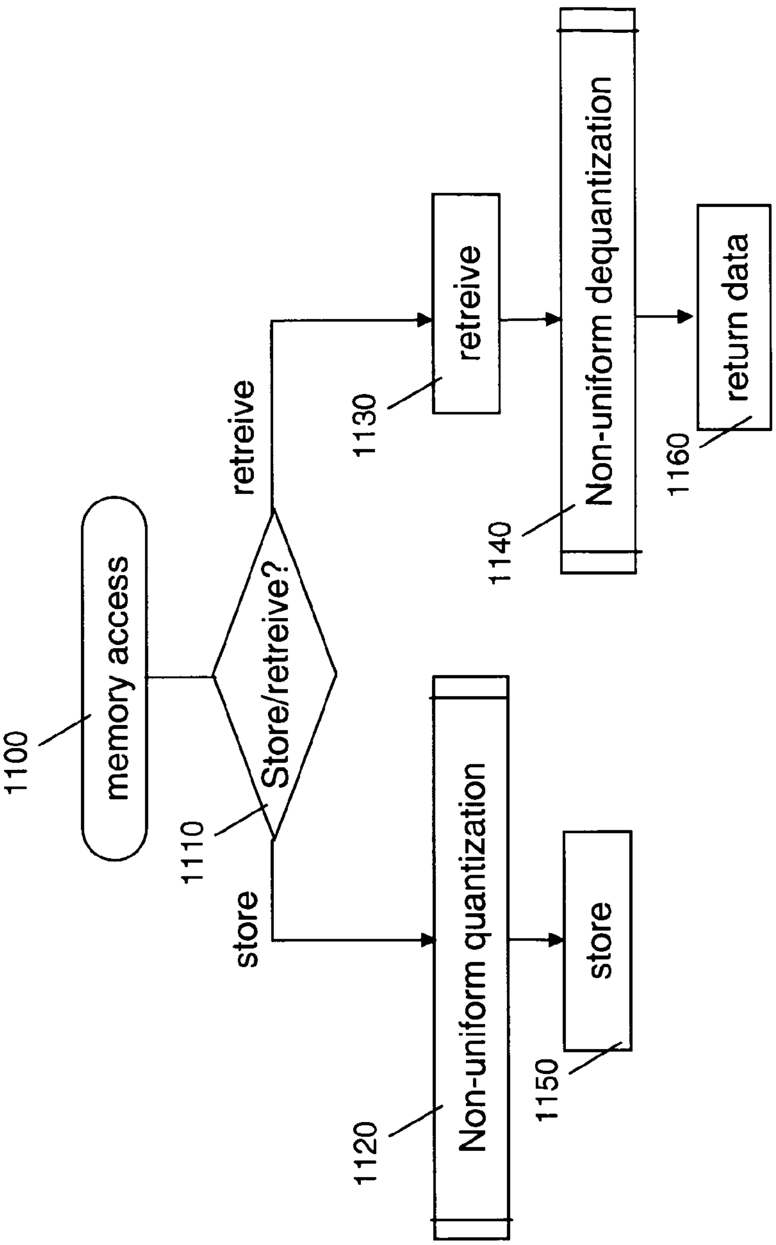
1100
memory access
1110
Store/retreive?
store
retreive
1120
Non-uniform quantization
1150
store
1130
retreive
1140
Non-uniform dequantization
1160
return data

Fig. 13

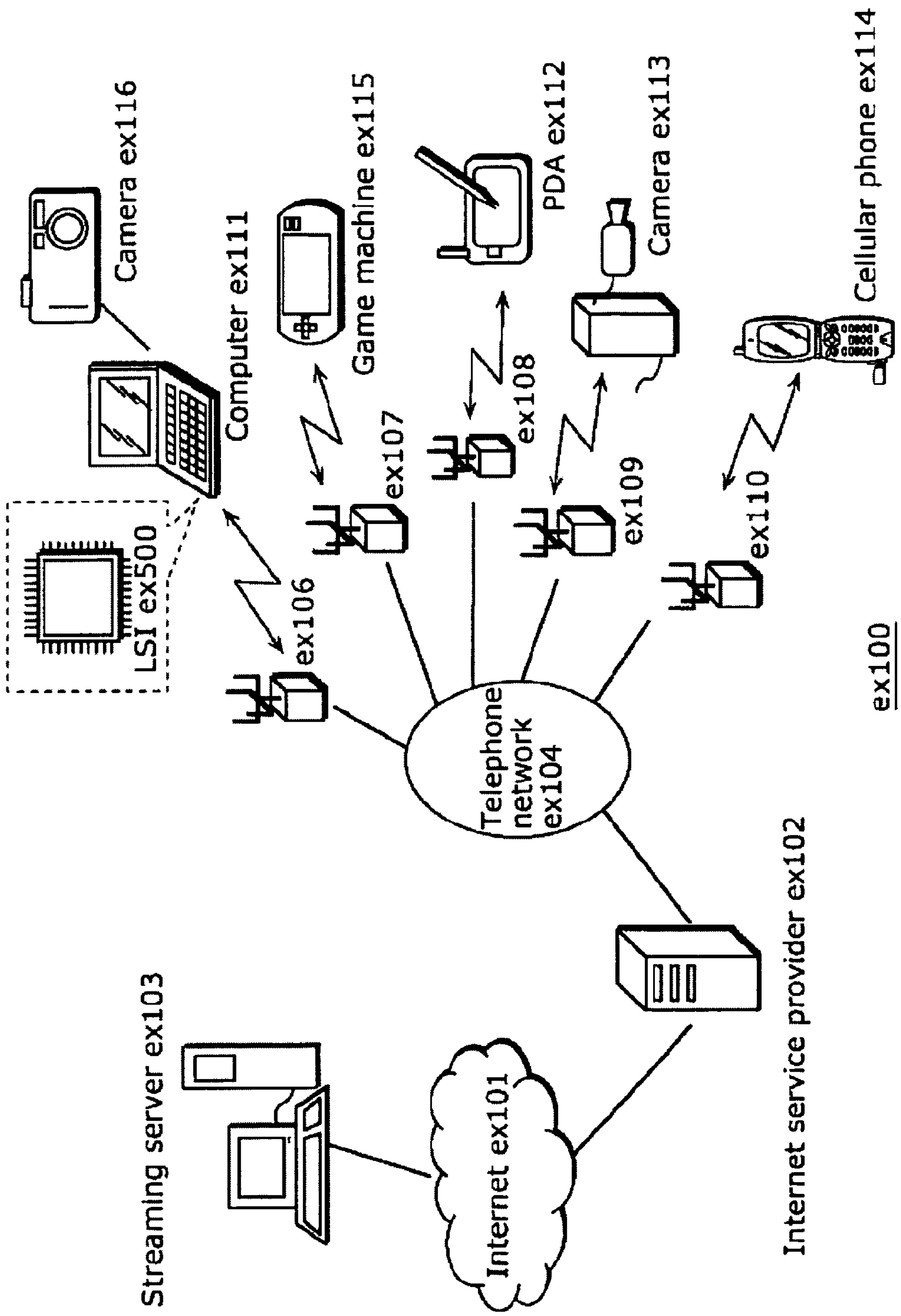
Camera ex116
Computer ex111
LSI ex500
Game machine ex115
PDA ex112
Camera ex113
Cellular phone ex114
ex106
ex107
ex108
ex109
ex110
Telephone network ex104
ex100
Streaming server ex103
Internet ex101
Internet service provider ex102

Fig. 14

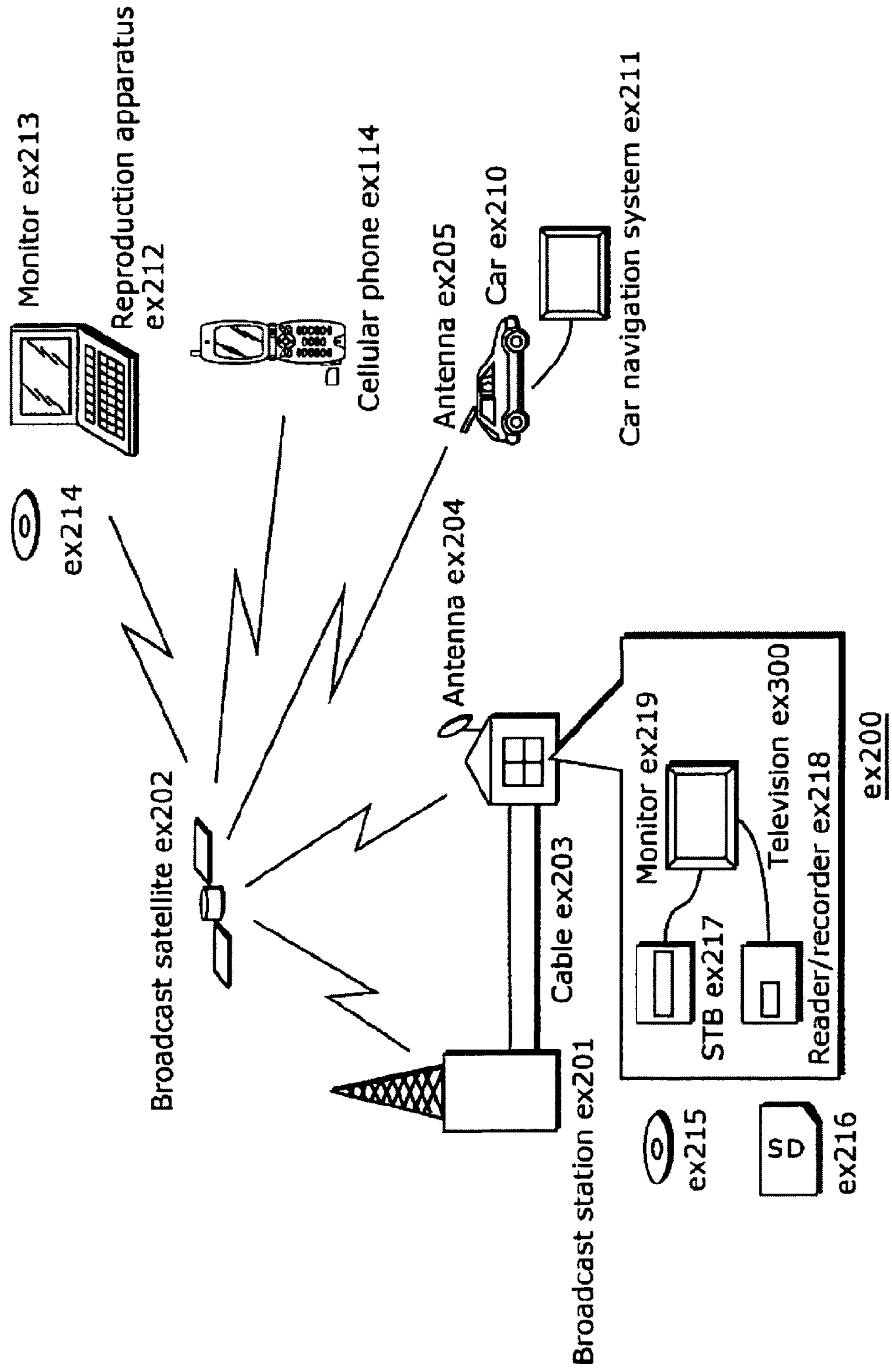
Monitor ex213
Reproduction apparatus ex212
ex214
Cellular phone ex114
Antenna ex205
Car ex210
Car navigation system ex211
Broadcast satellite ex202
Antenna ex204
Cable ex203
Monitor ex219
Television ex300
STB ex217
Reader/recorder ex218
ex200
Broadcast station ex201
ex215
SD
ex216

Fig. 15

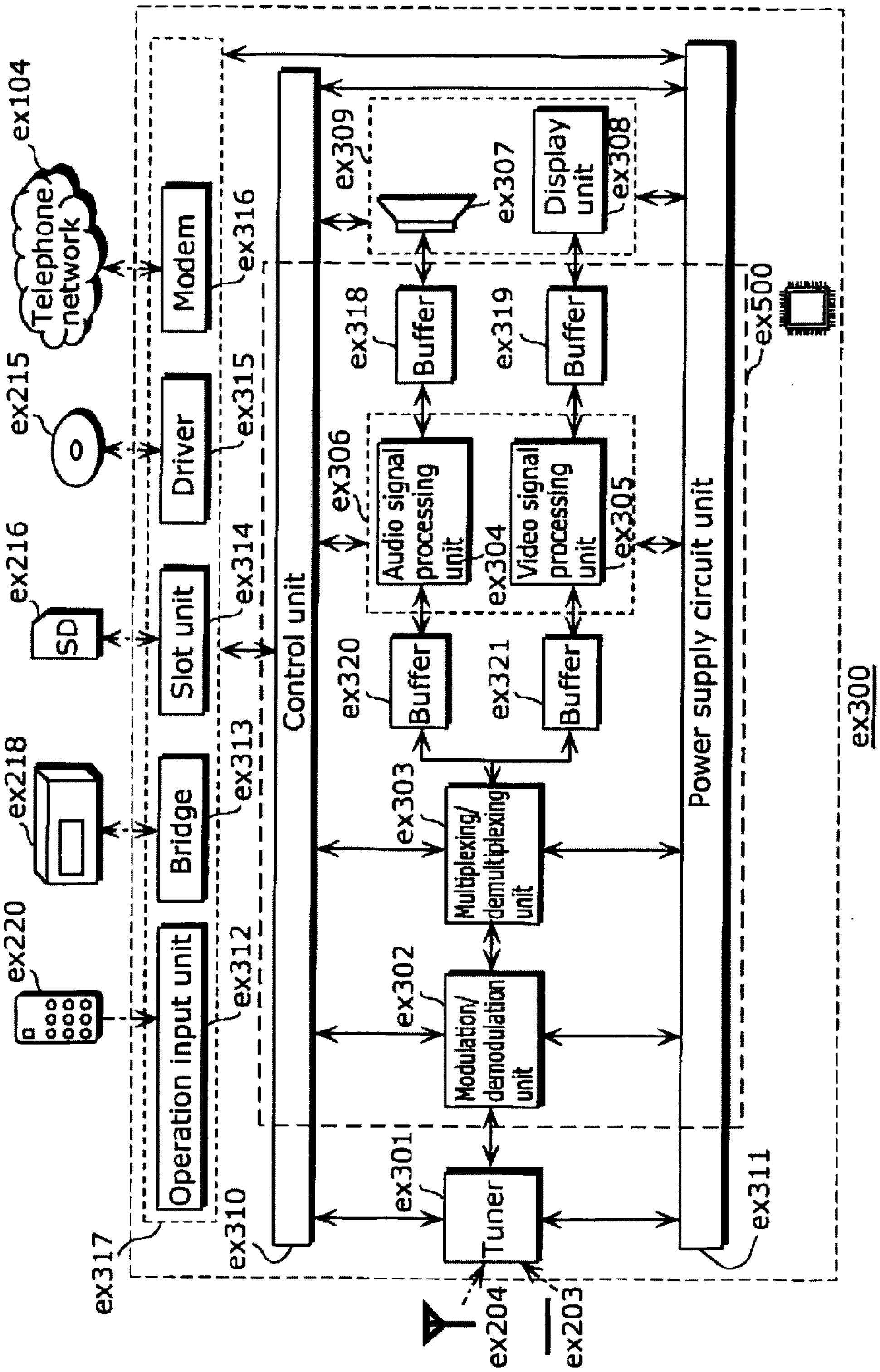
ex104
Telephone network
ex215
ex216
SD
ex218
ex220
Operation input unit
ex312
Bridge
ex313
Slot unit
ex314
Driver
ex315
Modem
ex316
ex317
ex310
Control unit
ex301
Tuner
ex302
Modulation/demodulation unit
ex303
Multiplexing/demultiplexing unit
ex320
Buffer
ex321
Buffer
ex306
Audio signal processing unit
ex304
Video signal processing unit
ex305
ex318
Buffer
ex319
Buffer
ex309
ex307
Display unit
ex308
ex500
Power supply circuit unit
ex311
ex300
ex204
ex203

Fig. 16

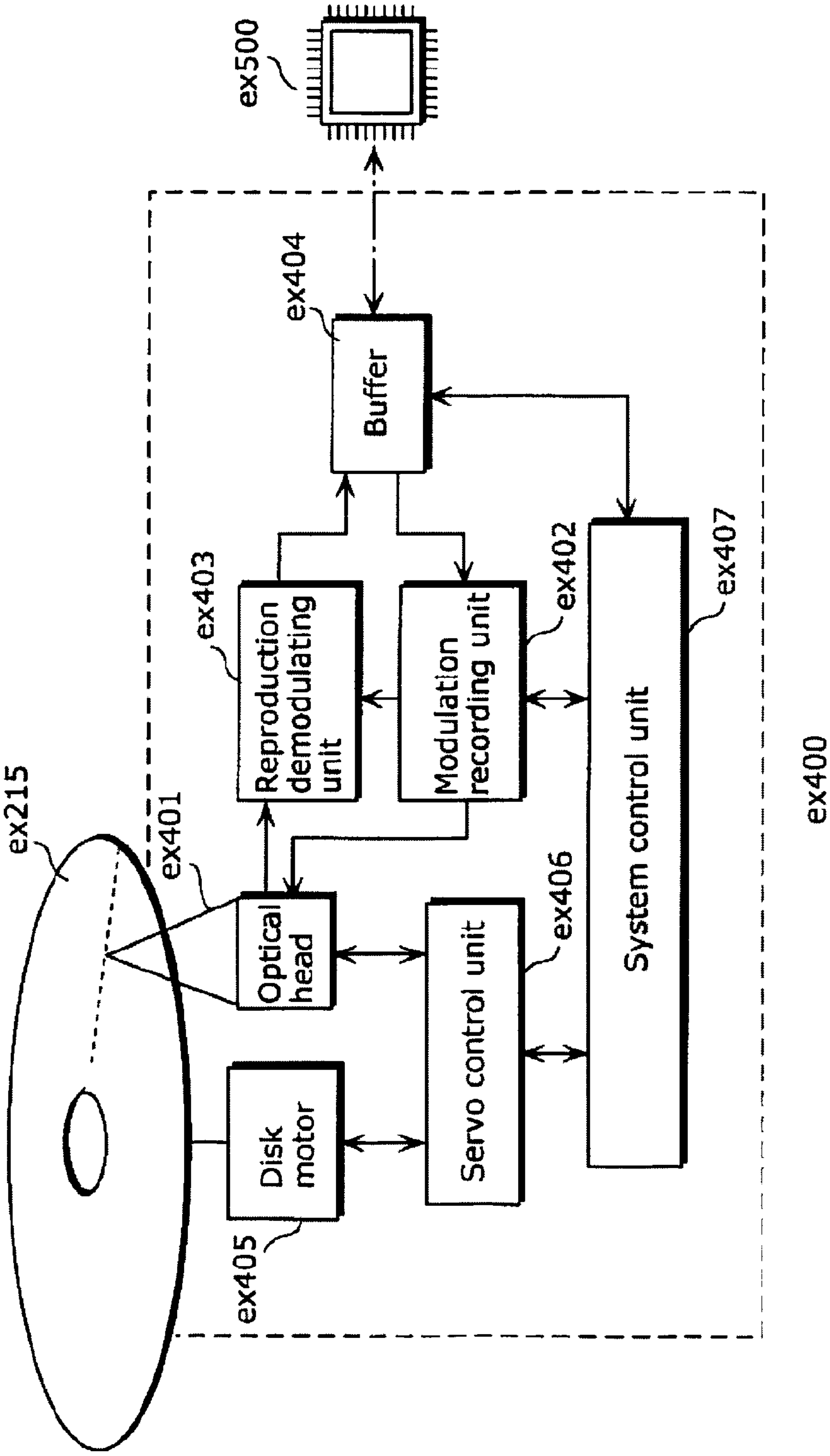
ex500
ex404
Buffer
ex403
Reproduction demodulating unit
ex402
Modulation recording unit
ex407
System control unit
ex215
ex401
Optical head
ex406
Servo control unit
Disk motor
ex405
ex400

Fig. 17

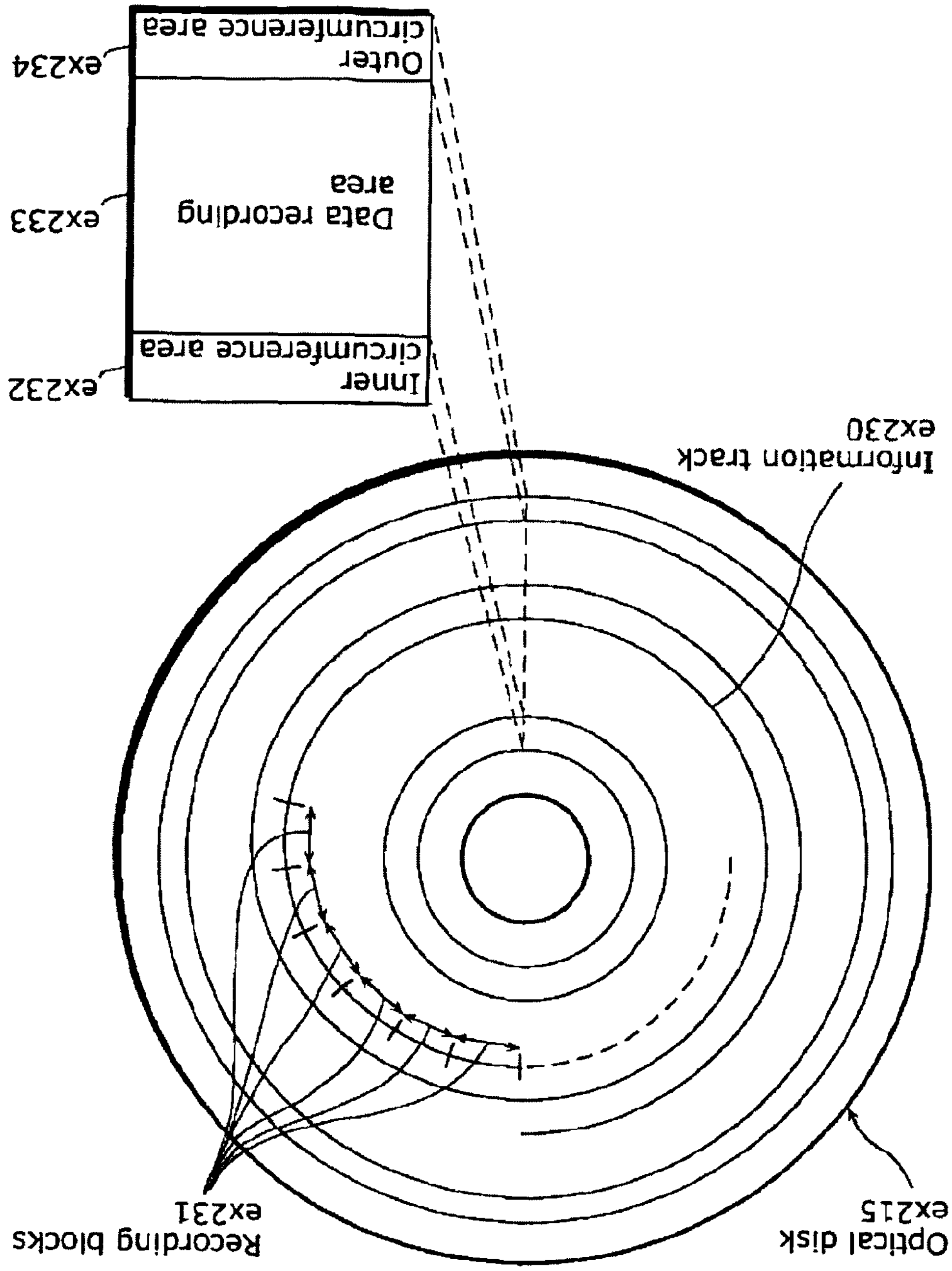
Outer circumference area
Data recording area
Inner circumference area
ex234
ex233
ex232
Information track
ex230
Recording blocks
ex231
Optical disk
ex215

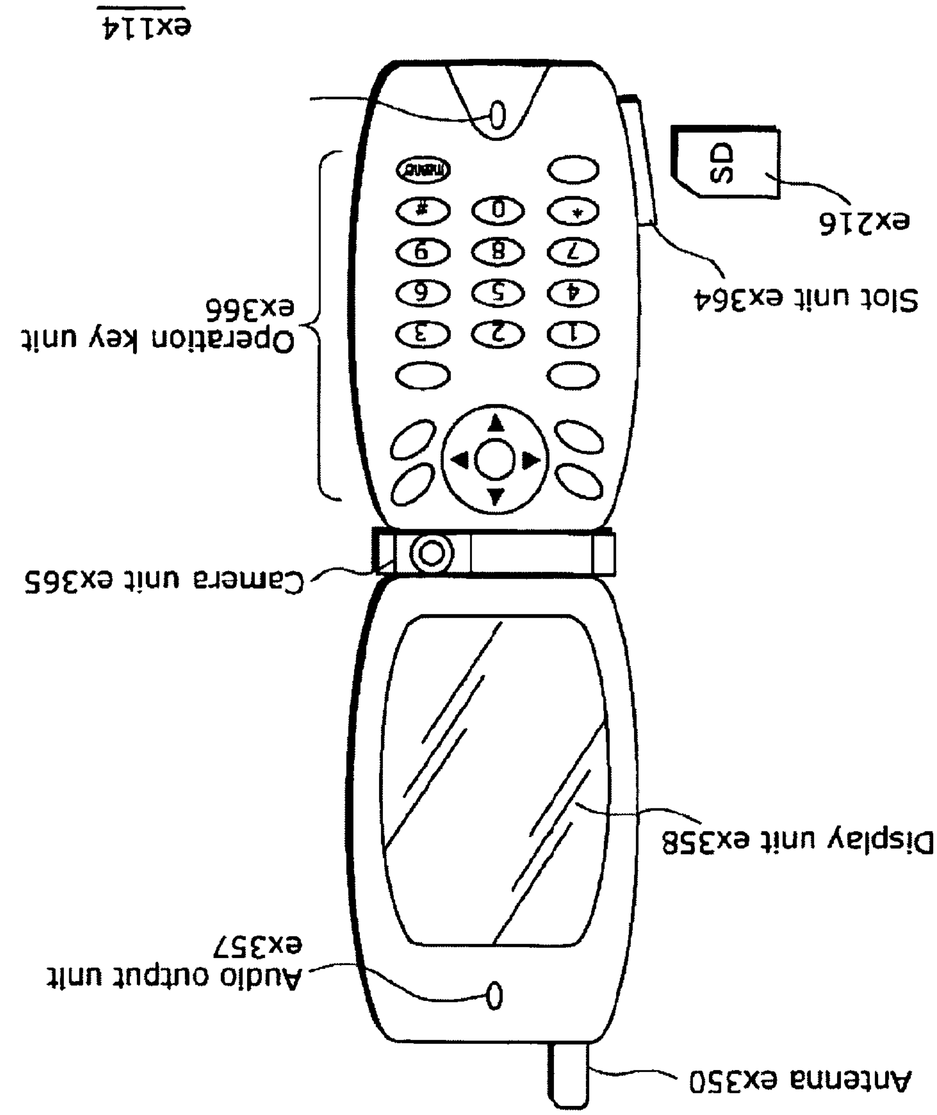
ex114
Operation key unit ex366
Slot unit ex364
ex216
SD
Camera unit ex365
Display unit ex358
Audio output unit ex357
Antenna ex350

Fig. 18A

Fig. 18B

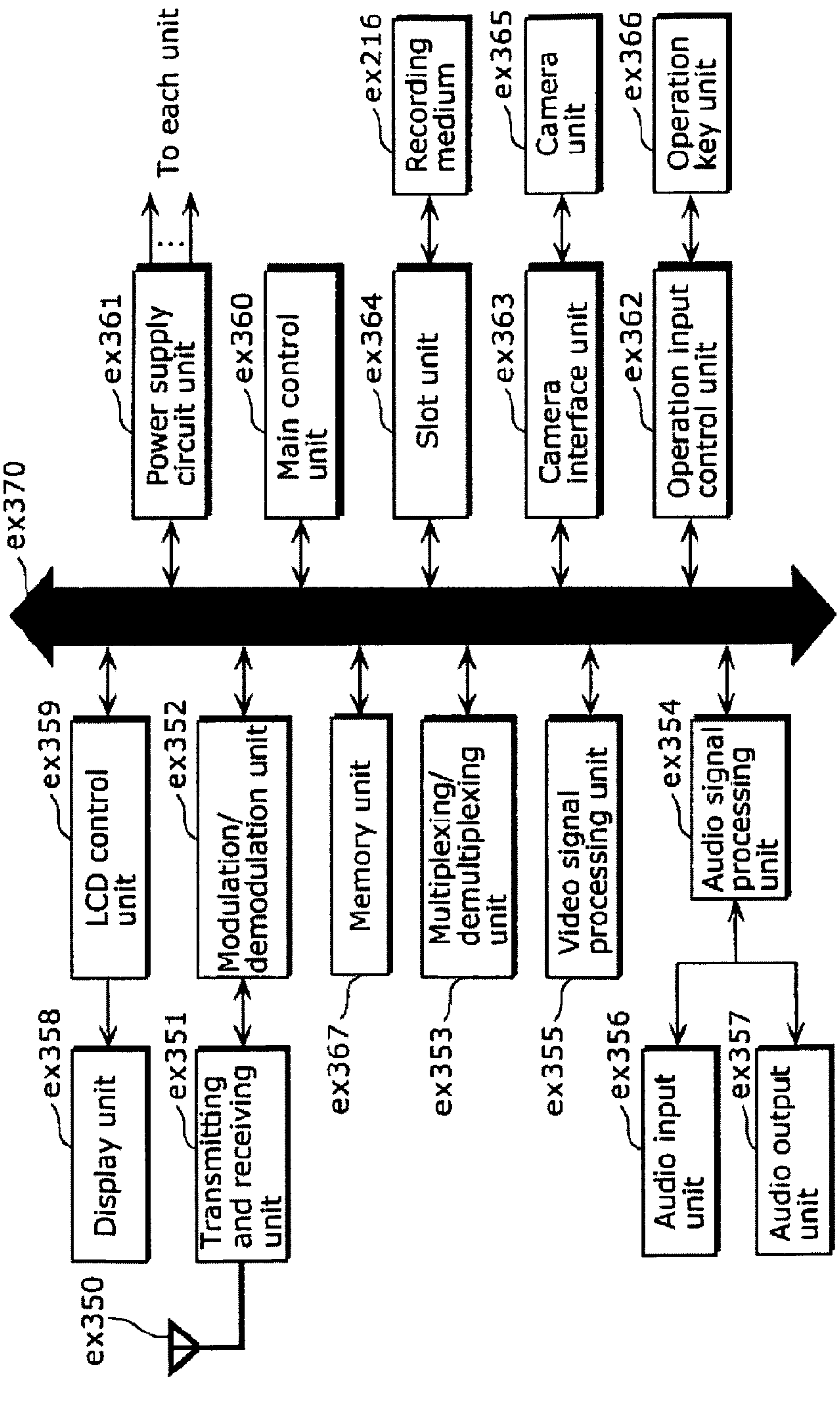
ex370
ex361
Power supply circuit unit
To each unit
ex360
Main control unit
ex364
Slot unit
ex216
Recording medium
ex363
Camera interface unit
ex365
Camera unit
ex362
Operation input control unit
ex366
Operation key unit
ex359
LCD control unit
ex358
Display unit
ex350
ex352
Modulation/demodulation unit
ex351
Transmitting and receiving unit
Memory unit
ex367
Multiplexing/demultiplexing unit
ex353
Video signal processing unit
ex355
ex354
Audio signal processing unit
ex356
Audio input unit
ex357
Audio output unit

Fig. 19

| |
|---|
| |
| Video stream (PID=0x1011 Primary video) |
| |
| Audio stream (PID=0x1100) |
| |
| Audio stream (PID=0x1101) |
| |
| Presentation graphics stream (PID=0x1200) |
| |
| Presentation graphics stream (PID=0x1201) |
| |
| Interactive graphics stream (PID=0x1400) |
| |
| Video stream (PID=0x1B00 Secondary video) |
| |
| Video stream (PID=0x1B01 Secondary video) |
| |

Fig. 20

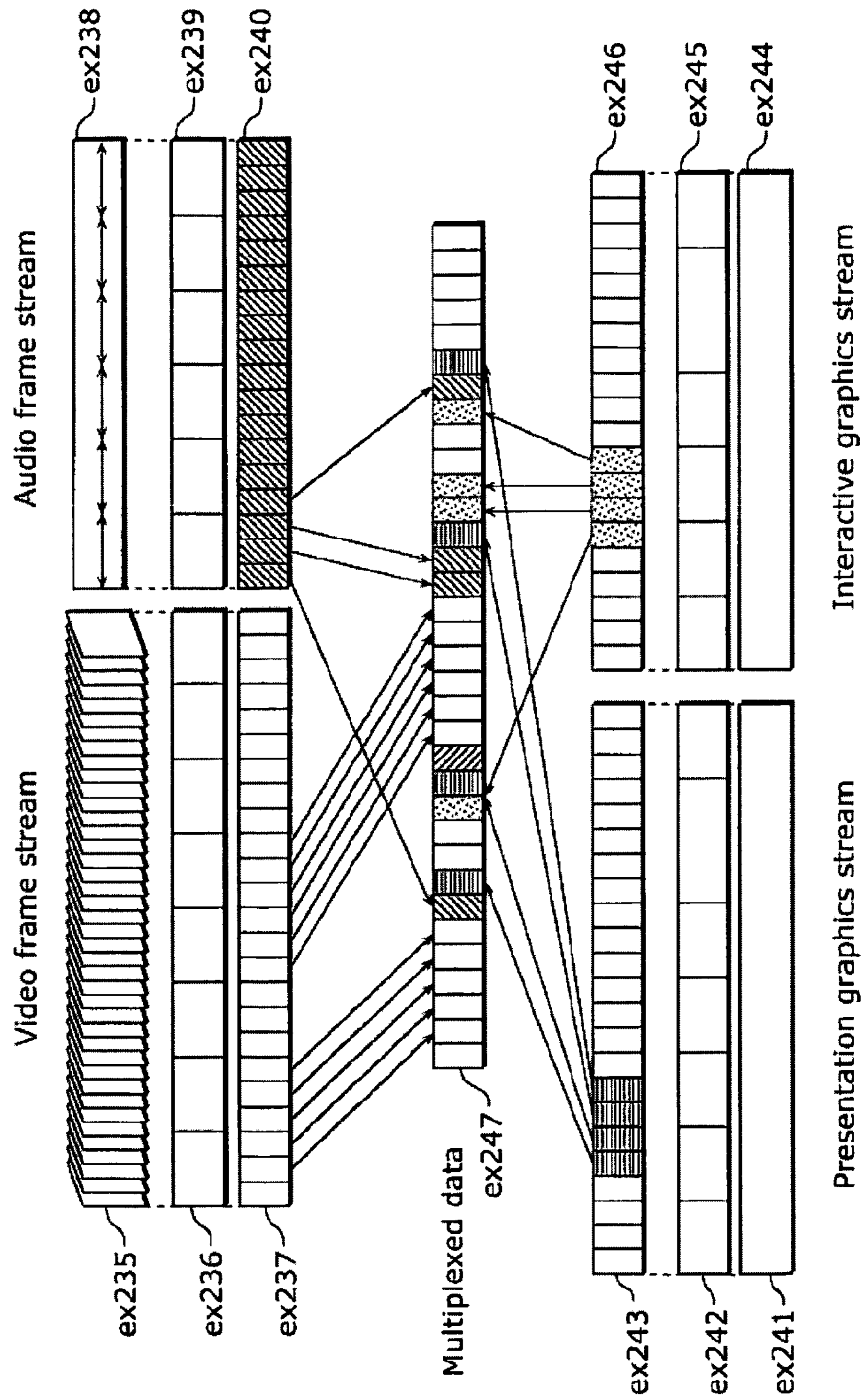
Video frame stream
Audio frame stream
ex235
ex236
ex237
ex238
ex239
ex240
Multiplexed data
ex247
ex243
ex242
ex241
ex246
ex245
ex244
Presentation graphics stream
Interactive graphics stream

Fig. 21

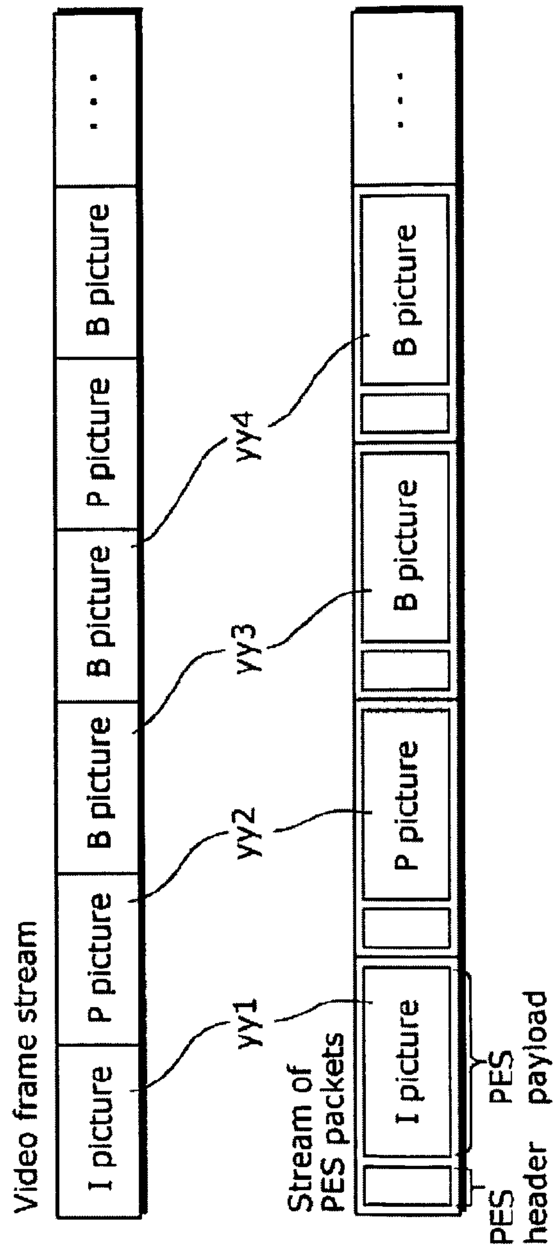
Video frame stream
I picture
P picture
B picture
B picture
P picture
B picture
...
yy1
yy2
yy3
yy4
Stream of PES packets
I picture
P picture
B picture
B picture
...
PES header
PES payload

Fig. 22

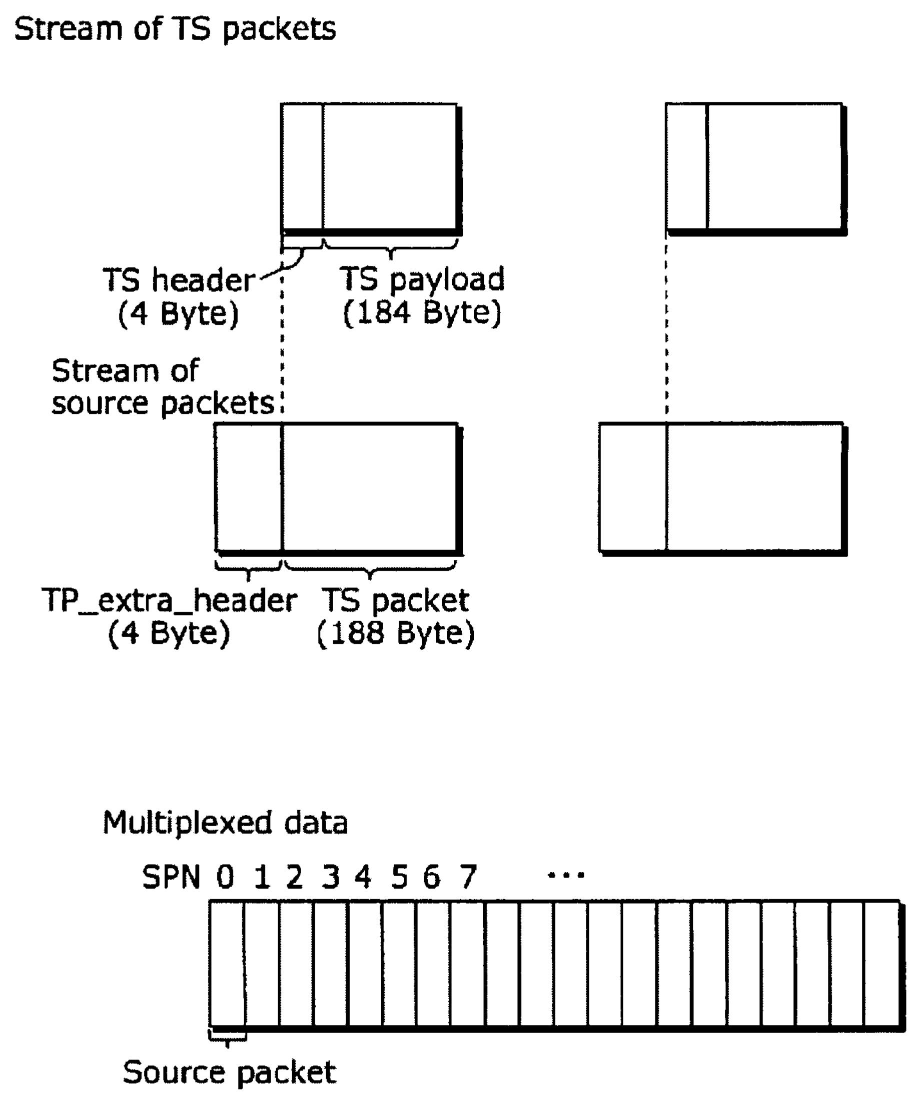
Stream of TS packets
TS header
(4 Byte)
TS payload
(184 Byte)
Stream of
source packets
TP_extra_header
(4 Byte)
TS packet
(188 Byte)
Multiplexed data
SPN 0 1 2 3 4 5 6 7 ...
Source packet

Fig. 23

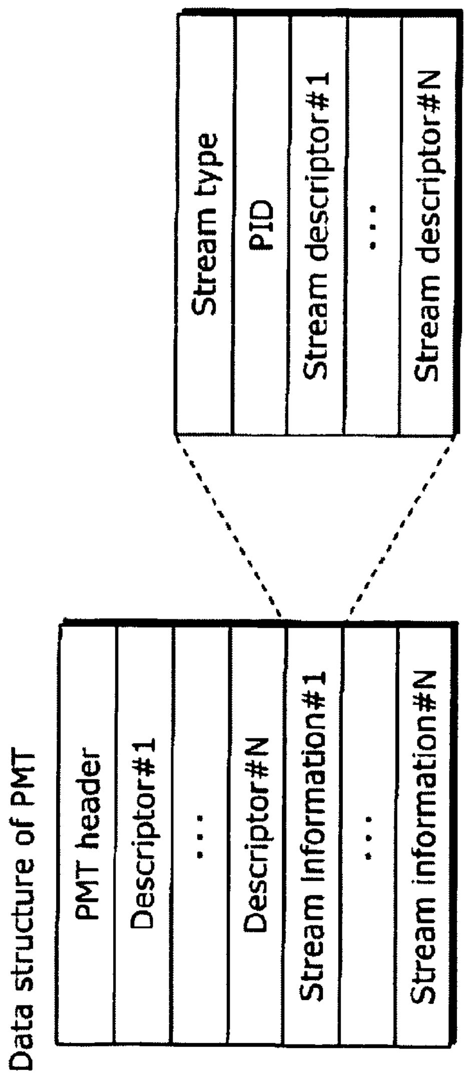
Data structure of PMT
PMT header
Descriptor#1
...
Descriptor#N
Stream Information#1
...
Stream information#N
Stream type
PID
Stream descriptor#1
...
Stream descriptor#N

Fig. 24

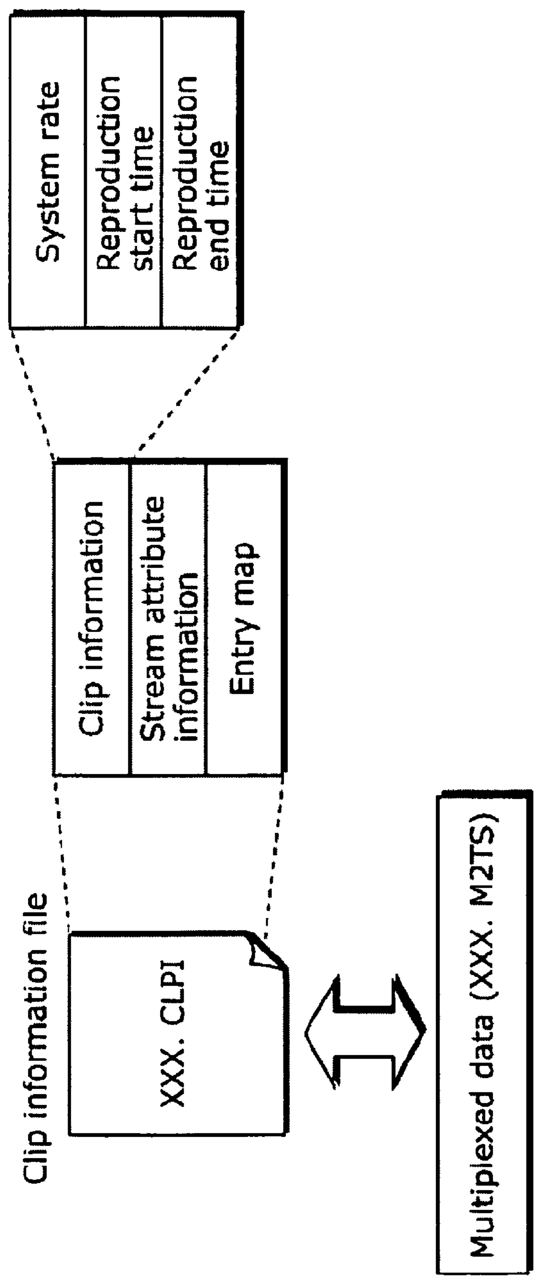

Clip information file
XXX. CLPI
Clip information
Stream attribute information
Entry map
System rate
Reproduction start time
Reproduction end time
Multiplexed data (XXX. M2TS)

Fig. 25

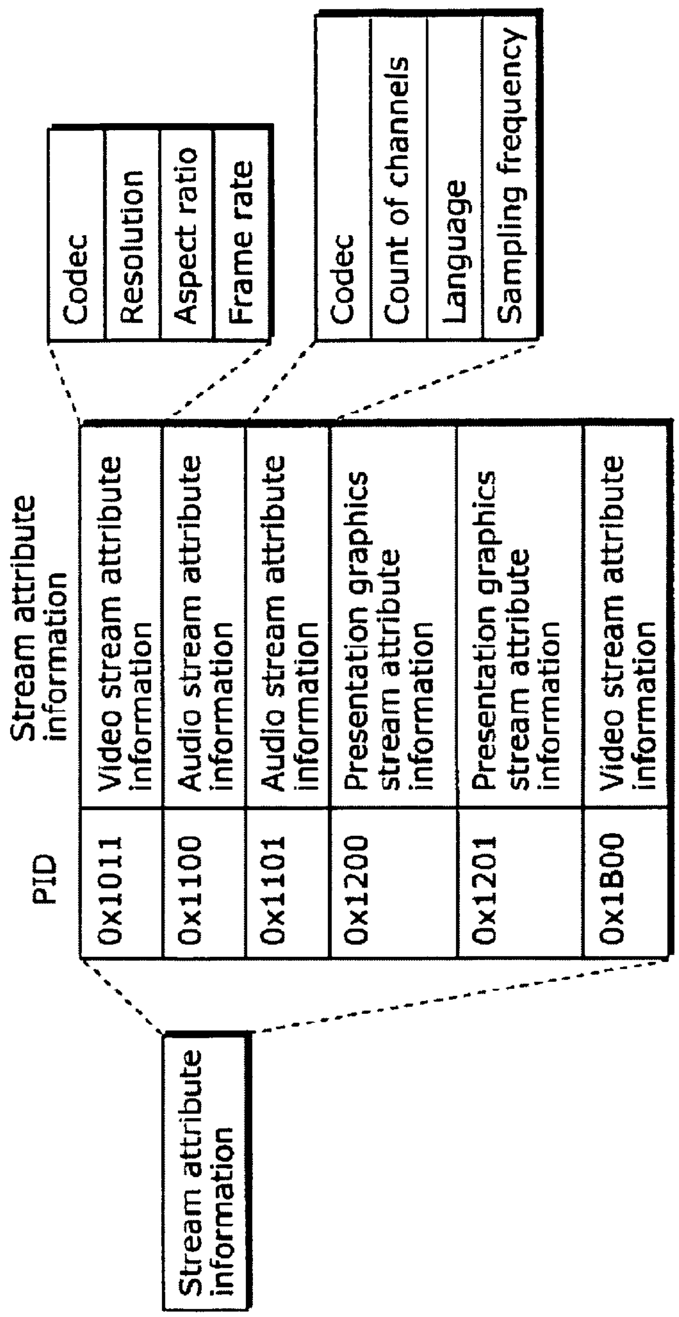
Stream attribute information
PID
Stream attribute information
0x1011
Video stream attribute information
0x1100
Audio stream attribute information
0x1101
Audio stream attribute information
0x1200
Presentation graphics stream attribute information
0x1201
Presentation graphics stream attribute information
0x1B00
Video stream attribute information
Codec
Resolution
Aspect ratio
Frame rate
Codec
Count of channels
Language
Sampling frequency

Fig. 26

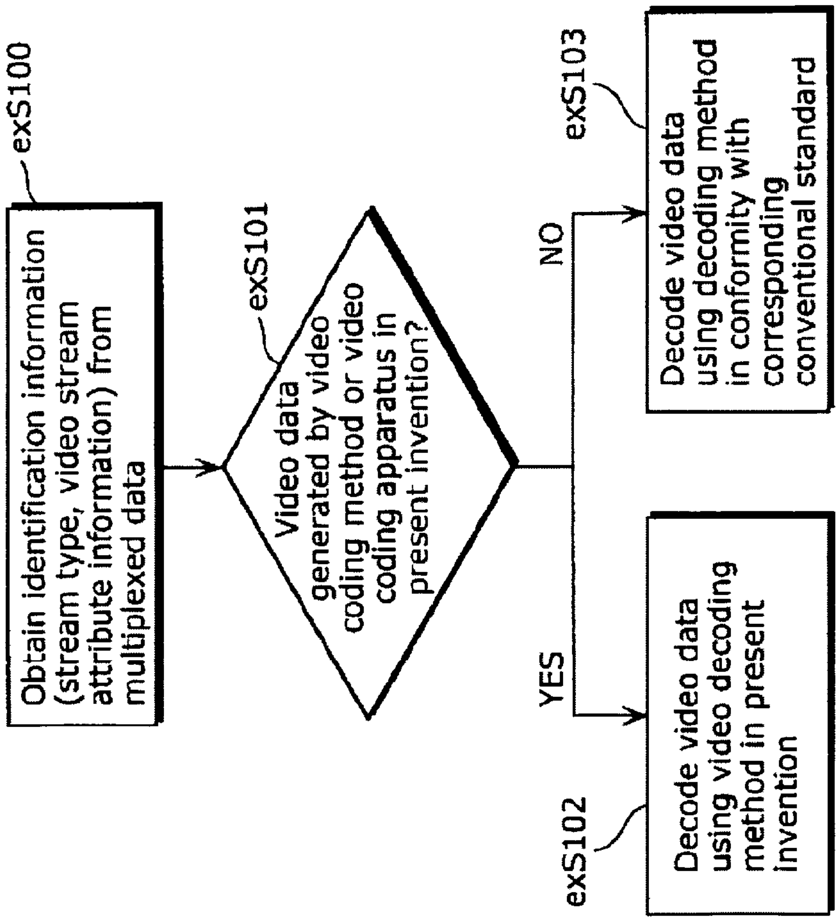
exS100
Obtain identification information (stream type, video stream attribute information) from multiplexed data
exS101
Video data generated by video coding method or video coding apparatus in present invention?
YES
NO
exS102
Decode video data using video decoding method in present invention
exS103
Decode video data using decoding method in conformity with corresponding conventional standard

Fig. 27

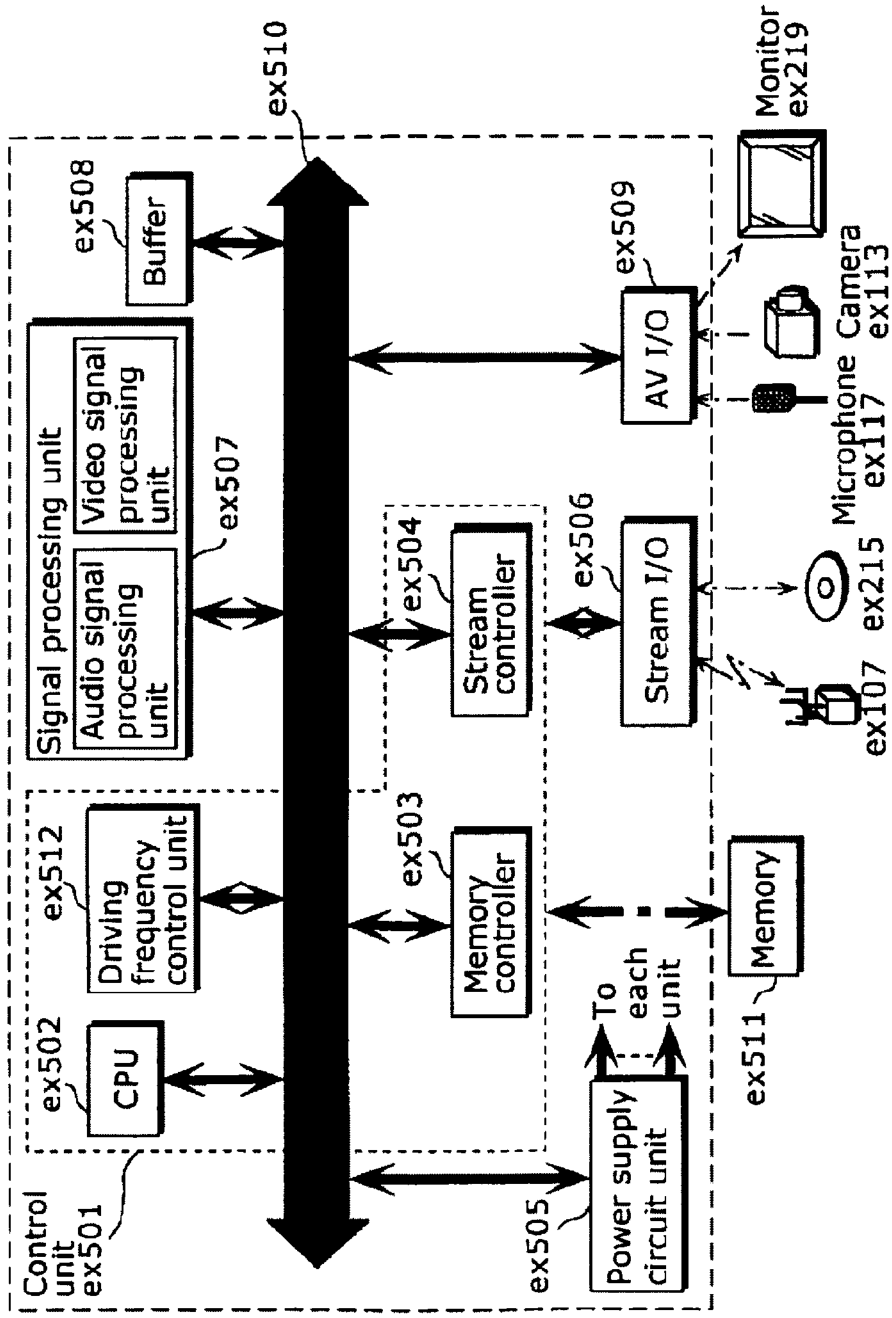
ex510
ex508
Buffer
Signal processing unit
Audio signal processing unit
Video signal processing unit
ex507
Control unit ex501
ex502
CPU
ex512
Driving frequency control unit
ex503
Memory controller
ex504
Stream controller
ex505
Power supply circuit unit
To each unit
ex506
Stream I/O
ex509
AV I/O
Memory
ex511
ex107
ex215
Microphone ex117
Camera ex113
Monitor ex219
ex500

Fig. 28

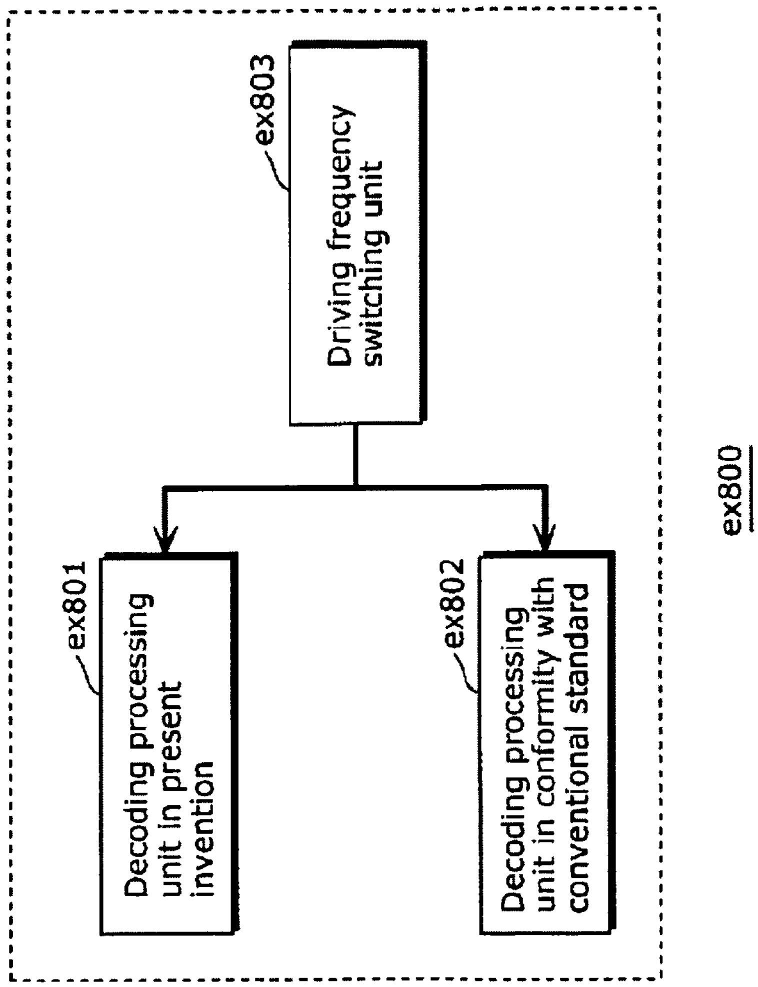
ex803
Driving frequency switching unit
ex801
Decoding processing unit in present invention
ex802
Decoding processing unit in conformity with conventional standard
ex800

Fig. 29

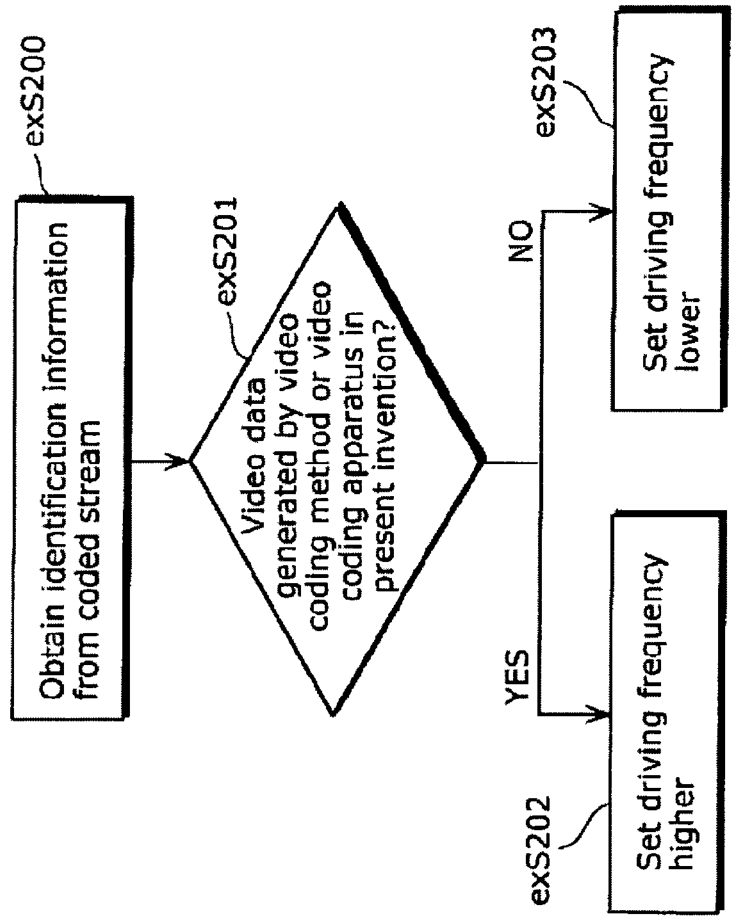
exS200
Obtain identification information from coded stream
exS201
Video data generated by video coding method or video coding apparatus in present invention?
YES
NO
exS202
Set driving frequency higher
exS203
Set driving frequency lower

Fig. 30

| Corresponding standard | Driving frequency |
| --- | --- |
| MPEG4. AVC | 500MHz |
| MPEG2 | 350MHz |
| ⋮ | ⋮ |

Fig. 31A

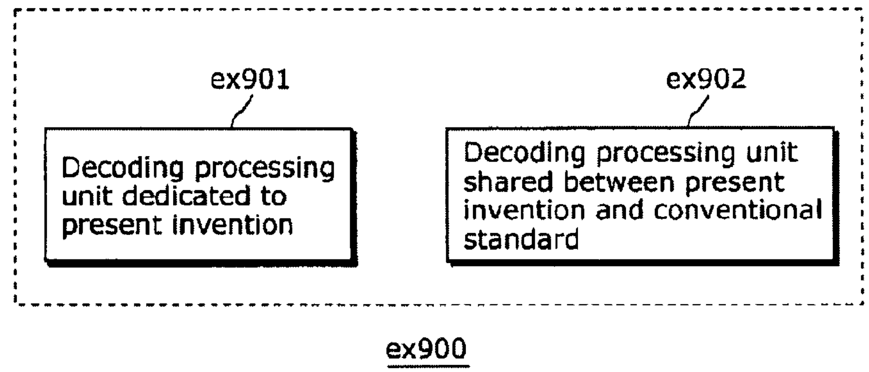


Fig. 31B

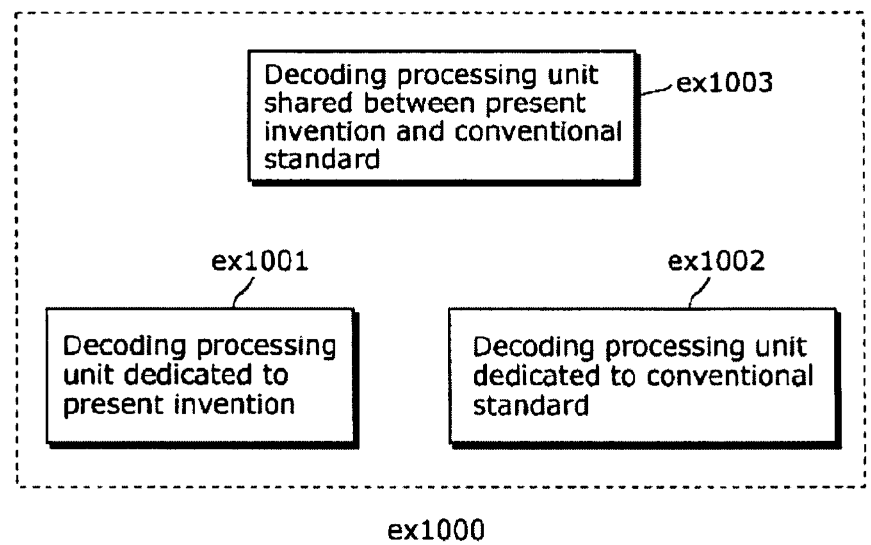

Fig. 32

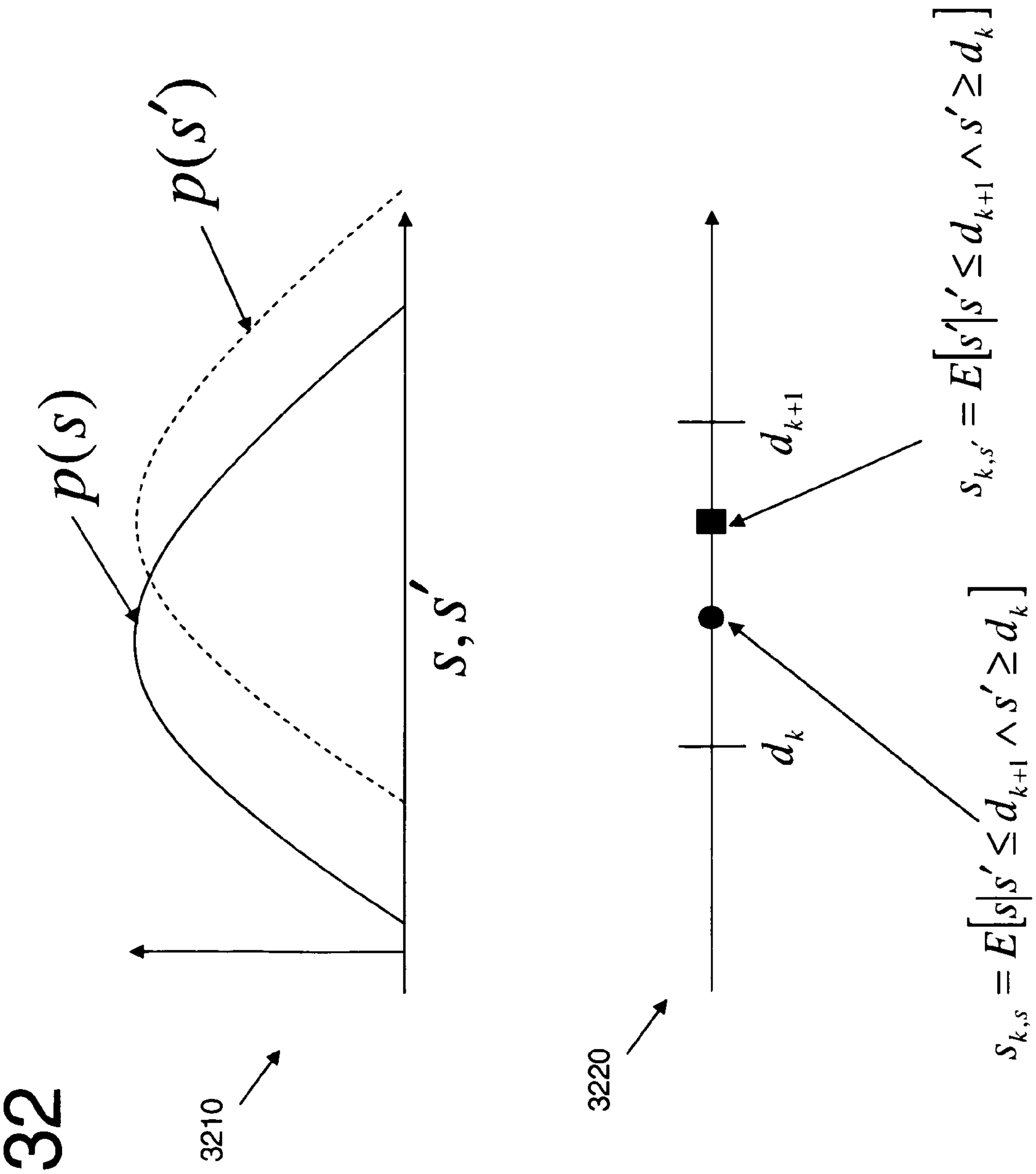

Fig. 33

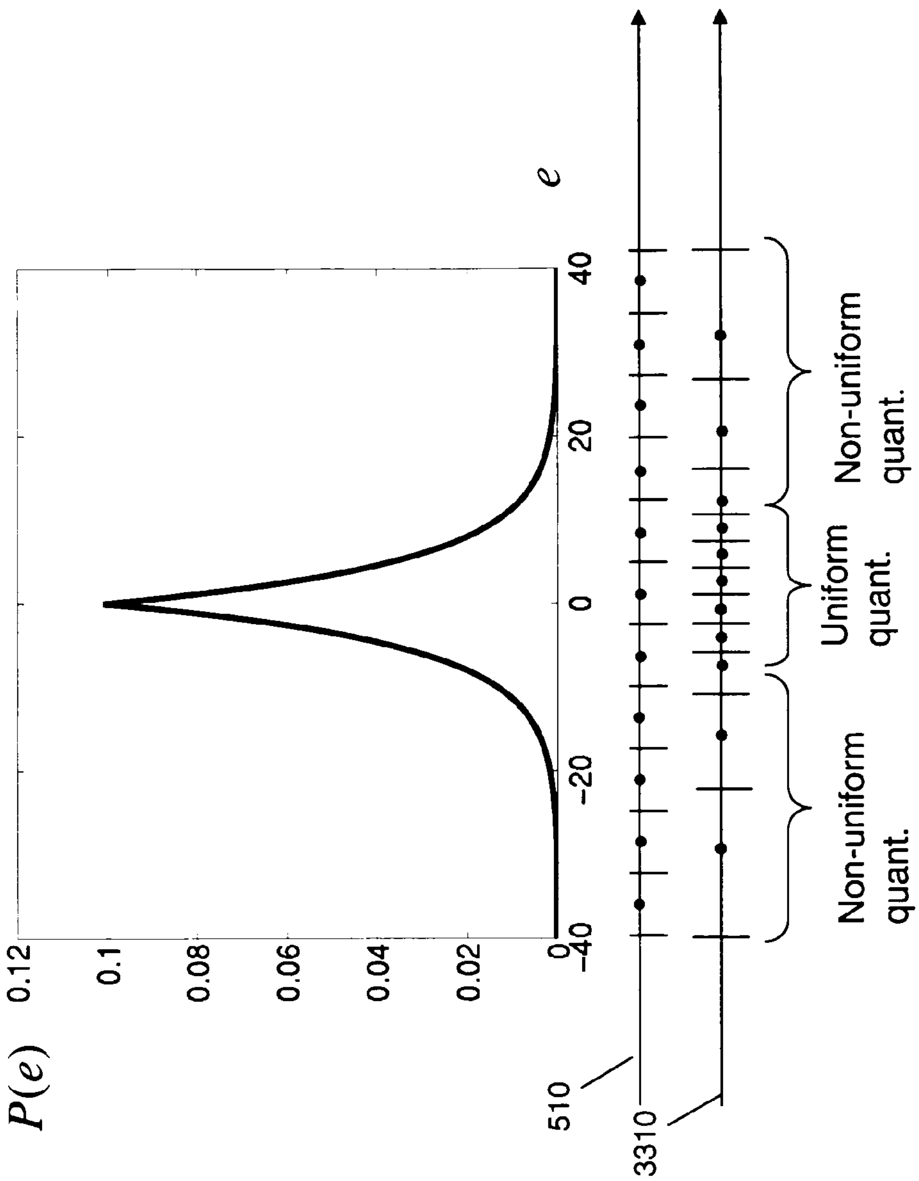

P(e)
0.12
0.1
0.08
0.06
0.04
0.02
0
-40
-20
0
20
40
e
510
3310
Uniform quant.
Non-uniform quant.
Non-uniform quant.

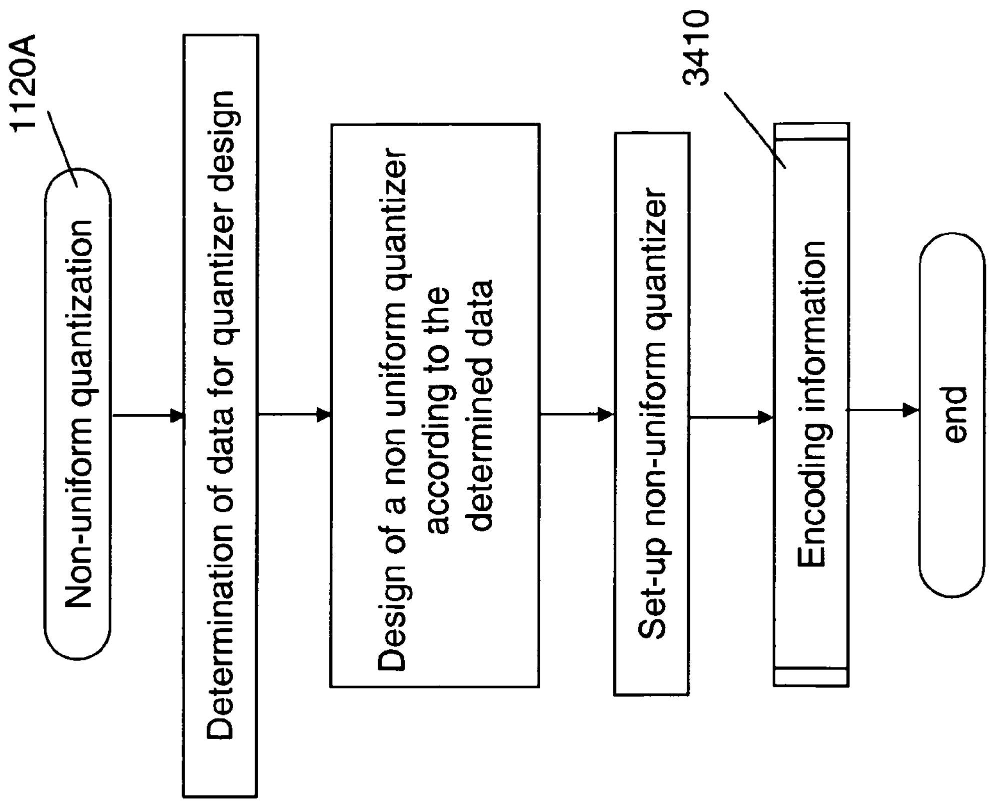
1120A
Non-uniform quantization
Determination of data for quantizer design
Design of a non uniform quantizer according to the determined data
Set-up non-uniform quantizer
3410
Encoding information
end

Fig. 34

Fig. 35A

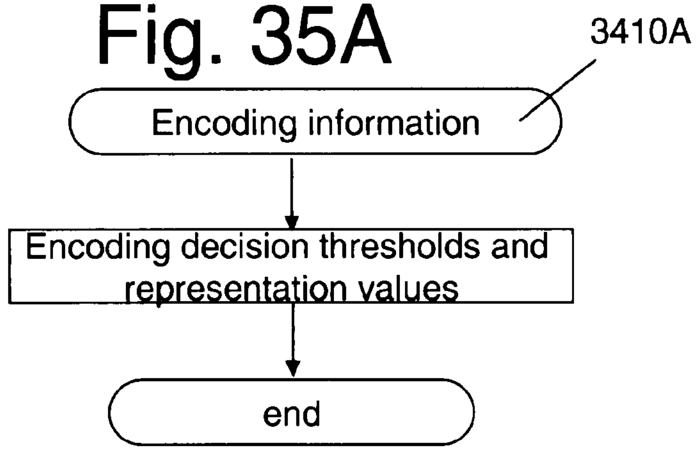


Fig. 35B

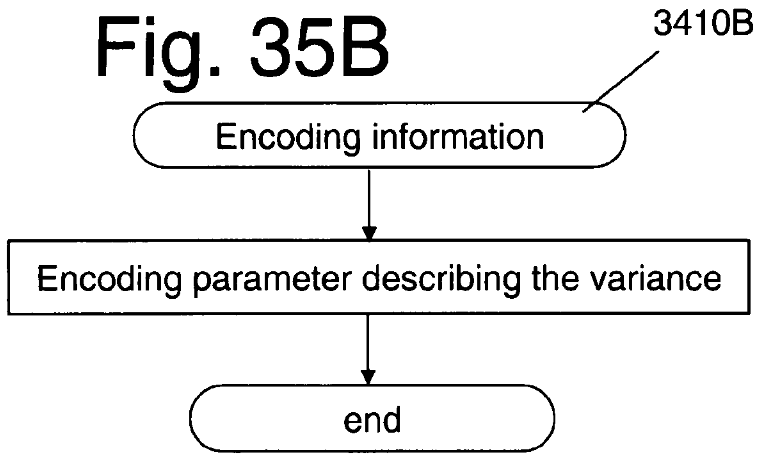


Fig. 35C

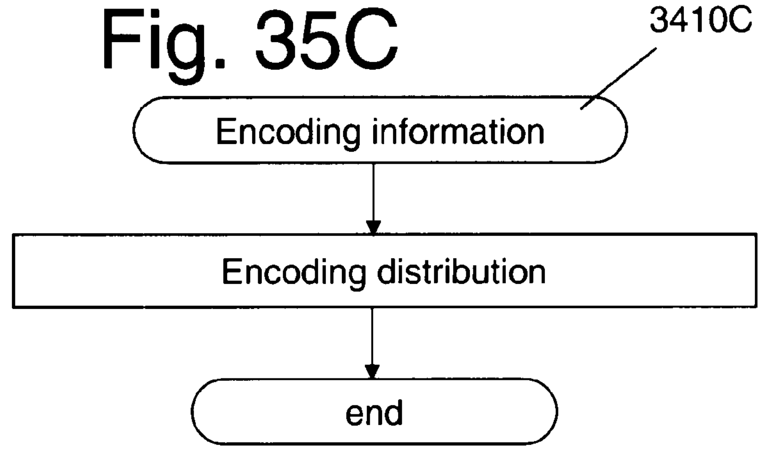


Fig. 35D

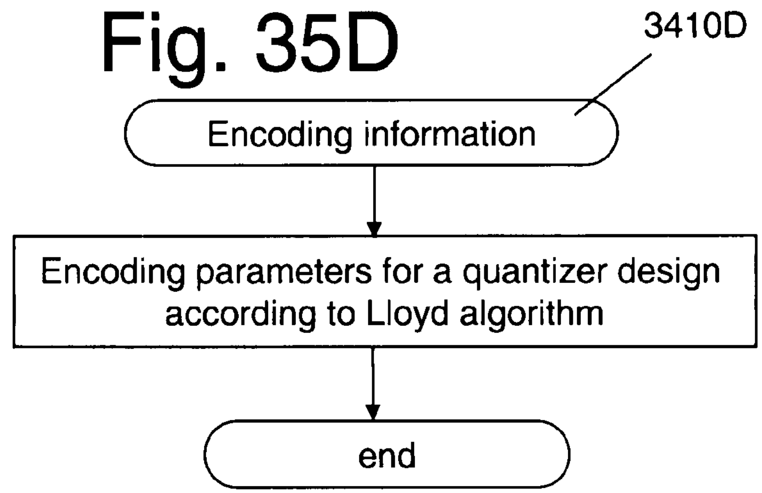

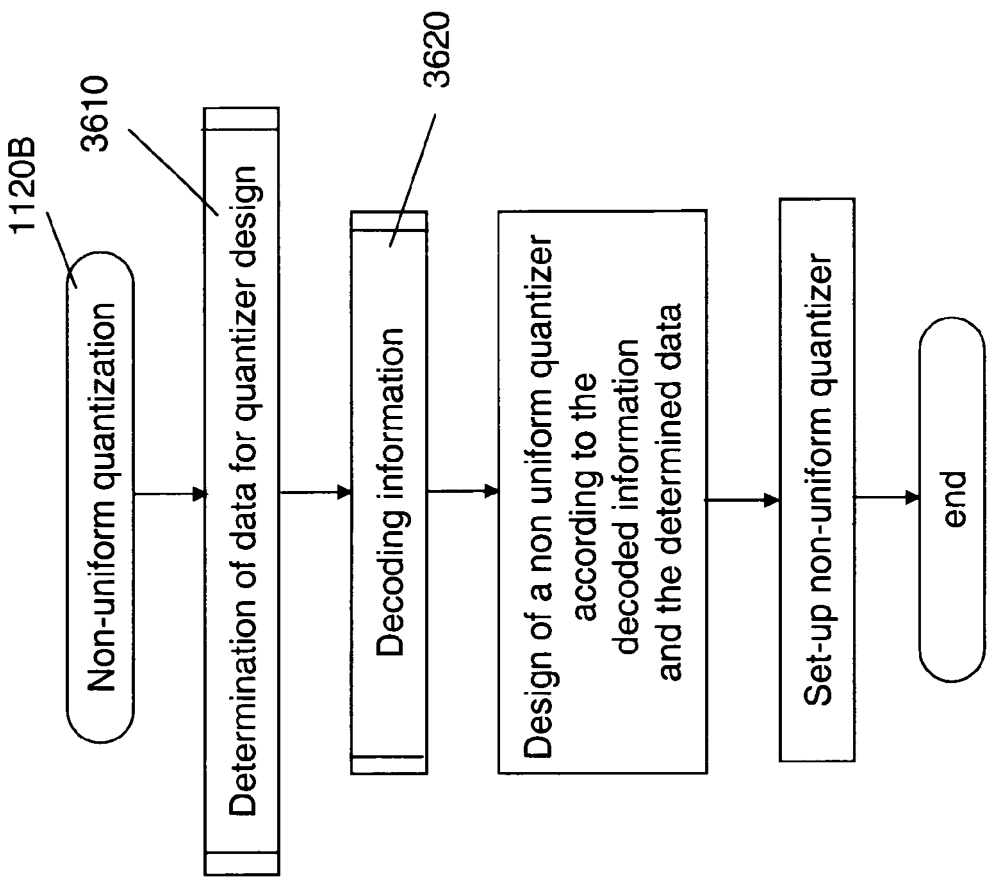

1120B
3610
3620
Non-uniform quantization
Determination of data for quantizer design
Decoding information
Design of a non uniform quantizer according to the decoded information and the determined data
Set-up non-uniform quantizer
end


Fig. 36

Fig. 37A

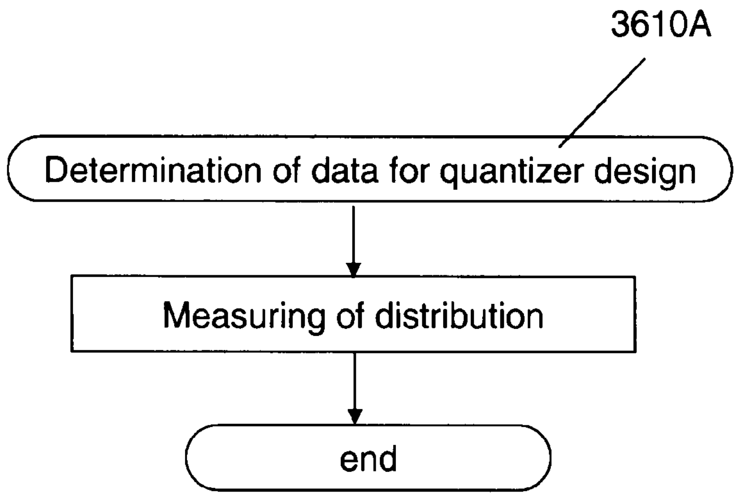


Fig. 37B

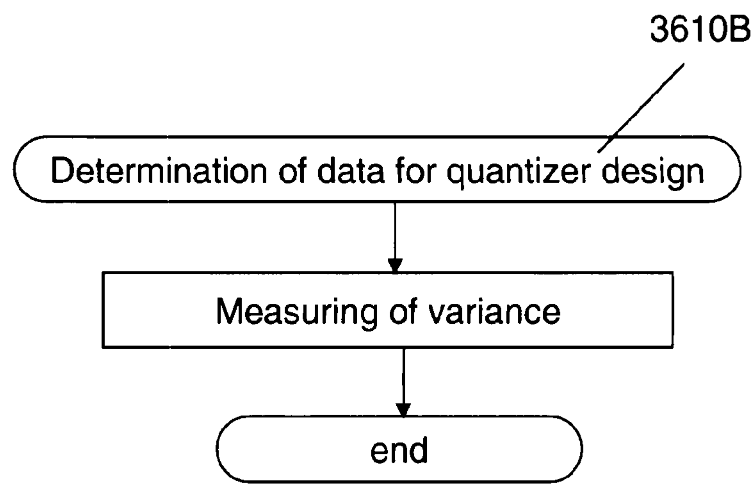

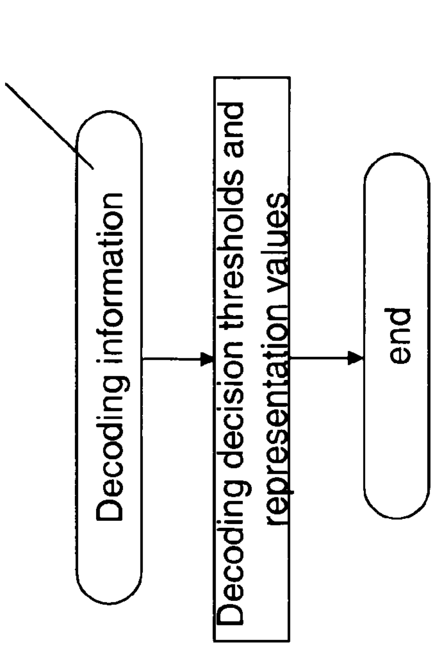


Fig. 38A

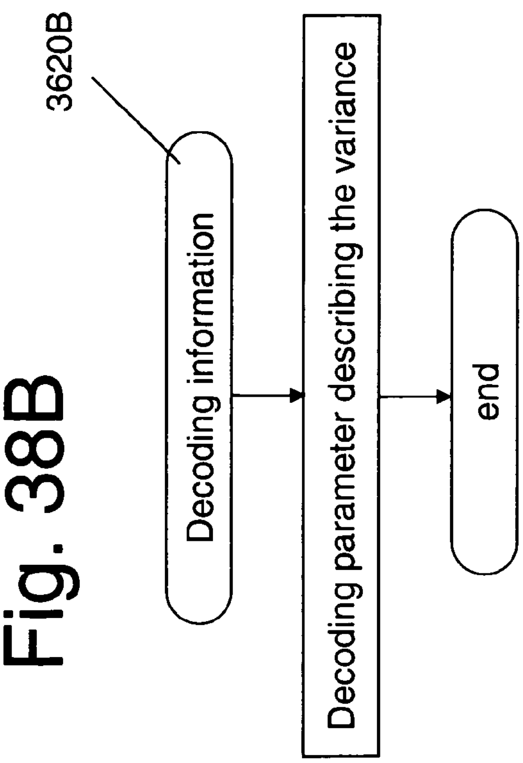


Fig. 38B

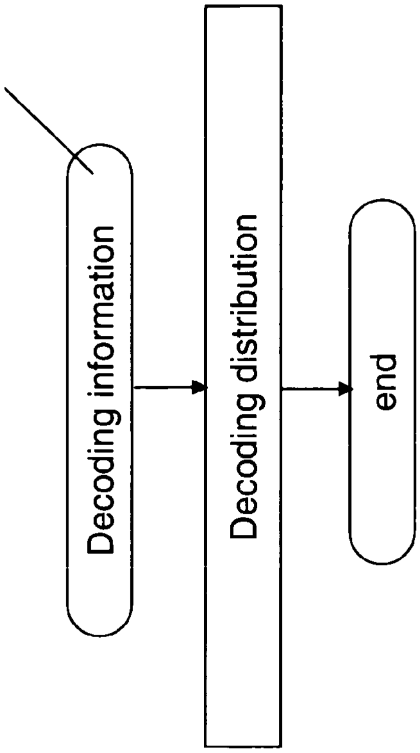


Fig. 38C

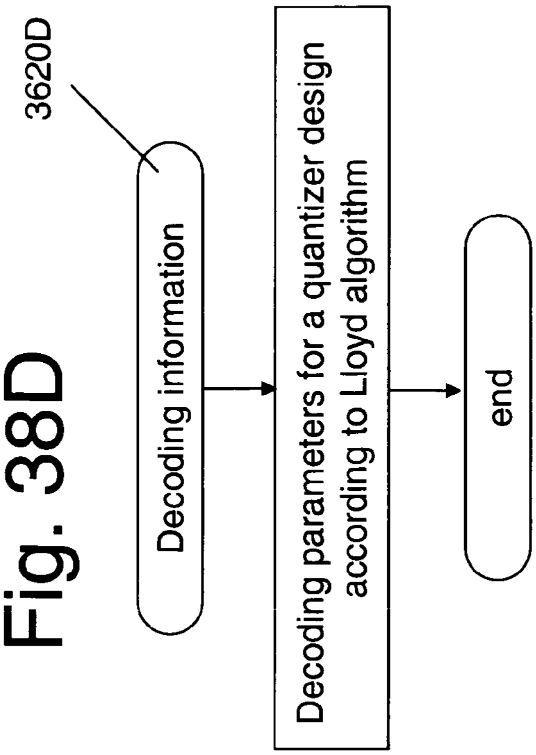


Fig. 38D

Europäisches Patentamt
European Patent Office
Office européen des brevets

# EUROPEAN SEARCH REPORT

Application Number
EP 10 00 3877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/188023 A1 (JU CHI-CHENG [TW]) 24 August 2006 (2006-08-24) | 1,3,6,9, 10,12, 15,18 | INV. H04N7/26 |
| Y | * paragraph [0041] - paragraph [0047] * * paragraph [0055] - paragraph [0056] * * figures 10,11 * ----- | 2,4,5,7, 8,11,13, 14,16,17 | |
| Y | WO 2007/099480 A2 (KONINKL PHILIPS ELECTRONICS NV [NL]; VAN DER VLEUTEN RENATUS J [NL]) 7 September 2007 (2007-09-07) * page 5, line 27 - line 32 * * page 10, line 6 - line 32 * * page 11, line 4 - line 19 * * page 12, line 3 - line 11 * * page 13, line 26 - page 14, line 3 * * figures 2-4 * ----- | 2,4,11, 13 | |
| Y | CHUJOH T ET AL: "Internal bit depth increase for coding efficiency" ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. VCEG-AE13, 14 January 2007 (2007-01-14), XP030003516 * section 2 * ----- | 5,14 | TECHNICAL FIELDS SEARCHED (IPC) H04N |
| Y,D | MAX J: "Quantizing for minimum distortion" IRE TRANSACTIONS ON INFORMATION THEORY, IEEE, USA, vol. 1, no. 1, 1 March 1960 (1960-03-01), pages 7-12, XP011217118 ISSN: 0096-1000 | 7,8,16, 17 | |
| A | * the whole document * ----- -/-- | 6,15 | |

The present search report has been drawn up for all claims

| Place of search | Date of completion of the search | Examiner |
|---|---|---|
| The Hague | 30 August 2010 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

Europäisches Patentamt
European Patent Office
Office européen des brevets

# EUROPEAN SEARCH REPORT

Application Number
EP 10 00 3877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D<br><br><br><br><br><br><br><br>A | LLOYD S P: "Least squares quantization in PCM"<br>IEEE TRANSACTIONS ON INFORMATION THEORY, IEEE, US LNKD- DOI:10.1109/TIT.1982.1056489,<br>vol. 28, no. 2, 1 March 1982 (1982-03-01), pages 129-137, XP008083648<br>ISSN: 0018-9448<br>* sections 2 and 3 *<br>----- | 7,8,16, 17<br><br><br><br><br><br><br><br>6,15 | |
| A | NARROSCHKE M ET AL: "Adaptive pred error coding in spat & freq domain"<br>ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. VCEG-AD07,<br>29 October 2006 (2006-10-29), XP030003498<br>* section 3 *<br>* figure 2 *<br>----- | 8,17 | |
| X | TAKIZAWA T ET AL: "High performance and cost effective memory architecture for an HDTV decoder LSI"<br>ICASSP, IEEE INTERNATIONAL CONFERENCE ON ACOUSTICS, SPEECH AND SIGNAL PROCESSING - PROCEEDINGS 1999 IEEE,,<br>vol. 4, 15 March 1999 (1999-03-15), pages 1981-1984, XP002559585<br>ISBN: 978-0-7803-5041-0<br>* section 3 *<br>----- | 1,3,9, 10,12,18 | TECHNICAL FIELDS SEARCHED (IPC) |
| X | EP 0 782 345 A2 (THOMSON CONSUMER ELECTRONICS [US]) 2 July 1997 (1997-07-02)<br>* page 3, line 5 - line 14 *<br>* page 5, line 42 - line 58 *<br>----- | 1,3,9, 10,12,18 | |
| A | EP 2 141 927 A1 (PANASONIC CORP [JP])<br>6 January 2010 (2010-01-06)<br>* the whole document *<br>----- | 1-18 | |

The present search report has been drawn up for all claims

1

| Place of search | Date of completion of the search | Examiner |
|---|---|---|
| The Hague | 30 August 2010 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 00 3877

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2010

| Patent document cited in search report | Publication date | Patent family member(s) | Publication date |
|---|---|---|---|
| US 2006188023 A1 | 24-08-2006 | CN 1825976 A | 30-08-2006 |
| WO 2007099480 A2 | 07-09-2007 | CN 101395924 A | 25-03-2009 |
| | | EP 1994756 A2 | 26-11-2008 |
| | | JP 2009528751 T | 06-08-2009 |
| | | US 2009034634 A1 | 05-02-2009 |
| EP 0782345 A2 | 02-07-1997 | CN 1160253 A | 24-09-1997 |
| | | DE 69626483 D1 | 10-04-2003 |
| | | DE 69626483 T2 | 26-02-2004 |
| | | HK 1001634 A1 | 11-09-2003 |
| | | JP 4083832 B2 | 30-04-2008 |
| | | JP 9214981 A | 15-08-1997 |
| | | SG 99837 A1 | 27-11-2003 |
| | | US 5847762 A | 08-12-1998 |
| EP 2141927 A1 | 06-01-2010 | CN 101796847 A | 04-08-2010 |
| | | WO 2010001614 A1 | 07-01-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2141927 A
- EP 08020651 A


### Non-patent literature cited in the description


- **MAX.** Quantizing for minimum distortion. *IRE Trans. on Information Theory,* March 1960, 7-12
- **LLOYD.** Least squares quantization in PCM. *Institute of Mathematical Statistics Meeting,* September 1957
- *IEEE Trans. on Information Theory,* March 1982, 129-136
- **LINDE, Y. ; BUZO, A. ; GRAY, R.** An Algorithm for Vector Quantizer Design. *IEEE Transaction on Communications,* 1980, vol. 28 (1), 84-94